# EUROPEAN PATENT SPECIFICATION

(11) **EP 4 009 810 B1**
(45) Date of publication and mention of the grant of the patent: **21.06.2023**
(21) Application number: 20792725.2
(22) Date of filing: 30.09.2020
(51) Int. Cl.: A23L 33/14, A23L 33/16, A23L 33/185

(54) **METHODS AND COMPOSITIONS FOR IMPROVED TASTE QUALITY**
VERFAHREN UND ZUSAMMENSETZUNGEN ZUR VERBESSERUNG DER GESCHMACKSQUALITÄT
PROCÉDÉS ET COMPOSITIONS POUR UNE QUALITÉ GUSTATIVE AMÉLIORÉE

(30) Priority: 30.09.2019 US 201962908543 P; 16.10.2019 US 201962916165 P
(43) Date of publication of application: 15.06.2022
(73) Proprietor: Almendra Pte. Ltd, Singapore 238877 (SG)
(72) Inventor: DUBOIS, Grant E., Roswell, Georgia 30076 (US)
(74) Representative: Abel & Imray LLP
(86) International application number: PCT/IB2020/059181
(87) International publication number: WO 2021/064616

(56) References cited:
- WO-A1-2010/038911
- WO-A2-2007/081442
- US-A1- 2008 292 765
- US-A1- 2017 143 022

## Description

-

### BACKGROUND

Natural sugars, such as sucrose, fructose and glucose, are utilized in the food and beverage industries to provide a pleasant taste to foods and beverages. In addition, natural sugars are commonly used in pharmaceuticals, nutraceuticals, and oral hygienic/cosmetic products to similarly impart a pleasant taste. Sucrose, in particular, imparts a taste that is highly preferred by many consumers. Although sucrose provides superior sweetness characteristics, it is caloric. High-potency ("HP") sweeteners have been introduced to address consumer demand for products having a pleasant taste, while at the same time meet increasing demand for healthier, reduced calorie products. Moreover, the demand for healthier, reduced calorie products is being driven by public policy and regulatory mandates.

However, HP sweeteners differ significantly from natural caloric sugars in ways that frustrate consumers and limit market penetration of products containing many HP sweeteners. On a taste basis, HP sweeteners exhibit temporal profiles, maximal responses, flavor profiles, mouthfeels, and adaptation behaviors that differ from sugar. Commonly, HP sweeteners exhibit delayed sweetness onsets, lingering sweet aftertastes, bitter off tastes, astringent tastes, cooling and/or licorice-like tastes. HP sweeteners may be synthetic chemicals, natural substances, physically or chemically modified natural substances, and/or reaction products obtained from synthetic and/or natural substances. The desire for natural HP sweeteners with favorable taste characteristics remains high.

One class of HP sweeteners are the steviol glycosides. However, utilization has been limited to date by certain undesirable taste properties, including licorice and bitter off tastes, astringency and lingering sweet aftertaste. These undesirable taste properties tend to become more prominent with increased concentration. For example, these undesirable taste attributes are particularly prominent in carbonated beverages, where full replacement of sugar may involve concentrations of steviol glycosides that exceed 500 mg/L.

Importantly, although there exist certain taste modulators that have addressed some or many of the undesirable taste properties of HP sweeteners, the use of taste modulators has added significant cost to the use of HP sweeteners. For example, although a blend consisting of a steviol glycoside, rebaudioside A, with meso-erythritol can ameliorate the undesirable taste properties of rebaudioside A, it also results in a cost increase of about 2- to 4-fold for the good-tasting blends compared to rebaudioside A alone. The cost increase is even more significant when compared to the costs associated with sweeteners such as aspartame- or aspartame/acesulfame-sweetened products. WO2010/038911 describes compositions comprising Stevia sweetening components.

Despite advances in compositions and methods for sweetening foods, beverages, and other products, there is a scarcity of HP sweeteners that have both the taste properties of sucrose, fructose and glucose and suitably low cost for widespread use. These needs and other needs are satisfied by the present disclosure.

### SUMMARY

In accordance with a first aspect of the present invention, there is provided a composition according to claim 1, the composition comprising an umami agent and a taste modulator composition. The taste modulator component improves key properties associated with many umami agents, including bitter off-taste and mouthfeel characteristics. In further aspects, the disclosed taste modulator composition can further comprise an additional CaSR modulator. In accordance with a second aspect of the invention, there is provided a product according to claim 11. A further aspect of the invention provides a method of improving mouthfeel according to claim 14.

-

### BRIEF DESCRIPTION OF THE DRAWINGS

Many aspects of the present disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
**FIG. 1** shows chemical structures for representative stevia-derived compounds as indicated (Rebaudioside A, Rebaudioside B, and Rebaudioside C).
**FIG. 2** shows chemical structures for representative stevia-derived compounds as indicated (Rebaudioside D, Rebaudioside E, and Rebaudioside F).
**FIG. 3** shows chemical structures for representative stevia-derived compounds as indicated (Rebaudioside M and Rebaudioside N).

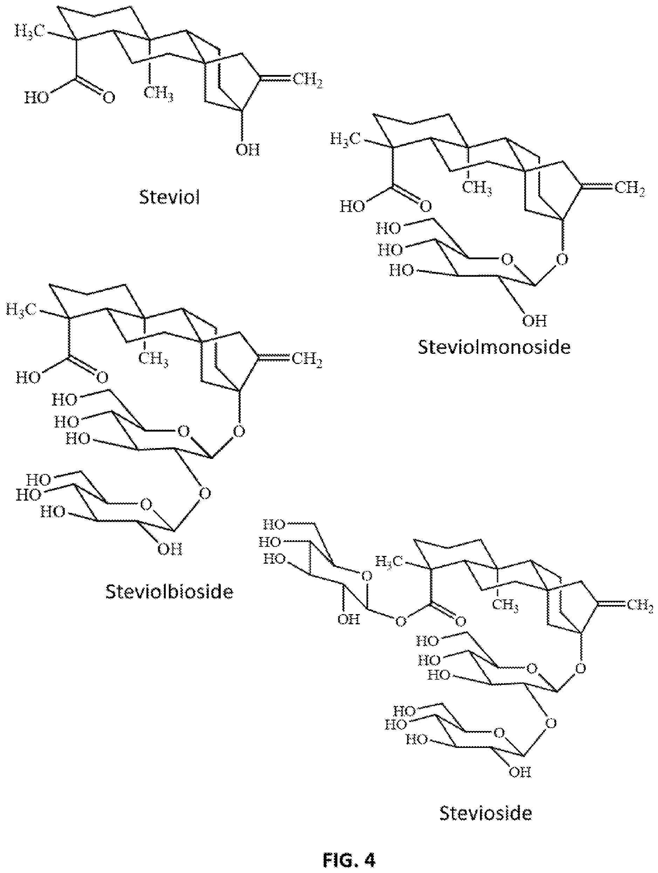

**FIG. 4** shows chemical structures for representative stevia-derived compounds as indicated (Steviol, Steviolmonoside, Steviolbioside, and Stevioside).

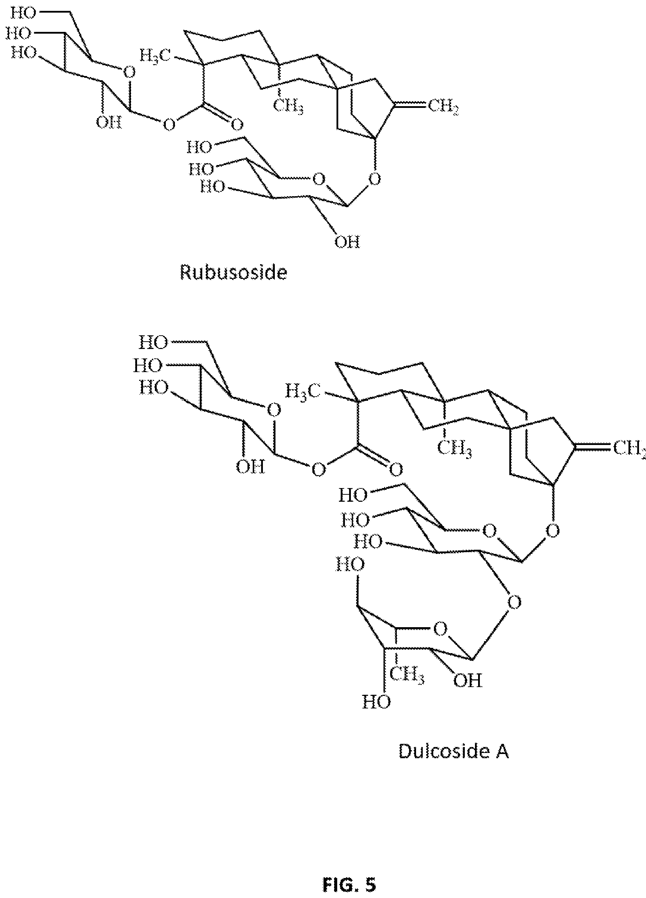

**FIG. 5** shows chemical structures for representative stevia-derived compounds as indicated (Rubusoside and Dulcoside A).
**FIG. 6** shows representative data for the effect of a disclosed taste modulator composition on an umami taste using MSG as the umami agent.
**FIG. 7** shows representative data for the effect of a disclosed taste modulator composition on an umami taste using MSG+IMP as the umami agents.
**FIG. 8** shows representative data for the effect of a disclosed taste modulator composition on an umami taste using MSG as the umami agent.
**FIG. 9** shows representative data for the effect of a disclosed taste modulator composition on an umami taste using a savory food seasoning as the umami agent.
**FIG. 10** shows representative data for the effect of a disclosed taste modulator composition on an umami taste using a savory food seasoning as the umami agent.

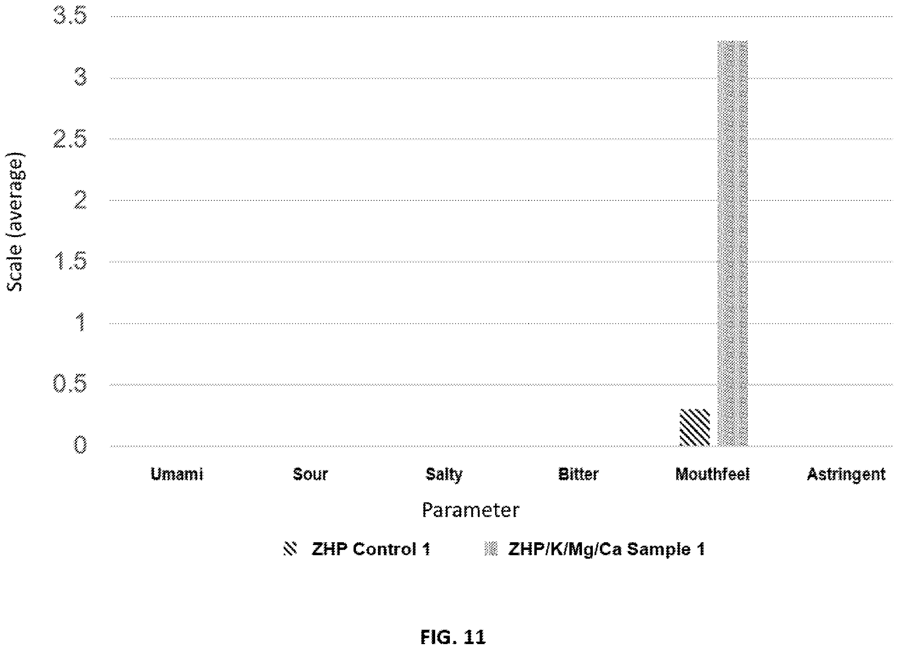

**FIG. 11** shows representative data for the effect of a disclosed taste modulator composition on sensory qualities with a hydrolyzed vegetable protein preparation.
**FIG. 12** shows representative data for the effect of a disclosed taste modulator composition on sensory qualities, e.g., bitterness, with a stevia sweetener preparation.

Additional advantages of the disclosure will be set forth in part in the description which follows, and in part will be obvious from the description, or can be learned by practice of the disclosure. The advantages of the disclosure will be realized and attained by means of the elements and combinations particularly pointed out in the appended claims. It is to be understood that both the foregoing general description and the following detailed description are exemplary and explanatory only and are not restrictive of the disclosure, as claimed.

### DETAILED DESCRIPTION

Many modifications and other aspects disclosed herein will come to mind to one skilled in the art to which the disclosed compositions and methods pertain having the benefit of the teachings presented in the foregoing descriptions and the associated drawings. Therefore, it is to be understood that the disclosure is not to be limited to the specific aspects disclosed and that modifications and other aspects are intended to be included within the scope of the appended claims. The skilled artisan will recognize many variants and adaptations of the aspects described herein. These variants and adaptations are intended to be included in the teachings of this disclosure and to be encompassed by the claims herein.

Although specific terms are employed herein, they are used in a generic and descriptive sense only and not for purposes of limitation.

-

Any recited method can be carried out in the order of events recited or in any other order that is logically possible. That is, unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

The publications discussed herein are provided solely for their disclosure prior to the filing date of the present application. Nothing herein is to be construed as an admission that the present disclosure is not entitled to antedate such publication by virtue of prior disclosure. Further, the dates of publication provided herein can be different from the actual publication dates, which can require independent confirmation.

While aspects of the present disclosure can be described and claimed in a particular statutory class, such as the system statutory class, this is for convenience only and one of skill in the art will understand that each aspect of the present disclosure can be described and claimed in any statutory class.

It is also to be understood that the terminology used herein is for the purpose of describing particular aspects only and is not intended to be limiting. Unless defined otherwise, all technical and scientific terms used herein have the same meaning as commonly understood by one of ordinary skill in the art to which the disclosed compositions and methods belong. It will be further understood that terms, such as those defined in commonly used dictionaries, should be interpreted as having a meaning that is consistent with their meaning in the context of the specification and relevant art and should not be interpreted in an idealized or overly formal sense unless expressly defined herein.

Prior to describing the various aspects of the present disclosure, the following definitions are provided and should be used unless otherwise indicated. Additional terms may be defined elsewhere in the present disclosure.

### Definitions

As used herein, "comprising" is to be interpreted as specifying the presence of the stated features, integers, steps, or components as referred to, but does not preclude the presence or addition of one or more features, integers, steps, or components, or groups thereof. Additionally, the term "comprising" is intended to include examples and aspects encompassed by the terms "consisting essentially of" and "consisting of." Similarly, the term "consisting essentially of" is intended to include examples encompassed by the term "consisting of."

As used in the specification and the appended claims, the singular forms "a," "an" and "the" include plural referents unless the context clearly dictates otherwise. Thus, for example, reference to "HP sweetener," "a sweetening agent," "a cation," or "a taste modulator," including, but not limited to, two or more such HP sweeteners, sweetening agents, cations, or taste modulators, including combinations of sweetening agents, cations, and taste modulators, and the like.

It should be noted that ratios, concentrations, amounts, and other numerical data can be expressed herein in a range format. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. Ranges can be expressed herein as from "about" one particular value, and/or to "about" another particular value. Similarly, when values are expressed as approximations, by use of the antecedent "about," it will be understood that the particular value forms a further aspect. For example, if the value "about 10" is disclosed, then "10" is also disclosed.

When a range is expressed, a further aspect includes from the one particular value and/or to the other particular value. For example, where the stated range includes one or both of the limits, ranges excluding either or both of those included limits are also included in the disclosure, e.g. the phrase "x to y" includes the range from 'x' to 'y' as well as the range greater than 'x' and less than 'y'. The range can also be expressed as an upper limit, e.g. 'about x, y, z, or less' and should be interpreted to include the specific ranges of 'about x', 'about y', and 'about z' as well as the ranges of 'less than x', less than y', and 'less than z'. Likewise, the phrase 'about x, y, z, or greater' should be interpreted to include the specific ranges of 'about x', 'about y', and 'about z' as well as the ranges of 'greater than x', greater than y', and 'greater than z'. In addition, the phrase "about `x' to 'y'", where 'x' and 'y' are numerical values, includes "about `x' to about 'y'".

It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a numerical range of "about 0.1% to 5%" should be interpreted to include not only the explicitly recited values of about 0.1% to about 5%, but also include individual values (e.g., about 1%, about 2%, about 3%, and about 4%) and the sub-ranges (e.g., about 0.5% to about 1.1%; about 5% to about 2.4%; about 0.5% to about 3.2%, and about 0.5% to about 4.4%, and other possible sub-ranges) within the indicated range.

As used herein, the terms "about," "approximate," "at or about," and "substantially" mean that the amount or value in question can be the exact value or a value that provides equivalent results or effects as recited in the claims or taught herein. That is, it is understood that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art such that equivalent results or effects are obtained. In some circumstances, the value that provides equivalent results or effects cannot be reasonably determined. In such cases, it is generally understood, as used herein, that "about" and "at or about" mean the nominal value indicated ±10% variation unless otherwise indicated or inferred. In general, an amount, size, formulation, parameter or other quantity or characteristic is "about," "approximate," or "at or about" whether or not expressly stated to be such. It is understood that where "about," "approximate," or "at or about" is used before a quantitative value, the parameter also includes the specific quantitative value itself, unless specifically stated otherwise.

As used herein, "stevia sweetener," "stevia-derived sweetener," and "*Stevia* rebaudiana-derived sweetener" can be used interchangeably. It is understood that a stevia sweetener can refer to an extract, concentrate, juice, or other preparation obtained from leaves and/or other plant structures (e.g., fruits, seeds, stems or fleshy plant parts) of a plant in the genus *Stevia,* in some cases from the *Stevia rebaudiana* plant; or a mixture of one or more purified or partially purified component or compound from a plant in the genus *Stevia,* in some cases from the *Stevia rebaudiana* plant, such as steviol glycosides, stevioside, rebaudioside A, rebaudioside B, rebaudioside C, rebaudioside F, rebaudioside F, dulcoside A, steviolbioside, rubusoside, as well as other steviol glycosides found in a plant in the genus *Stevia,* in some cases from the *Stevia rebaudiana* plant, and mixtures thereof; glucosylated steviol glucosides; and combinations, mixtures, and kits comprising.

As used herein, the term "steviol glycoside(s)" refers to glycosides of steviol, including, but not limited to, naturally occurring steviol glycosides, e.g. Rebaudioside A, Rebaudioside B, Rebaudioside C, Rebaudioside D, Rebaudioside E, Rebaudioside F, Rebaudioside G, Rebaudioside H, Rebaudioside I, Rebaudioside J, Rebaudioside K, Rebaudioside L, Rebaudioside M (also referred to as Rebaudioside X), Rebaudioside N, Rebaudioside O, Stevioside, Steviolbioside, Dulcoside A, Rubusoside, etc., or synthetic steviol glycosides, e.g. enzymatically glucosylated steviol glycosides and combinations thereof.

As used herein, "monk fruit sweetener," "monk fruit-derived sweetener," "luo han guo sweetener," luo han guo-derived sweetener," and "*Siraitia grosvenorii*-derived sweetener" can be used interchangeably. It is understood that a monk fruit sweetener can refer to an extract, concentrate, juice, or other preparation obtained from leaves and/or other plant structures (e.g., fruits, seeds, stems or fleshy plant parts) of a plant in the genus *Siraitia,* in some cases from the *Siraitia grosvenorii* plant; or a mixture of one or more purified or partially purified component or compound from a plant in the genus *Siraitia,* in some cases from the *Siraitia grosvenorii* plant, such as mogroside I, mogroside II, mogroside III, mogroside IV (esgoside), neomogroside, 11-oxo-mogroside V, mogroside VI, mogroside V, and siamenoside I, as well as other mogrosides and triterpene glycosides found in a plant in the genus *Siraitia,* in some cases from the *Siraitia grosvenorii* plant, and mixtures thereof; glucosylated mogrosides; and combinations, mixtures, and kits comprising any of the foregoing.

As used herein, the terms "high potency sweetener," "high-potency sweetener," and "HP sweetener," terms that can be used interchangeably, refers to a sweetening agent that can synthetic or natural in origin, with a sweetness potency greater than sucrose, e.g., a sweetness potency that can be about 2-fold-15,000-fold greater than sucrose. HP sweeteners are essentially non-caloric and used widely in manufacturing of diet and reduced calorie food. In general, HP sweeteners do not affect the blood glucose level and provide little or no nutritive value. Non-limiting examples of synthetic HP sweeteners include sucralose, potassium acesulfame, aspartame, alitame, saccharin, neohesperidin dihydrochalcone and synthetic analogues, cyclamate, neotame, dulcin, suosan, N-[N-[3-(3-hydroxy-4-methoxyphenyl)propyl]-L-α-aspartyl]-L-phenylalanine 1-methyl ester, N-[N-[3-(3-hydroxy-4-methoxyphenyl)-3-methylbutyl]-L-α-aspartyl]-L-phenylalanine 1-methyl ester, N-[N-[3-(3-methoxy-4-hydroxyphenyl)propyl]-L-α-aspartyl]-L-phenylalanine 1-methyl ester, salts thereof, and the like. Additional examples of synthetic HP sweeteners are described herein below. Non-limiting examples of natural HP sweeteners include Stevioside, Rebaudioside A, Rebaudioside B, Rebaudioside C, Rebaudioside D, Rebaudioside E, Rebaudioside F, Rebaudioside M, Steviolbioside, Dulcoside A, Rubusoside, mogrosides, brazzein, neohesperidin dihydrochalcone (NHDC), glycyrrhizic acid and its salts, thaumatin, perillartine, hernandulcin, mukur oziosides, baiyunoside, phlomisoside-l, dimethyl-hexahydrofluorene-dicarboxylic acid, abrusosides, periandrin, carnosiflosides, cyclocarioside, pterocaryosides, polypodoside A, brazzein, hernandulcin, phillodulcin, glycyphyllin, phlorizin, trilobatin, dihydroflavonol, dihydroquercetin-3-acetate, neoastilibin, trans-cinnamaldehyde, monatin and its salts, selligueain A, hematoxylin, monellin, osladin, pterocaryoside A, pterocaryoside B, mabinlin, pentadin, miraculin, curculin, neoculin, chlorogenic acid, cynarin, siamenoside and others. Additional examples of natural HP sweeteners are described herein below. It should be noted that HP sweeteners can be derived from the modification of natural HP sweeteners, for example, by fermentation, enzymatic treatment, or derivatization.

A "flavor" herein refers to the perception of taste and/or smell in a subject, which include sweet, sour, salty, bitter, umami, and others. The subject may be a human or an animal.

A "flavoring agent" herein refers to a compound or a biologically acceptable salt thereof that induces a flavor or taste in an animal or a human.

A "flavor modifier" herein refers to a compound or biologically acceptable salt thereof that modulates, including enhancing or potentiating, and inducing, the tastes and/or smell of a natural or synthetic flavoring agent in an animal or a human.

A "flavor enhancer" herein refers to a compound or biologically acceptable salt thereof that enhances and/or multiplies the tastes or smell of a natural or synthetic flavoring agent, or a comestible composition comprising the flavor enhancer.

As used herein, "flavors with modifying properties" or "FMP" can be used interchangeably, and refer to those generally recognized as safe (GRAS) ingredients that enhance, subdue or otherwise effect other flavors without themselves being sweeteners or flavorings. The Flavor and Extracts Manufacturing Association (FEMA) has developed a protocol published in the November 2013 issue of Food *Technology.*

As used herein, the term "FEMA GRAS" means that an ingredient has been designated as generally recognized as safe by an independent Flavor Expert Panel for use in flavors, e.g., see Expert Panel, Toxicology, Decision Tree, Consumption Ratio, and Chart 486 - FEMA GRAS Lists Numbers Included, FDA GRAS, Bulk Flavor Labeling Statement.

As used herein, "taste" refers to a sensation caused by activation of target taste receptor cells in the taste buds of a subject. Taste can be selected from the group consisting of sweet, sour, salt, bitter, and umami. A taste can be elicited in a subject by a "tastant," which can be a synthetic tastant, a tastant prepared from a natural source (i.e., a natural tastant), or combinations thereof.

As used herein, the terms "modulates" or "modifies" refers an increase or decrease in the amount, quality or effect of a particular activity of a receptor and/or an increase or decrease in the expression, activity or function of a receptor. "Modulators," as used herein, refer to any inhibitory or activating compounds identified using in silico, in vitro and/or in vivo assays for, e.g., agonists, antagonists and their homologs, including fragments, variants and mimetics.

"Inducers," "activators" or "agonists," as used herein, refer to modulating compounds that increase, induce, stimulate, open, activate, facilitate, enhance activation, sensitize or upregulate a receptor or pathway of interest.

The terms "polypeptide," "peptide," "amino acid sequence" and "protein," used interchangeably herein, refer to a molecule formed from the linking of at least two amino acids. The link between one amino acid residue and the next is an amide bond and is sometimes referred to as a peptide bond. The terms can apply to amino acid polymers in which one or more amino acid residue is an artificial chemical mimetic of a corresponding naturally occurring amino acid, as well as to naturally occurring amino acid polymers and non-naturally occurring amino acid polymers.

The term "amino acid," as used herein, refers to naturally occurring and synthetic amino acids, as well as amino acid analogs and amino acid mimetics that function in a manner similar to the naturally occurring amino acids. Naturally occurring amino acids are those encoded by the genetic code, as well as those amino acids that are later modified, e.g., hydroxyproline, gamma-carboxyglutamate and O-phosphoserine. Amino acid analogs and derivatives can refer to compounds that have the same basic chemical structure as a naturally occurring amino acid, i.e., a carbon that is bound to a hydrogen, a carboxyl group, an amino group and an R group, e.g., homoserine, norleucine, methionine sulfoxide and methionine sulfone. Such analogs can have modified R groups (e.g., norleucine) or modified peptide backbones, but retain the same basic chemical structure as a naturally occurring amino acid. Amino acid mimetics means chemical compounds that have a structure that is different from the general chemical structure of an amino acid, but that functions in a manner similar to a naturally occurring amino acid.

As used herein, the term "effective amount" refers to an amount that is sufficient to achieve the desired modification of a physical property of the composition or material. For example, an "effective amount" of a disclosed sweetener composition or a sweetening agent refers to an amount that is sufficient to achieve the desired improvement in the property modulated by the formulation component, e.g. achieving the desired level of sweetness, sweetness appearance time, sweetness linger, sweetness desensitization, body/mouthfeel, sourness, saltiness, bitterness, or astringency. The specific level in terms of wt% in a composition required as an effective amount will depend upon a variety of factors including the amount and type of sweetener, amount and type of taste modulator, amount and type of salts and/or cations, and end use of the product made using the composition.

As used herein, the terms "optional" or "optionally" means that the subsequently described event or circumstance can or cannot occur, and that the description includes instances where said event or circumstance occurs and instances where it does not.

Unless otherwise specified, temperatures referred to herein are based on atmospheric pressure (i.e. one atmosphere).

### Taste Modulator Compositions

In various aspects, the present disclosure, relates to taste modulator compositions comprising one or more taste modulator components. The taste modulator component improves key properties associated with edible liquids and foodstuffs, including overall taste response; mitigation of various flavor profile issues; improves desensitization/adaptation profile issues; and improves body/mouthfeel characteristics.

A composition comprising a disclosed taste modulator composition and an umami agent has one or more of the following characteristics modified as indicated when compared to the same composition without the disclosed taste modulator composition: decreased bitterness and/or mouthfeel enhancement. That is, a composition comprising a disclosed taste modulator composition with an umami agent has modified one of the foregoing characteristics as compared to essentially the same composition except with the same HP sweetener at the same concentration with the disclosed taste modulator composition omitted as determined in a sensory panel study as described herein.

One or more of these characteristics in a composition comprising a disclosed taste modulator composition with an umami agent may be improved, when determined in a sensory panel study as described herein, is improved by about 1%, about 2%, about 3%, about 4%, about 5%, about 6%, about 7%, about 8%, about 9%, about 10%, about 11%, about 12%, about 13%, about 14%, about 15%, about 16%, about 17%, about 18%, about 19%, about 20%, about 21%, about 22%, about 23%, about 24%, about 25%, about 26%, about 27%, about 28%, about 29%, about 30%, about 31%, about 32%, about 33%, about 34%, about 35%, about 36%, about 37%, about 38%, about 39%, about 40%, about 41%, about 42%, about 43%, about 44%, about 45%, about 46%, about 47%, about 48%, about 49%, about 50%, about 51%, about 52%, about 53%, about 54%, about 55%, about 56%, about 57%, about 58%, about 59%, about 60%, about 61%, about 62%, about 63%, about 64%, about 65%, about 66%, about 67%, about 68%, about 69%, about 70%, about 71%, about 72%, about 73%, about 74%, about 75%, about 76%, about 77%, about 78%, about 79%, about 80%, about 81%, about 82%, about 83%, about 84%, about 85%, about 86%, about 87%, about 88%, about 89%, about 90%, about 91%, about 92%, about 93%, about 94%, about 95%, about 96%, about 97%, about 98%, about 99%, about 100%; or any range encompassed by the foregoing values; or any combination of the foregoing values.

The taste modulator compositions comprise a first taste modulator component comprising a first salt having a first cation Mg²⁺. The taste modulator compositions have a second taste modulator component comprising a second salt having a second cation Ca²⁺, and optionally a third taste modulator component comprising a third salt having a third cation selected from Na⁺ and K⁺; and optionally a fourth taste modulator component comprising a fourth salt having a fourth cation selected from Na⁺, K⁺, Ca²⁺, and Mg²⁺. In some instances, the additional taste modulator components each comprise a different cation selected from Na⁺, K⁺, Ca²⁺, and Mg²⁺.

The disclosed taste modulator composition may comprises a first salt having a first cation Mg²⁺; optionally a second salt having a second cation Ca²⁺, ; optionally a third salt having a third cation independently selected from Na⁺ and K⁺; and optionally a fourth salt having a fourth cation independently selected from Na⁺, K⁺, Ca²⁺, and Mg²⁺; provided that first cation, second cation, third cation, and fourth cation are not the same.

In a further aspect, a disclosed taste modulator composition comprises a first salt having a first cation and a first anion; a second salt having a second cation and a second anion; optionally a third salt having a third cation and a third anion; and optionally a fourth salt having a fourth cation and a fourth anion; the first cation is Mg²⁺; the second cation is Ca²⁺; the third cation is independently selected from Na⁺ and K⁺; and the fourth cation is independently selected from Na⁺, K⁺, Ca²⁺, and Mg²⁺; the first anion is independently selected from citrate (C₆H₅O₇⁻³), phosphate (PO₄⁻³), chloride (Cl⁻), sulfate (SO₄⁻²), and carbonate (CO₃⁻²), or combinations thereof; the second anion is independently selected from citrate (C₆H₅O₇⁻³), phosphate (PO₄⁻³), chloride (Cl⁻), sulfate (SO₄⁻²), and carbonate (CO₃⁻²),, or combinations thereof; the third anion is independently selected from gluconate (C₆H₁₁O₇⁻¹), citrate (C₆H₅O₇⁻³), hydrogen citrate (C₆H₆O₇⁻²), dihydrogen citrate (C₆H₇O₇⁻¹), malate (C₄H₆O₅⁻²), hydrogen malate (C₄H₇O₅⁻¹), maleate (C₄H₂O₄⁻²), hydrogen maleate (C₄H₃O₄⁻¹), fumarate (C₄H₂O₄⁻²), hydrogen fumarate (C₄H₃O₄⁻¹), succinate (C₄H₄O₄⁻²), hydrogen succinate (C₄H₅O₄⁻¹), glutarate (C₅H₆O₄⁻²), hydrogen glutarate (C₅H₇O₄⁻¹), adipate C₆H₈O₄⁻²), hydrogen adipate C₆H₉O₄⁻¹), lactate (C₃H₅O₃⁻¹), tartrate (C₄H₄O₆⁻²), bitartrate (C₄H₅O₆⁻¹), phosphate (PO₄⁻³), monohydrogen phosphate (HPO₄⁻²), dihydrogen phosphate (H₂PO₄⁻), fluoride (F⁻), chloride (Cl⁻), sulfate (SO₄⁻²), bisulfate (HSO₄⁻¹), nitrate (NO₃⁻), carbonate (CO₃⁻²), bicarbonate (HCO₃⁻), glycerate (C₃H₅O₄⁻¹), glycolate (C₂H₃O₃⁻¹), or combinations thereof; and the fourth anion is independently selected from gluconate (C₆H₁₁O₇⁻¹), citrate (C₆H₅O₇⁻³), hydrogen citrate (C₆H₆O₇⁻²), dihydrogen citrate (C₆H₇O₇⁻¹), malate (C₄H₆O₅⁻²), hydrogen malate (C₄H₇O₅⁻¹), maleate (C₄H₂O₄⁻²), hydrogen maleate (C₄H₃O₄⁻¹), fumarate (C₄H₂O₄⁻²), hydrogen fumarate (C₄H₃O₄⁻¹), succinate (C₄H₄O₄⁻²), hydrogen succinate (C₄H₅O₄⁻¹), glutarate (C₅H₆O₄⁻²), hydrogen glutarate (C₅H₇O₄⁻¹), adipate C₆H₈O₄⁻²), hydrogen adipate C₆H₉O₄⁻¹), lactate (C₃H₅O₃⁻¹), tartrate (C₄H₄O₆⁻²), bitartrate (C₄H₅O₆⁻¹), phosphate (PO₄⁻³), monohydrogen phosphate (HPO₄⁻²), dihydrogen phosphate (H₂PO₄⁻), fluoride (F⁻), chloride (Cl⁻), sulfate (SO₄⁻²), bisulfate (HSO₄⁻¹), nitrate (NO₃⁻), carbonate (CO₃⁻²), bicarbonate (HCO₃⁻), glycerate (C₃H₅O₄⁻¹), glycolate (C₂H₃O₃⁻¹), or combinations thereof. In some instances, the first cation, the second cation, the third cation, and the fourth cation are not the same. In other instances, some or all of the first cation, the second cation, the third cation, and the fourth cation can be the same, provided that the first anion, the second anion, the third anion, and the fourth anion are not the same.

In a further aspect, the third anion is independently selected from gluconate (C₆H₁₁O₇⁻¹), citrate (C₆H₅O₇⁻³), hydrogen citrate (C₆H₆O₇⁻²), dihydrogen citrate (C₆H₇O₇⁻¹), malate (C₄H₆O₅⁻²), hydrogen malate (C₄H₇O₅⁻¹), maleate (C₄H₂O₄⁻²), hydrogen maleate (C₄H₃O₄⁻¹), fumarate (C₄H₂O₄⁻²), hydrogen fumarate (C₄H₃O₄⁻¹), succinate (C₄H₄O₄⁻²) , hydrogen succinate (C₄H₅O₄⁻¹), glutarate (C₅H₆O₄⁻²) , hydrogen glutarate (C₅H₇O₄⁻¹), adipate C₆H₈O₄⁻²), hydrogen adipate C₆H₉O₄⁻¹), lactate (C₃H₅O₃⁻¹), tartrate (C₄H₄O₆⁻²), bitartrate (C₄H₅O₆⁻¹), phosphate (PO₄⁻³), monohydrogen phosphate (HPO₄⁻²), dihydrogen phosphate (H₂PO₄⁻), fluoride (F⁻), chloride (Cl⁻), sulfate (SO₄⁻²), bisulfate (HSO₄⁻¹), nitrate (NO₃⁻), carbonate (CO₃⁻²), bicarbonate (HCO₃⁻), glycerate (C₃H₅O₄⁻¹), glycolate (C₂H₃O₃⁻¹), or combinations thereof; and the fourth anion is independently selected from gluconate (C₆H₁₁O₇⁻¹), citrate (C₆H₅O₇⁻³), hydrogen citrate (C₆H₆O₇⁻²), dihydrogen citrate (C₆H₇O₇⁻¹), malate (C₄H₆O₅⁻²), hydrogen malate (C₄H₇O₅⁻¹), maleate (C₄H₂O₄⁻²), hydrogen maleate (C₄H₃O₄⁻¹), fumarate (C₄H₂O₄⁻²), hydrogen fumarate (C₄H₃O₄⁻¹), succinate (C₄H₄O₄⁻²) , hydrogen succinate (C₄H₅O₄⁻¹), glutarate (C₅H₆O₄⁻²), hydrogen glutarate (C₅H₇O₄⁻¹), adipate C₆H₈O₄⁻²), hydrogen adipate C₆H₉O₄⁻¹), lactate (C₃H₅O₃⁻¹), tartrate (C₄H₄O₆⁻²) , bitartrate (C₄H₅O₆⁻¹), phosphate (PO₄⁻³), monohydrogen phosphate (HPO₄⁻²), dihydrogen phosphate (H₂PO₄⁻), fluoride (F⁻), chloride (Cl⁻), sulfate (SO₄⁻²), bisulfate (HSO₄⁻¹), nitrate (NO₃⁻), carbonate (CO₃⁻²), bicarbonate (HCO₃⁻), glycerate (C₃H₅O₄⁻¹), glycolate (C₂H₃O₃⁻¹), or combinations thereof. In some instances, the first cation, the second cation, the third cation, and the fourth cation are not the same. In other instances, some or all of the first cation, the second cation, the third cation, and the fourth cation can be the same, provided that the first anion, the second anion, the third anion, and the fourth anion are not the same.

In a further aspect, the third anion is independently selected from gluconate (C₆H₁₁O₇⁻¹), citrate (C₆H₅O₇⁻³), hydrogen citrate (C₆H₆O₇⁻²), dihydrogen citrate (C₆H₇O₇⁻¹), malate (C₄H₆O₅⁻²), hydrogen malate (C₄H₇O₅⁻¹), maleate (C₄H₂O₄⁻²), hydrogen maleate (C₄H₃O₄⁻¹), fumarate (C₄H₂O₄⁻²), hydrogen fumarate (C₄H₃O₄⁻¹), succinate (C₄H₄O₄⁻²), hydrogen succinate (C₄H₅O₄⁻¹), glutarate (C₅H₆O₄⁻²), hydrogen glutarate (C₅H₇O₄⁻¹), adipate C₆H₈O₄⁻²), hydrogen adipate C₆H₉O₄⁻¹), lactate (C₃H₅O₃⁻¹), tartrate (C₄H₄O₆⁻²), bitartrate (C₄H₅O₆⁻¹), phosphate (PO₄⁻³), monohydrogen phosphate (HPO₄⁻²), dihydrogen phosphate (H₂PO₄⁻), fluoride (F⁻), chloride (Cl⁻), sulfate (SO₄⁻²), bisulfate (HSO₄⁻¹), nitrate (NO₃⁻), carbonate (CO₃⁻²), bicarbonate (HCO₃⁻), glycerate (C₃H₅O₄⁻¹), glycolate (C₂H₃O₃⁻¹), or combinations thereof. In some instances, the first cation, the second cation, the third cation, and the fourth cation are not the same. In other instances, some or all of the first cation, the second cation, the third cation, and the fourth cation can be the same, provided that the first anion, the second anion, the third anion, and the fourth anion are not the same.

The first taste modulator component may be present at a concentration of from about 0.1 mM to about 5 mM; and the second taste modulator component is present at a concentration of from about 0.1 mM to about 5 mM.

The first taste modulator component may be present at a concentration of from about 1 mM to about 10 mM; and the second taste modulator component may be present at a concentration of from about 1 mM to about 10 mM.

The first taste modulator component may be present at a concentration of from about 1 mM to about 5 mM; and the second taste modulator component may be present at a concentration of from about 1 mM to about 10 mM.

The first taste modulator component may be present at a concentration of from about 1 mM to about 5 mM; and the second taste modulator component may be present at a concentration of from about 1 mM to about 5 mM.

The first taste modulator component may be present at a concentration of from about 0.1 mM to about 5 mM; the second taste modulator component may be present at a concentration of from about 0.1 mM to about 10 mM; and the third taste modulator component may be present at a concentration of from about 0.1 mM to about 25 mM if the third cation is Na⁺ or K⁺.

The first taste modulator component may be present at a concentration of from about 0.1 mM to about 5 mM; the second taste modulator component may be present at a concentration of from about 0.1 mM to about 5 mM; and the third taste modulator component may be present at a concentration of from about 0.1 mM to about 10 mM if the third cation is Na⁺ or K⁺.

The first taste modulator component may be present at a concentration of from about 1 mM to about 10 mM; the second taste modulator component may be present at a concentration of from about 1 mM to about 10 mM; and the third taste modulator component may be present at a concentration of from about 1 mM to about 25 mM if the third cation is Na⁺ or K⁺.

The first taste modulator component may be present at a concentration of from about 1 mM to about 5 mM; the second taste modulator component may be present at a concentration of from about 1 mM to about 10 mM; and the third taste modulator component may be present at a concentration of from about 1 mM to about 25 mM.

The first taste modulator component may be present at a concentration of from about 1 mM to about 5 mM; the second taste modulator component may bepresent at a concentration of from about 1 mM to about 5 mM; and the third taste modulator component may be present at a concentration of from about 1 mM to about 10 mM.

The first taste modulator component may be present at a concentration of from about 0.1 mM to about 10 mM; and such that each of the second taste modulator component and the third modulator component are independently present at a concentration of from about 0.1 mM to about 5 mM.

The first taste modulator component may be present at a concentration of from about 1 mM to about 10 mM; and each of the second taste modulator component and the third modulator component may be independently present at a concentration of from about 1 mM to about 5 mM.

The first taste modulator component may be present at a concentration of from about 0.1 mM to about 10 mM; and each of the second taste modulator component and the third modulator component may be independently present at a concentration of from about 0.1 mM to about 5 mM.

A third anion, if present, may be selected from citrate (C₆H₅O₇⁻³), chloride (Cl⁻), phosphate (PO₄⁻³), carbonate (CO₃⁻²), sulfate (SO₄⁻²), and combinations thereof; and the first taste modulator component may be present at a concentration of from about 0.1 mM to about 10 mM; and each of the second taste modulator component and the third modulator component may be independently present at a concentration of from about 0.1 mM to about 5 mM.

In various aspects, the total concentration of the first modulator component, the second modulator component, the third modulator component, and the fourth modulator component taken together can be from about 0.1 mM to about 30 mM. For example, each of the first modulator component, the second modulator component, the third modulator component, and the fourth modulator component are independently present a concentration of from about 0 mM to about 10 mM, provided that the sum of concentrations of the first modulator component, the second modulator component, the third modulator component, and the fourth modulator component is less than about 30 mM. In a further aspect, the total concentration of the first modulator component, the second modulator component, the third modulator component, and the fourth modulator component taken together can be from about about 0.3 mM to about 30 mM, about 0.4 mM to about 30 mM, about 0.5 mM to about 30 mM, about 0.6 mM to about 30 mM, about 0.7 mM to about 30 mM, about 0.8 mM to about 30 mM, about 0.9 mM to about 30 mM, about 1.0 mM to about 30 mM, about 0.3 mM to about 25 mM, about 0.4 mM to about 25 mM, about 0.5 mM to about 25 mM, about 0.6 mM to about 25 mM, about 0.7 mM to about 25 mM, about 0.8 mM to about 25 mM, about 0.9 mM to about 25 mM, about 1.0 mM to about 25 mM, about 0.1 mM to about 20 mM, about 0.2 mM to about 20 mM, about 0.3 mM to about 20 mM, about 0.4 mM to about 20 mM, about 0.5 mM to about 20 mM, about 0.6 mM to about 20 mM, about 0.7 mM to about 20 mM, about 0.8 mM to about 20 mM, about 0.9 mM to about 20 mM, about 1.0 mM to about 20 mM, about 0.3 mM to about 15 mM, about 0.4 mM to about 15 mM, about 0.5 mM to about 15 mM, about 0.6 mM to about 15 mM, about 0.7 mM to about 15 mM, about 0.8 mM to about 15 mM, about 0.9 mM to about 15 mM, about 1.0 mM to about 15 mM, about 0.3 mM to about 10 mM, about 0.4 mM to about 10 mM, about 0.5 mM to about 10 mM, about 0.6 mM to about 10 mM, about 0.7 mM to about 10 mM, about 0.8 mM to about 10 mM, about 0.9 mM to about 10 mM, about 1.0 mM to about 10 mM; or a concentration or set of concentrations within the foregoing concentration ranges; or a sub-range of any of the foregoing concentration ranges.

In a further aspect, the concentration of the first modulator component may be about 0.2 mM to about 10 mM, about 0.3 mM to about 10 mM, about 0.4 mM to about 10 mM, about 0.5 mM to about 10 mM, about 0.6 mM to about 10 mM, about 0.7 mM to about 10 mM, about 0.8 mM to about 10 mM, about 0.9 mM to about 10 mM, about 1.0 mM to about 10 mM, about 0.1 mM to about 9 mM, about 0.2 mM to about 9 mM, about 0.3 mM to about 9 mM, about 0.4 mM to about 9 mM, about 0.5 mM to about 9 mM, about 0.6 mM to about 9 mM, about 0.7 mM to about 9 mM, about 0.8 mM to about 9 mM, about 0.9 mM to about 9 mM, about 1.0 mM to about 9 mM, about 0.1 mM to about 8 mM, about 0.2 mM to about 8 mM, about 0.3 mM to about 8 mM, about 0.4 mM to about 8 mM, about 0.5 mM to about 8 mM, about 0.6 mM to about 8 mM, about 0.7 mM to about 8 mM, about 0.8 mM to about 8 mM, about 0.9 mM to about 8 mM, about 1.0 mM to about 8 mM, about 0.1 mM to about 7 mM, about 0.2 mM to about 7 mM, about 0.3 mM to about 7 mM, about 0.4 mM to about 7 mM, about 0.5 mM to about 7 mM, about 0.6 mM to about 7 mM, about 0.7 mM to about 7 mM, about 0.8 mM to about 7 mM, about 0.9 mM to about 7 mM, about 1.0 mM to about 7 mM, about 0.1 mM to about 6 mM, about 0.2 mM to about 6 mM, about 0.3 mM to about 6 mM, about 0.4 mM to about 6 mM, about 0.5 mM to about 6 mM, about 0.6 mM to about 6 mM, about 0.7 mM to about 6 mM, about 0.8 mM to about 6 mM, about 0.9 mM to about 6 mM, about 1.0 mM to about 6 mM, about 0.1 mM to about 5 mM, about 0.2 mM to about 5 mM, about 0.3 mM to about 5 mM, about 0.4 mM to about 5 mM, about 0.5 mM to about 5 mM, about 0.6 mM to about 5 mM, about 0.7 mM to about 5 mM, about 0.8 mM to about 5 mM, about 0.9 mM to about 5 mM, about 1.0 mM to about 5 mM, about 0.1 mM to about 4 mM, about 0.2 mM to about 4 mM, about 0.3 mM to about 4 mM, about 0.4 mM to about 4 mM, about 0.5 mM to about 4 mM, about 0.6 mM to about 4 mM, about 0.7 mM to about 4 mM, about 0.8 mM to about 4 mM, about 0.9 mM to about 4 mM, about 1.0 mM to about 4 mM, about 0.1 mM to about 3 mM, about 0.2 mM to about 3 mM, about 0.3 mM to about 3 mM, about 0.4 mM to about 3 mM, about 0.5 mM to about 3 mM, about 0.6 mM to about 3 mM, about 0.7 mM to about 3 mM, about 0.8 mM to about 3 mM, about 0.9 mM to about 3 mM, about 1.0 mM to about 3 mM; or a concentration or set of concentrations within the foregoing concentration ranges; or a sub-range of any of the foregoing concentration ranges.

In a further aspect, the concentration of the second modulator component can be from about 0.2 mM to about 10 mM, about 0.3 mM to about 10 mM, about 0.4 mM to about 10 mM, about 0.5 mM to about 10 mM, about 0.6 mM to about 10 mM, about 0.7 mM to about 10 mM, about 0.8 mM to about 10 mM, about 0.9 mM to about 10 mM, about 1.0 mM to about 10 mM, about 0.1 mM to about 9 mM, about 0.2 mM to about 9 mM, about 0.3 mM to about 9 mM, about 0.4 mM to about 9 mM, about 0.5 mM to about 9 mM, about 0.6 mM to about 9 mM, about 0.7 mM to about 9 mM, about 0.8 mM to about 9 mM, about 0.9 mM to about 9 mM, about 1.0 mM to about 9 mM, about 0.1 mM to about 8 mM, about 0.2 mM to about 8 mM, about 0.3 mM to about 8 mM, about 0.4 mM to about 8 mM, about 0.5 mM to about 8 mM, about 0.6 mM to about 8 mM, about 0.7 mM to about 8 mM, about 0.8 mM to about 8 mM, about 0.9 mM to about 8 mM, about 1.0 mM to about 8 mM, about 0.1 mM to about 7 mM, about 0.2 mM to about 7 mM, about 0.3 mM to about 7 mM, about 0.4 mM to about 7 mM, about 0.5 mM to about 7 mM, about 0.6 mM to about 7 mM, about 0.7 mM to about 7 mM, about 0.8 mM to about 7 mM, about 0.9 mM to about 7 mM, about 1.0 mM to about 7 mM, about 0.1 mM to about 6 mM, about 0.2 mM to about 6 mM, about 0.3 mM to about 6 mM, about 0.4 mM to about 6 mM, about 0.5 mM to about 6 mM, about 0.6 mM to about 6 mM, about 0.7 mM to about 6 mM, about 0.8 mM to about 6 mM, about 0.9 mM to about 6 mM, about 1.0 mM to about 6 mM, about 0.1 mM to about 5 mM, about 0.2 mM to about 5 mM, about 0.3 mM to about 5 mM, about 0.4 mM to about 5 mM, about 0.5 mM to about 5 mM, about 0.6 mM to about 5 mM, about 0.7 mM to about 5 mM, about 0.8 mM to about 5 mM, about 0.9 mM to about 5 mM, about 1.0 mM to about 5 mM, about 0.1 mM to about 4 mM, about 0.2 mM to about 4 mM, about 0.3 mM to about 4 mM, about 0.4 mM to about 4 mM, about 0.5 mM to about 4 mM, about 0.6 mM to about 4 mM, about 0.7 mM to about 4 mM, about 0.8 mM to about 4 mM, about 0.9 mM to about 4 mM, about 1.0 mM to about 4 mM, about 0.1 mM to about 3 mM, about 0.2 mM to about 3 mM, about 0.3 mM to about 3 mM, about 0.4 mM to about 3 mM, about 0.5 mM to about 3 mM, about 0.6 mM to about 3 mM, about 0.7 mM to about 3 mM, about 0.8 mM to about 3 mM, about 0.9 mM to about 3 mM, about 1.0 mM to about 3 mM; or a concentration or set of concentrations within the foregoing concentration ranges; or a sub-range of any of the foregoing concentration ranges.

In a further aspect, the concentration of the third modulator component can be from about 0.2 mM to about 25 mM, about 0.3 mM to about 25 mM, about 0.4 mM to about 25 mM, about 0.5 mM to about 25 mM, about 0.6 mM to about 25 mM, about 0.7 mM to about 25 mM, about 0.8 mM to about 25 mM, about 0.9 mM to about 25 mM, about 1.0 mM to about 25 mM, about 0.1 mM to about 20 mM, about 0.2 mM to about 20 mM, about 0.3 mM to about 20 mM, about 0.4 mM to about 20 mM, about 0.5 mM to about 20 mM, about 0.6 mM to about 20 mM, about 0.7 mM to about 20 mM, about 0.8 mM to about 20 mM, about 0.9 mM to about 20 mM, about 1.0 mM to about 20 mM, about 0.1 mM to about 15 mM, about 0.2 mM to about 15 mM, about 0.3 mM to about 15 mM, about 0.4 mM to about 15 mM, about 0.5 mM to about 15 mM, about 0.6 mM to about 15 mM, about 0.7 mM to about 15 mM, about 0.8 mM to about 15 mM, about 0.9 mM to about 15 mM, about 1.0 mM to about 15 mM, about 0.1 mM to about 10 mM, about 0.2 mM to about 10 mM, about 0.3 mM to about 10 mM, about 0.4 mM to about 10 mM, about 0.5 mM to about 10 mM, about 0.6 mM to about 10 mM, about 0.7 mM to about 10 mM, about 0.8 mM to about 10 mM, about 0.9 mM to about 10 mM, about 1.0 mM to about 10 mM, about 0.1 mM to about 9 mM, about 0.2 mM to about 9 mM, about 0.3 mM to about 9 mM, about 0.4 mM to about 9 mM, about 0.5 mM to about 9 mM, about 0.6 mM to about 9 mM, about 0.7 mM to about 9 mM, about 0.8 mM to about 9 mM, about 0.9 mM to about 9 mM, about 1.0 mM to about 9 mM, about 0.1 mM to about 8 mM, about 0.2 mM to about 8 mM, about 0.3 mM to about 8 mM, about 0.4 mM to about 8 mM, about 0.5 mM to about 8 mM, about 0.6 mM to about 8 mM, about 0.7 mM to about 8 mM, about 0.8 mM to about 8 mM, about 0.9 mM to about 8 mM, about 1.0 mM to about 8 mM, about 0.1 mM to about 7 mM, about 0.2 mM to about 7 mM, about 0.3 mM to about 7 mM, about 0.4 mM to about 7 mM, about 0.5 mM to about 7 mM, about 0.6 mM to about 7 mM, about 0.7 mM to about 7 mM, about 0.8 mM to about 7 mM, about 0.9 mM to about 7 mM, about 1.0 mM to about 7 mM, about 0.1 mM to about 6 mM, about 0.2 mM to about 6 mM, about 0.3 mM to about 6 mM, about 0.4 mM to about 6 mM, about 0.5 mM to about 6 mM, about 0.6 mM to about 6 mM, about 0.7 mM to about 6 mM, about 0.8 mM to about 6 mM, about 0.9 mM to about 6 mM, about 1.0 mM to about 6 mM, about 0.1 mM to about 5 mM, about 0.2 mM to about 5 mM, about 0.3 mM to about 5 mM, about 0.4 mM to about 5 mM, about 0.5 mM to about 5 mM, about 0.6 mM to about 5 mM, about 0.7 mM to about 5 mM, about 0.8 mM to about 5 mM, about 0.9 mM to about 5 mM, about 1.0 mM to about 5 mM, about 0.1 mM to about 4 mM, about 0.2 mM to about 4 mM, about 0.3 mM to about 4 mM, about 0.4 mM to about 4 mM, about 0.5 mM to about 4 mM, about 0.6 mM to about 4 mM, about 0.7 mM to about 4 mM, about 0.8 mM to about 4 mM, about 0.9 mM to about 4 mM, about 1.0 mM to about 4 mM, about 0.1 mM to about 3 mM, about 0.2 mM to about 3 mM, about 0.3 mM to about 3 mM, about 0.4 mM to about 3 mM, about 0.5 mM to about 3 mM, about 0.6 mM to about 3 mM, about 0.7 mM to about 3 mM, about 0.8 mM to about 3 mM, about 0.9 mM to about 3 mM, about 1.0 mM to about 3 mM; or a concentration or set of concentrations within the foregoing concentration ranges; or a sub-range of any of the foregoing concentration ranges.

The disclosed taste modulator compositions can be used at a suitable pH, e.g. a pH of from about pH 2 to about pH 9. In some instances, it may be desirable, e.g., to optimize a Taste Quality Metric such as sweetness linger, and/or body/mouthfeel, to use a lower pH, such as a pH of from about pH 2 to about pH 5, about pH 2 to about pH 4.5, about pH 2.0 to about pH 4.0, about pH 2.0 to about pH 3.9, about pH 2.0 to about pH 3.8, about pH 2.0 to about pH 3.7, about pH 2.0 to about pH 3.6, about pH 2.0 to about pH 3.5, about pH 2.0 to about pH 3.4, about pH 2.0 to about pH 3.3, about pH 2.0 to about pH 3.2, about pH 2.0 to about pH 3.1, about pH 2.0 to about pH 3.0, about pH 2.1 to about pH 4.0, about pH 2.1 to about pH 3.9, about pH 2.1 to about pH 3.8, about pH 2.1 to about pH 3.7, about pH 2.1 to about pH 3.6, about pH 2.1 to about pH 3.5, about pH 2.1 to about pH 3.4, about pH 2.1 to about pH 3.3, about pH 2.1 to about pH 3.2, about pH 2.1 to about pH 3.1, about pH 2.1 to about pH 3.0, about pH 2.2 to about pH 4.0, about pH 2.2 to about pH 3.9, about pH 2.2 to about pH 3.8, about pH 2.2 to about pH 3.7, about pH 2.2 to about pH 3.6, about pH 2.2 to about pH 3.5, about pH 2.2 to about pH 3.4, about pH 2.2 to about pH 3.3, about pH 2.2 to about pH 3.2, about pH 2.2 to about pH 3.1, about pH 2.2 to about pH 3.0, about pH 2.3 to about pH 4.0, about pH 2.3 to about pH 3.9, about pH 2.3 to about pH 3.8, about pH 2.3 to about pH 3.7, about pH 2.3 to about pH 3.6, about pH 2.3 to about pH 3.5, about pH 2.3 to about pH 3.4, about pH 2.3 to about pH 3.3, about pH 2.3 to about pH 3.2, about pH 2.3 to about pH 3.1, about pH 2.3 to about pH 3.0, about pH 2.4 to about pH 4.0, about pH 2.4 to about pH 3.9, about pH 2.4 to about pH 3.8, about pH 2.4 to about pH 3.7, about pH 2.4 to about pH 3.6, about pH 2.4 to about pH 3.5, about pH 2.4 to about pH 3.4, about pH 2.4 to about pH 3.3, about pH 2.4 to about pH 3.2, about pH 2.4 to about pH 3.1, about pH 2.4 to about pH 3.0, about pH 2.5 to about pH 4.0, about pH 2.5 to about pH 3.9, about pH 2.5 to about pH 3.8, about pH 2.5 to about pH 3.7, about pH 2.5 to about pH 3.6, about pH 2.5 to about pH 3.5, about pH 2.5 to about pH 3.4, about pH 2.5 to about pH 3.3, about pH 2.5 to about pH 3.2, about pH 2.5 to about pH 3.1, about pH 2.5 to about pH 3.0; or any pH value or sub-range within the foregoing ranges.

### Calcium Sensing Receptor (CaSR)

It has been reported that CaSR can be activated by both Ca²⁺ salts and Mg²⁺ salts as well as a large number of other agonists (e.g., see Spurney, R.F., et al. Kidney Int. 1999 May;55(5):1750-8; and Breitwieser, G.E., et al. Cell Calcium. 2004 Mar;35(3):209-16). The CaSR belongs to class C of the seven-transmembrane receptors (G protein-coupled receptor; GPCR). The cloning of the gene for the calcium receptor was reported in 1993 (Nature, 1993 Dec. 9; 366(6455):575-80). The calcium receptor is known to cause various cellular responses through elevation of the intracellular calcium levels, etc., when activated with calcium, etc. The sequence of the human calcium receptor gene is registered with GenBank (Accession No. NM_000388), and is well conserved among many animal species. The "calcium receptor activity" is when binding of a substrate to the calcium receptor activates the guanine nucleotide binding protein and, as a result, transmits one or more signals. Without wishing to be bound by a particular theory, it is possible that the disclosed taste modulator compositions act in part via activation of the calcium sensing receptor (CaSR).

Further, without wishing to be bound by a particular theory, it is possible that the disclosed taste modulator compositions, acting on the CaSR, may be involved in kokumi taste. In a 2012 paper (Maruyama et al., PLoS ONE, 2012, 7(4): e34489) the activity of the CaSR in taste bud cells was found to be associated with a taste which they refer to as "kokumi taste". In the field of food chemistry and biochemistry, substances having specific tastes have been used for many years. In particular, substances having the five basic tastes, namely, sweet, salty, sour, bitter, and umami (a delicious taste) have been widely used as seasonings. Substances which enhance these basic tastes have also been widely used. One taste that does not fall within these five basic tastes is "kokumi". Kokumi means a taste that is not one of the five basic tastes. Kokumi is a taste that not only enhances the five basic tastes but also enhances the marginal tastes of the basic tastes, such as thickness, growth (mouthfulness), continuity, and harmony. Several methods for imparting kokumi have been reported so far. Substances that have been reported to impart kokumi include glutathione (e.g., Japanese Patent No. 1464928), heated products of gelatin and tropomyosin (e.g., Japanese Patent Laid-open Publication (KOKAI) No. 10-276709), sulfone group-containing compounds (e.g., Japanese Patent Laid-open Publication (KOKAI) No. 8-289760), a peptide containing the Asn-His sequence (e.g., WO2004/096836), and so forth.

Accordingly, without wishing to be bound by a particular theory, improvement in the Taste Quality metric by the disclosed taste modulator compositions herein is via kokumi taste mediated at least in part via the CaSR.

In various aspects, a suitable additional CaSR modulator, e.g., a CaSR agonist, positive allosteric modulator, or combinations thereof, can be used in the various disclosed compositions. For example, a suitable additional CaSR modulator can be used to replace one or more of the taste modulator component, e.g., a first salt, a second salt, and the like. Alternatively, a suitable additional CaSR modulator can be an optional additional component in a disclosed taste modulator composition and by addition thereof decrease the amount of the taste modulator component, e.g., a first salt, a second salt, and the like, used compared to a composition that does not comprise a suitable additional CaSR modulator. Although it is understood that a taste modulator component, taste modulator component, e.g., a first salt, a second salt, and the like, may act at or bind to the CaSR, in the present context, "the suitable additional CaSR modulator" is understood to be a salt, compound, or molecular entity other than a first salt, second salt, third salt, or fourth salt as described herein above. That is, a suitable additional CaSR modulator can be any known CaSR agonist, CaSR positive allosteric modulator, or combination thereof - as known to the skilled artisan - that is a disclosed first salt, second salt, third salt, or fourth salt.

Exemplary, but non-limiting suitable additional CaSR modulators include creatine, spermine, spermidine, putrescine, L-glutathione, neomycin, poly-L-arginine, cinacalcet, calindol, an aluminum salt, an iron salt, a gadolinium salt, a zinc salt, a strontium salt, or combinations thereof. Further exemplary, but non-limiting suitable CaSR modulator includes a peptide that is acts at the CaSR such as a di-, tri-, and tetra-peptide such as Glu-Asp, Glu-Glu, Asp-Glu, Thr-Glu, Asp-Glu-Ser, Glu-Gly-Ser, Asp-Asp-Asp-Asp, and others as known to the skilled artisan. The peptide can be a suitable di-peptide upto an octapeptide, such as Lys-Gly-Asp-Glu-Glu-Ser-Leu-Ala. In some aspects, the peptide can be γ-glutamyl peptide that is a di-peptide to an octapeptide, i.e., a peptide of 2-8 amino acids having a γ-glutamyl residue, including, but not limited to γ-Glu-Ala, γ-Glu-Val, γ-Glu-Cys, γ-Glu-Abu-Gly (Abu = alphabutyric acid), γ-Glu-Val-Gly, γ-Glu-Ser, γ-Glu-Thr, γ-Glu-Glu, and others.

Further exemplary, but non-limiting suitable additional CaSR modulator includes a polyamine such as an organic compound having two or more primary amino groups, e.g., putrescine, cadaverine, spermidine, spermine, or combinations thereof. The polyamine can be a branched or cyclic polyamine. In some instances, it may be preferable to use a cyclic polyamine.

Further exemplary, but non-limiting suitable additional CaSR modulator includes an aminoglycoside antibiotics such as amikacin, gentamicin, kanamycin, neomycin, netilmicin, paromomycin, streptomycin, tobramycin, apramycin, or combinations thereof.

Further exemplary, but non-limiting suitable additional CaSR modulator includes an allosterically active L-amino acid such as an aromatic or small aliphatic L-amino acid, such as Phe, Tyr, Trp, Gly, Ala, Val, Leu, Ile, or combinations thereof.

The CaSR can include isolated or recombinant calcium-sensing receptors or cells expressing a calcium-sensing receptor, e.g., a CaSR having an amino acid sequence corresponding to a described CaSR, e.g., GenBank Accession No. NM_000388. In certain aspects, the calcium-sensing receptor for use in the disclosed methods can have the amino acid sequence corresponding to a described CaSR, e.g., GenBank Accession No. NM_000388, or a fragment or variant thereof. In certain aspects, the calcium-sensing receptor can have at least 85%, at least 90%, at least 91%, at least 92%, at least 93%, at least 94%, at least 95%, at least 96%, at least 97%, at least 98% or at least 99% identity to the amino acid sequence corresponding to a described CaSR, e.g., GenBank Accession No. NM_000388, or a fragment or variant thereof. In some aspects, the calcium-sensing receptor for use in the disclosed method can have the nucleotide sequence corresponding to a described CaSR, e.g., GenBank Accession No. NM_000388,, or a fragment or variant thereof. In certain aspects, the calcium-sensing receptor for use in the presently disclosed subject matter can include a receptor comprising a nucleotide sequence having at least 85%, at least 90%, at least 91%, at least 92%, at least 93%, at least 94%, at least 95%, at least 96%, at least 97%, at least 98% or at least 99% identity to a nucleic acid sequence corresponding to a described CaSR, e.g., GenBank Accession No. NM_000388,, or a fragment or variant thereof.

### Sweetening Agents

The sweetening agent used in the disclosed sweetener compositions can be a single sweetening agent or mixture of sweetening agents. It is understood that a natural sweetener, a synthetic sweetener, a semi-synthetic sweetener, and combinations thereof, are all within the scope of the disclosed sweetener compositions. Natural sweeteners can include, but are not limited to, natural HP sweeteners, natural polyol sweeteners, natural protein sweeteners, and/or natural carbohydrate sweeteners.

Certain naturally-occurring terpene glycosides are both potently sweet and non-calorific. For these reasons, terpene glycosides are very attractive for use as a sweetening agent in the food, beverage and dietary supplement industries. Accordingly, in various aspects, the disclosed sweetening agent can comprise a naturally occurring terpene glycoside derived from or present in a plant.

In a further aspects the sweetening agent can be a natural HP sweetener such as a *Stevia rebaudiana-derived* sweetener (i.e., a stevia sweetener), a *Siraitia grosvenorii-derived* sweetener, a protein sweetener, or combinations thereof.

*Stevia* is a genus of about 240 species of herbs and shrubs in the sunflower family (Asteraceae), native to subtropical and tropical regions from western North America to South America. The plant has been successfully grown under a wide range of conditions from its native subtropics to the cold northern latitudes. Steviol glycosides have zero calories and can be used wherever sugar is used. They are ideal for diabetic and low calorie diets. In addition, the sweet steviol glycosides possess functional and sensory properties superior to those of many high potency sweeteners.

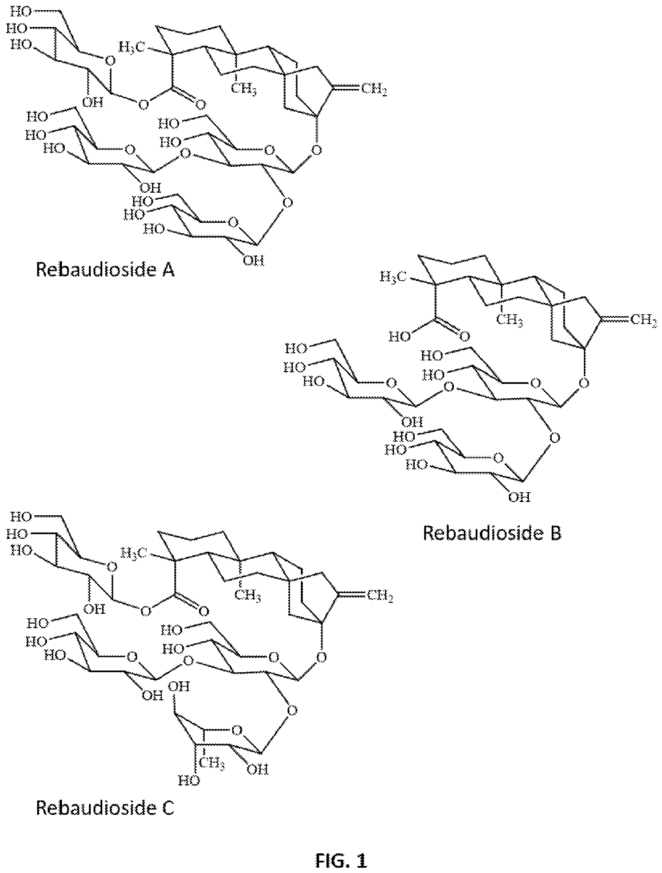

The species *Stevia rebaudiana,* commonly known as sweetleaf, sweet leaf, sugarleaf, or simply *stevia,* is a perennial shrub of the Asteraceae (Compositae) family native to certain regions of South America widely grown for its sweet leaves. *Stevia rebaudiana* is best known for its sweetness, although the genus includes other members (e.g., *S*. *eupatoria, S*. *ovata, S plummerae, S. salicifolia,* and *S*. *serrata*), which may also produce sweet tasting glycosides. The leaves have been traditionally used for hundreds of years in Paraguay and Brazil to sweeten local beverages, foods and medicines. *Stevia*-based sweeteners can be obtained by extracting one or more sweet compounds from the leaves. Many of these compounds are steviol glycosides. These can be purified from the leaves in various ways, including as extracts. As sweeteners and sugar substitutes, many steviol glycoside extracts have a slower sweetness onset and longer duration than that of sugar. Some of the extracts may have a bitter or licorice-like aftertaste, particularly at high concentrations, hence the usefulness of the presently disclosed taste modulators. Examples of steviol glycosides are described in WO 2013/096420 (see, e.g., listing in FIG. 1); in Ohta et al., "Characterization of Novel Steviol Glycosides from Leaves of Stevia rebaudiana Morita," J. Appl. Glycosi., 57, 199-209 (2010) (See, e.g., Table 5 at p. 204); and in G. J. Gerwig et al., "Stevia Glycosides: Chemical and Enzymatic Modifications of Their Carbohydrate Moieties to Improve the Sweet-Tasting Quality", Chapter 1 in Advances in Carbohydrate Chemistry and Biochemistry, 2016, 73, pp. 1-72.

*Stevia rebaudiana* Bertoni, as one example, is a perennial shrub of the Asteraceae (Compositae) family native to certain regions of South America. Its leaves have been traditionally used for hundreds of years in Paraguay and Brazil to sweeten local teas and medicines. The plant is commercially cultivated in Japan, Singapore, Taiwan, Malaysia, South Korea, China, Israel, India, Brazil, Australia and Paraguay. Other varieties such as *Stevia rebaudiana.* Morita and the like, also are known.

The *Stevia rebaudiana* plant contain a mixture of different diterpene glycosides that can accumulate in leaves in an amount ranging up to about 10 to 20% of the total dry weight. These diterpene glycosides are about 150 to 450 times more potent than sugar. Structurally, the diterpene glycosides are characterized by a single aglycone, steviol, and differ by the presence of varying carbohydrate residues at positions C13 and C19 (for example, see also PCT Patent Publication WO 20013/096420). Typically, on a dry weight basis, the four major steviol glycosides found in the leaves of *Stevia* are Dulcoside A (0.3%), Rebaudioside C (0.6-1.0%), Rebaudioside A (3.8%) and Stevioside (9.1%). Other glycosides identified in *Stevia* extract include one or more of Rebaudioside B, D, E, F, G, H, I, J, K, L, M, N, O, Steviolbioside and Rubusoside. The leaves of other cultivars of *Stevia* are able to accumulate up to 10-20% (on dry weight basis) steviol glycosides. The major glycosides found in *Stevia* leaves are Rebaudioside A (2-10%), stevioside (2-10%), and Rebaudioside C (1-2%). Other glycosides such as Rebaudioside B, D, E, and F, Steviolbioside and Rubusoside are found at much lower levels (approx. 0-0.2%). As used herein, the term "REB" is used as a shorthand for rebaudioside. For example, REBN refers to Rebaudioside N.

Steviol glycosides include steviol glycoside compositions comprising at least 95 wt% of steviol glycosides comprising at least 50 wt% of Rebaudioside A and the balance comprising a mixture of compounds comprising a steviol backbone conjugated to any number or combination of the principal sugar moieties, such as glucose, rhamnose, xylose, fructose, arabinose, galactose and deoxyglucose, in any of the orientations occurring in the leaves of *Stevia rebaudiana* Bertoni in accordance with the JECFA 2017 definition (i.e., as defined in the Residue Monograph prepared by the meeting of the Joint FAO/WHO Expert Committee on Food Additives (JECFA), 84th meeting 2017, "Steviol Glycosides from Stevia rebaudiana Bertoni").

Steviol glycosides differ from each other not only by molecular structure, but also by their taste properties. The physical and sensory properties are well studied for a number of the steviol glycosides. Steviol glycoside extracts can be on the order of 10× or even 500× times the sweetness potency of sugar. Because *stevia* glycoside extracts tend to have a reducing effect on blood glucose levels as compared to sucrose, glucose, and fructose, sweetener compositions based on one or more steviol glycosides are attractive to people on carbohydrate-controlled diets. For example, the sweetness potency of Stevioside is around 110-270 times higher than sucrose, Rebaudioside A between 150 and 320 times, and Rebaudioside C between 40-60 times more potent than sucrose. Dulcoside A is 30 times more potent than sucrose. The *Stevia* extract containing Rebaudioside A and Stevioside as major components showed sweetness potency around 250 times. Rebaudioside A has the least astringent, the least bitter, and the least persistent aftertaste thus possessing the most favorable sensory attributes in major steviol glycosides (Tanaka O. (1987) Improvement of taste of natural sweeteners. Pure Appl. Chem. 69:675-683; Phillips K. C. (1989) Stevia: steps in developing a new sweeteners. In: Grenby T. H. ed. Developments in sweeteners, vol. 3. Elsevier Applied Science, London. 1-43).

Previous studies show a certain correlation between number of glycosidic residues and taste quality of a steviol glycoside. When comparing steviol glycosides, rebaudioside A (G4, having 4 glucose residues) clearly surpasses stevioside and rebaudioside B (G3, each having 3 glucose residues) in taste quality. Steviolbioside and rubusoside (G2, each having 2 glucose residues) have a taste quality that is proven to be significantly inferior to that of stevioside (G3). In addition, the taste quality of rhamnosylated glycosides is inferior compared to that of glucosylated glycosides. Tanaka, O., "Improvement of Taste of Natural Sweeteners," Pure & Appl. Chem., Vol. 69, No. 4, pp. 675-683 (1997). Steviol glycosides with a greater number of glucose residues, for example, more than two glucose residues, show a better taste quality. Particularly mono- and di-glucosyl forms of stevioside (having 4 glucose residues (G4) and 5 glucose residues (G5) respectively) possess significantly better taste quality. Tanaka, O., "Improvement of Taste of Natural Sweeteners," Pure & Appl. Chem., Vol. 69, No. 4, pp. 675-683 (1997).

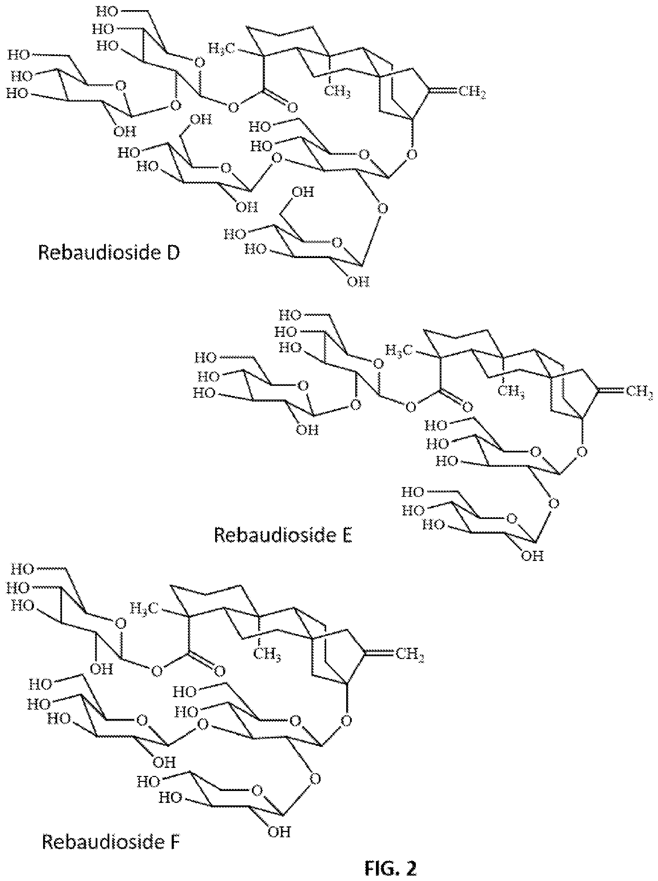

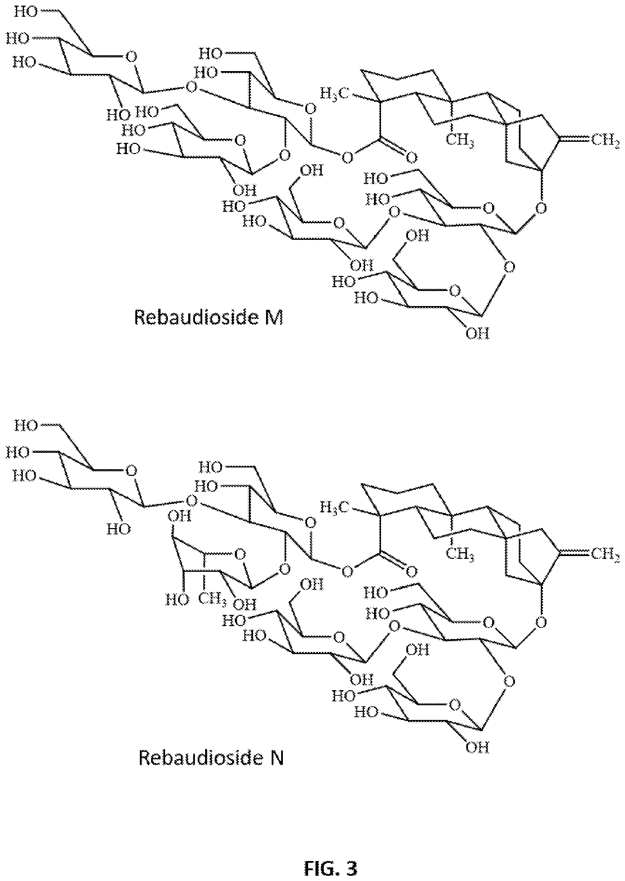

The chemical structures of some diterpene glycosides of *Stevia rebaudiana* are presented in FIGs. 1, 2 and 3. In a further aspect, a stevia sweetener can comprise one or more of the stevia sweeteners shown in Table 1 below and in FIGs. 1 and 2.

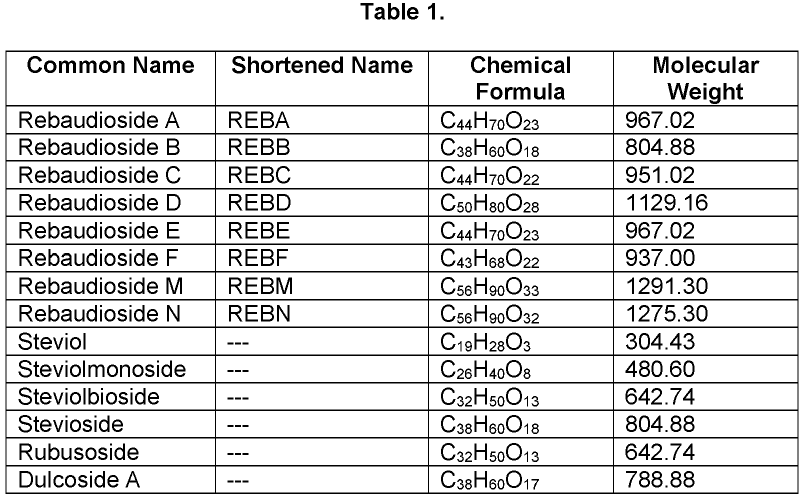

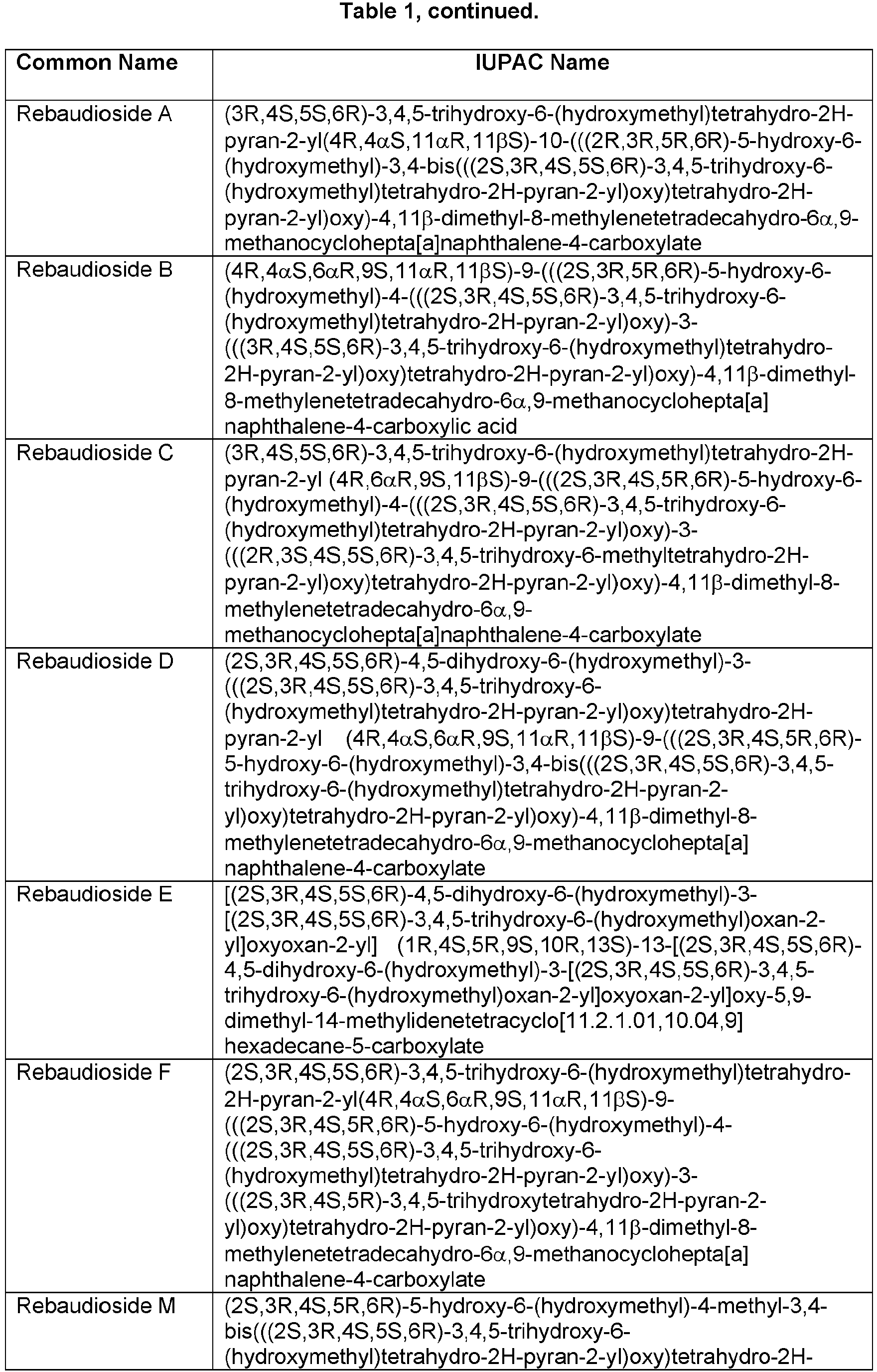

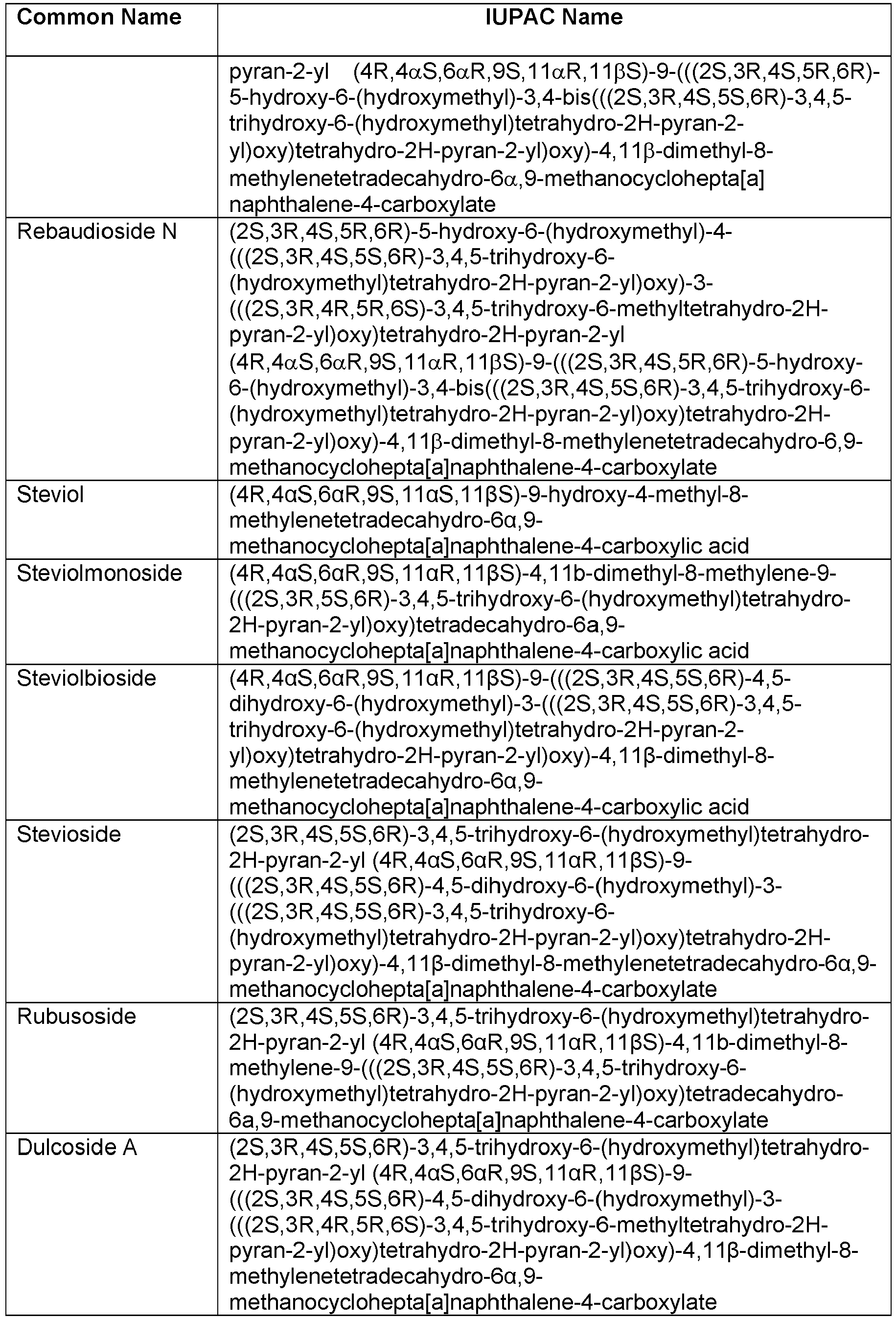

Steviol glycosides can be obtained from leaves in a variety of ways, including extraction techniques using either water or organic solvent extraction. Supercritical fluid extraction and steam distillation methods have also been described. Methods for the recovery of diterpenoid sweet glycosides from *Stevia rebaudiana* using supercritical CO₂, membrane technology, and water or organic solvents, such as methanol and ethanol, can also be used. Methods for the extraction and purification of sweet glycosides from the *Stevia Rebaudiana* plant using water and/or organic solvents are described in, for example, U.S. Pat. Nos. 4,361,697; 4,082,858; 4,892,938; 5,972,120; 5,962,678; 7,838,044 and 7,862,845. However, even in a highly purified state, steviol glycosides still possess undesirable taste attributes such as bitterness, sweet aftertaste, licorice flavor, etc. It was shown that these flavor notes become more prominent as the concentration of steviol glycosides increases (Prakash I., DuBois G. E., Clos J. F., Wilkens K. L., Fosdick L. E. (2008) Development of Rebiana, a natural, HP sweetener. Food Chem. Toxicol., 46, S75-S82.).

Rebaudioside B (CAS No: 58543-17-2), or REBB, also known as stevioside A₄(Kennelly E. J. (2002) Constituents of Stevia Rebaudiana In Stevia: The genus Stevia, Kinghom A. D. (Ed), Taylor & Francis, London, p. 71), is one of the sweet glycosides found in *Stevia Rebaudiana.* Sensory evaluations show that REBB was approximately 300-350 times more potent than sucrose, while for REBA this value was approximately 350-450 (Crammer, B. and Ikan, R. (1986) Sweet glycosides from the Stevia plant. Chemistry in Britain 22, 915-916, and 918). It was believed that REBB forms from partial hydrolysis of Rebaudioside A during the extraction process (Kobayashi, M., Horikawa, S., Degrandi, I. H., Ueno, J. and Mitsuhashi, H. (1977) Dulcosides A and B, new diterpenoid glycosides from Stevia Rebaudiana. Phytochemistry 16, 1405-1408).

However further research shows that REBB occurs naturally in the leaves of *Stevia Rebaudiana* and currently it is one of nine steviol glycosides recognized by FAO/JECFA (United Nations' Food and Agriculture Organization/Joint Expert Committee on Food Additives) in calculating total steviol glycosides' content in commercial steviol glycosides preparations (FAO JECFA (2010) Steviol Glycosides, Compendium of Food Additive Specifications, FAO JECFA Monographs 10, 17-21). On the other hand, the water solubility of REBB is reported to be about 0.1% (Kinghorn A. D. (2002) Constituents of Stevia Rebaudiana In Stevia: The genus Stevia, Kinghorn A. D. (Ed), Taylor & Francis, London, p. 8). In many food processes where highly concentrated ingredients are used, a highly soluble form of REBB can be desirable. Rebaudioside D (CAS No: 63279-13-0), is one of the sweet glycosides found in *Stevia rebaudiana.* Studies have shown that highly purified forms of Rebaudioside D (REBD) possess a very desirable taste profile, almost lacking the bitterness and lingering licorice aftertaste typical for other steviol glycosides.

It is known that some of the undesired taste attributes associated with steviol glycoside molecules can be substantially reduced by the reaction of intermolecular transglycosylation of various enzymes, upon which the attachment of new carbohydrates at positions C13 and C19 of steviol glycosides takes place. The effect of adding glucose molecules to purified stevioside molecules by transglycosylation was previously evaluated (Tanaka, O., "Improvement of Taste of Natural Sweeteners," Pure & Appl. Chem., Vol. 69, No. 4, pp. 675-683 (1997)). The resulting glucosylated steviosides were evaluated for their sweetness and taste quality and it was observed that the improvement of taste quality was greater when the glucose units were added to the C19 position rather than at the C13 position.

Various enzymes have been used to conduct such transglycosylation. Pullulanase, isomaltase (Lobov, S.V. et al., "Enzymic Production of Sweet Stevioside Derivatives: Transglucosylation by Glucosidases," Agric. Biol. Chem., Vol. 55, No. 12, pp. 2959-2965 (1991)), β-galactosidase (Kitahata, S. et al., "Production of Rubusoside Derivatives by Transgalactosylation of Various β-Galactosidases," Agric. Biol. Chem., Vol. 53, No. 1 1, pp. 2923-2928 (1989)), and dextrine saccharase (Yamamoto, K. et al., Biosci. Biotech. Biochem., Vol. 58, No. 9, pp. 1657-1661 (1994)) were used as enzymes with pullulan, maltose, lactose, and partially hydrolyzed starch being donors. The transglucosylation of steviol glycosides was also achieved by the action of cyclodextrin glucanotransferases (CGTase). The obtained sweeteners possessed improved sweetness without bitterness and licorice taste (U.S. Pat. Nos. 4,219,571, 7,838,044, and 7,807,206).

It has been observed that an increase in the number of glucose units in steviol glycoside molecules (for example, from stevioside to Rebaudioside A), is associated with an increase in the sweetness intensity and improvement in the sweetness profile (taste). It is known that the sweetness quality generally improves with the addition of glucose units. The number of glucose units in a glucosylated steviol glycoside can be as described in International Patent Publ. No. WO2012129451A1, e.g., at least one glucose unit, at least one glucose units, or at least one glucose units. In some instances, the least one glucose unit, at least one glucose units, or at least one glucose units is at the C-13, C-19, or both the C-13 and C-19 of the glucosylated steviol glycoside. In other instances, at least one glucose unit occurs at position C-19 of the glucosylated steviol glycoside.

The fruit of the Cucurbitaceae family is one source for naturally-occurring terpene glycosides. An example of such fruit is monk fruit, also known by its Chinese name luo han guo (*Siraitia grosvenorii,* formerly known as *Momordica grosvenorii*)*.* Monk fruit is grown in the South East provinces of China, mainly in the Guangxi region. This fruit has been cultivated and used for hundreds of years as a traditional Chinese remedy for coughs and congestion of the lungs, and also as a sweetener and flavoring agent in soups and teas.

Monk fruit and some other fruits of the Cucurbitaceae family contain terpene glycosides, such as mogrosides and siamenosides, which are typically present at a level of around 1% in the fleshy part of the fruit. These terpene glycosides have been described and characterized in Matsumoto et al., Chem. Pharm. Bull., 38(7), 2030-2032 (1990). The most abundant mogroside in monk fruit is mogroside V, which has been estimated to have a sweetness of approximately 250 times cane sugar on a weight basis. The fruit has terpene glycosides, wherein at least one of the terpene glycosides is mogroside V. The fruit of the Cucurbitaceae family may be monk fruit or other terpene glycoside-containing fruits. The juice obtained from fruit of the Cucurbitaceae family also has terpene glycosides, wherein at least one of the terpene glycosides is mogroside V. The juice may be a fruit juice, a juice concentrate, or a diluted juice. In one aspect, the sweet juice composition produced from the method retains at least about 20%, 25%, 30%, 35%, 40%, 45%, 50%, 55%, 60%, 65%, 70% on a dry weight basis, as determined by HPLC, of mogroside V from the juice; or a range of mogroside V on a dry weight basis comprising as an lower and upper limit two values selected from the foregoing values.

Monk fruit and other terpene glycoside-containing fruits of the Cucurbitaceae family, although sweet, are generally unsuitable for widespread use as a non-nutritive sweetener without additional processing. Raw fruit of the Cucurbitaceae family has a tendency to easily form off-flavors, and pectin in the fruit may cause gelling. The fruit can be preserved by drying, but this can cause the formation of other undesirable bitter, astringent and cooked flavors. Existing sweet juice compositions derived from monk fruit and other terpene glycoside-containing fruits of the Cucurbitaceae family suffer from the disadvantages of having a brown/yellow color, poor stability and noticeable undesirable flavors.

Various methods and techniques are currently known in the art to remove off-flavor components from the juice of monk fruit and other terpene glycoside-containing fruits of the Cucurbitaceae family; however, these methods also remove significant amounts of mogrosides from the juice. For example, see U.S. Pat. No. 5,411,755; U.S. Patent Application Nos. 2009/0196966 and 2009/0311404. Other methods of producing a sweet juice with a clean flavor from monk fruit and other terpene glycoside-containing fruits of the Cucurbitaceae family containing terpene glycosides have been reported comprising utilizing a cation exchange resin and an anion exchange resin, either as separate resins or as a mixed bed of cation and anion exchange resins, to produce a sweet juice composition. For example, see U.S. Patent Application No. 2018/0000140. This latter method can be used to purify juice obtained from monk fruit; however, juice from other fruits comprise terpene glycosides, e.g., mogroside V or a terpene glycoside-rich fruit or mogroside V-rich fruit. Suitable fruits may be from a plant of the family Cucurbitaceae, and more specifically, from tribe Jollifieae, subtribe Thladianthinae, and more even specifically, genus *Siraitia.* For example, the fruit may be from a plant selected from *Siraitia grosvenorii, Siraitia siamensis, Siraitia silomaradjae, Siraitia sikkimensis, Siraitia africana, Siraitia borneensis,* and *Siraitia taiwaniana.* It should be understood that the terpene glycoside content, including the mogroside V content, after purification by the method disclosed U.S. Patent Application No. 2018/0000140, or any other similar method, may vary depending on numerous factors, including the composition of the juice, the type of ion exchange resins selected, and conditions under which the ion exchange resins are used.

In various aspects, a method of purifying a monk fruit juice, extract, composition, or mixture can remove, one or more compounds that contribute to grassy or earthy flavors or odors and bitterness. Such compounds may be selected from, for example, melanoidins, peptides, terpenoids, phenols (including, for example, polyphenols, phenolic oligomers, condensed polyphenols), and terpene glycosides (other than sweet-tasting terpene glycosides described above, including for example mogroside V, mogroside IV, 11-oxo-mogroside V, mogroside VI, and siamenoside I).

In one aspect, the compound is a bitter-tasting melanoidin. In another aspect, the compound is a bitter-tasting peptide. In yet another aspect, the compound is a bitter-tasting terpenoid. In yet another aspect, the compound is a bitter-tasting phenol. In yet another aspect, the compound is a bitter-tasting polyphenol. In one aspect, the compound is a bitter-tasting phenolic oligomer. In another aspect, the compound is a bitter-tasting condensed polyphenol. In yet another aspect, the compound is a bitter-tasting terpene glycoside (other than sweet-tasting terpene glycosides described above, including for example mogroside V, mogroside IV, 11-oxo-mogroside V, mogroside VI, and siamenoside I).

In certain aspects, the methods described herein remove at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, at least 95%, at least 99%, or about 100% of one or more of the bitter-tasting compounds described above on a dry weight basis as determined by HPLC, from the juice (before contact with the resins) to produce the sweet juice composition.

A monk fruit juice, extract, composition, or mixture useful in the any of the disclosed compositions, mixtures, and formulations may be obtained from commercially available source or from monk fruit or other terpene glycoside-containing fruits using any methods known in the art, such as those methods described above, and others as may be known to the skilled artisan. The juice to be purified according to the methods described herein contains one or more terpene glycosides. In certain aspects, at least one of the terpene glycosides is a mogroside, including, but not limited to, mogroside V.

Mogrosides generally have varying number of glucose units, from 2 to 6, attached to carbon 3 and carbon 24 on a triterpene backbone. Mogrosides may include, for example, mogroside II, mogroside III, mogroside IV, mogroside V, mogroside VI, and any derivatives thereof. Mogroside II is the simplest mogroside, with one glucose residue attached to each of carbons 3 and 24. Mogroside III differs in having an additional glucose residue chained to carbon 24, while mogroside IV has 2-unit glucose side chains at both carbon 3 and 24. The progression continues through mogroside VI, which has 3 glucose residues attached at each of the two carbons at locations 3 and 24 of the triterpene backbone.

In other aspects, the one or more terpene glycoside in a monk fruit juice, extract, composition, or mixture are selected from mogroside V, mogroside IV, 11-oxo-mogroside V, and mogroside VI. In a preferred aspect, at least one of the terpene glycosides is mogroside V, which is also known as mogro-3-O-[β-D-glucopyranosyl (1-6)-β-D-glucopyranoside]-24-O-{[β-D-glucopyranosyl(1-2)]-[?-D-glucopyranosyl(1-6)]-β-D-gluco-pyranoside}.

The terpene glycosides present in a monk fruit juice, extract, composition, or mixture may include, for example, mogrosides and siamenosides. In one aspect, the terpene glycosides monk fruit juice, extract, composition, or mixture include mogroside V, mogroside IV, 11-oxo-mogroside V, mogroside VI, and siamenoside I. In another aspect, the terpene glycosides retained include mogroside V, and one or more of mogroside IV, 11-oxo-mogroside V, mogroside VI, and siamenoside I. In other aspects, a monk fruit juice, extract, composition, or mixture may contain other terpene glycosides such as siamenosides. For example, in certain aspects, in addition to mogroside V, one of the terpene glycosides is siamenoside I.

It should be understood that the amount of terpene glycosides present in a monk fruit juice, extract, composition, or mixture may vary depending on the type of fruit used, as well as the method and conditions used to obtain juice from the fruit. It should also be understood that sugars present in the juice to be purified are naturally found in the fruit. In certain aspects, the sugars naturally found in the fruit are simple sugars, including for example, monosaccharides and disaccharides. Such sugars naturally found in the fruit may include, for example, glucose, fructose, and sucrose.

One of skill in the art would recognize suitable analytical techniques that may be used to identify and quantify the amount of mogroside V and other terpene glycosides present in a monk fruit juice, extract, composition, or mixture. For example, in one aspect, high-performance liquid chromatography (also referred to as high-pressure liquid chromatography or HPLC) is a chromatographic technique that can be used for identifying, quantifying, and optionally purifying the individual terpene glycosides in the mixture.

Mogroside V content and terpene glycoside content may be expressed as a percentage on weight basis (% w/w). In one aspect, mogroside V content and terpene glycoside content are expressed as a percentage on dry weight basis. "Dry weight basis" refers to the weight of the mogroside V or terpene glycoside content divided by the weight of dry soluble solids in a given sample. In other aspects, mogroside V content and terpene glycoside content may be expressed in different units, such as percentage on wet weight basis or g/L. For example, one of skill in the art may measure mogroside V content and terpene glycoside content in a diluted juice sample using g/L, since volume of the juice can more easily be measured in a dilute sample. In contrast, one of skill in the art may measure mogroside V content and terpene glycoside content in a concentrated juice sample by weight. Further, one of skill in the art would be able to convert one unit to another.

The disclosed sweetening agent can further comprise one or more polyhydroxy C3-C12 compound. In a further aspect, the disclosed sweetening agent can further comprise a compound such as allulose, allose, sucrose, fructose, glucose, propylene glycol, glycerol, erythritol, arabinitol, maltitol, lactitol, sorbitol, mannitol, xylitol, tagatose, trehalose, galactose, rhamnose, cyclodextrin (e.g., α-cyclodextrin, β-cyclodextrin, and γ-cyclodextrin), ribulose, threose, arabinose, xylose, lyxose, allose, altrose, mannose, idose, lactose, maltose, invert sugar, isotrehalose, neotrehalose, palatinose isomaltulose, erythrose, deoxyribose, gulose, idose, talose, erythrulose, xylulose, allulose, turanose, cellobiose, glucosamine, mannosamine, fucose, fuculose, glucuronic acid, gluconic acid, glucono-lactone, abequose, galactosamine, xylo-oligosaccharides (xylotriose, xylobiose and the like), gentio-oligoscaccharides (gentiobiose, gentiotriose, gentiotetraose and the like), galacto-oligosaccharides, sorbose, ketotriose (dihydroxyacetone), aldotriose (glyceraldehyde), nigero-oligosaccharides, fructooligosaccharides (kestose, nystose and the like), maltotetraose, inaltotriol, tetrasaccharides, mannan-oligosaccharides, malto-oligosaccharides (maltotriose, maltotetraose, maltopentaose, maltohexaose, maltoheptaose and the like), dextrins, lactulose, melibiose, raffmose, rhamnose, ribose, isomerized, liquid sugars such as high fructose corn/starch syrup ("HFCS/HFSS," e.g., HFCS55, HFCS42, or HFCS90), coupling sugars, soybean oligosaccharides, glucose syrup and combinations thereof. It is understood that D- or L-configurations can be used when applicable.

In a further aspect, the disclosed sweetening agent can further comprise at least one carbohydrate sweetener selected from the group consisting of glucose, fructose, sucrose and combinations thereof, in an amount effective to provide a concentration from about 100 ppm to about 140,000 ppm when present in a sweetened composition, such as, for example, a beverage.

In a further aspect, the disclosed sweetening agent can further comprise one or more carbohydrate sweeteners selected from D-allose, D-allulose, L-ribose, D-tagatose, L-glucose, fucose, L-Arabinose, Turanose and combinations thereof, in an amount effective to provide a concentration from about 100 ppm to about 140,000 ppm when present in a sweetened composition, such as, for example, a beverage.

In a further aspect, the disclosed sweetening agent can be one or more synthetic sweeteners. As used herein, the phrase "synthetic sweetener" refers to any composition which is not found naturally in nature. Preferably, a synthetic sweetener has a sweetness potency greater than sucrose, fructose, and/or glucose, yet has less calories than sucrose, fructose, and/or glucose. Non-limiting examples of synthetic HP sweeteners suitable for aspects of this disclosure include sucralose, potassium acesulfame, acesulfame acid and salts thereof, aspartame, alitame, saccharin and salts thereof, neohesperidin dihydrochalcone, cyclamate, cyclamic acid and salts thereof, neotame, advantame, glucosylated steviol glycosides (GSGs) and combinations thereof. The synthetic sweetener is present in the disclosed sweetener composition in an amount effective to provide a concentration from about 0.3 ppm to about 3,500 ppm when present in a sweetened composition, such as, for example, a beverage.

In a further aspect, the disclosed sweetening agent can be one or more natural, HP sweeteners. Suitable natural HP sweeteners include, but are not limited to, rebaudioside A, rebaudioside B, rebaudioside C, rebaudioside D, rebaudioside E, rebaudioside F, rebaudioside I, rebaudioside H, rebaudioside J, rebaudioside L, rebaudioside K, rebaudioside J, rebaudioside M (also known as rebaudioside X), rebaudioside O, dulcoside A, dulcoside B, rubusoside, *stevia,* stevioside, mogroside IV, mogroside V, Luo Han Guo Sweetener (as noted above, this can be used interchangeably and is the same as Monk Fruit Sweetener or a *Siraitia grosvenorii*-derived sweetener), siratose, siamenoside, monatin and its salts (monatin SS, RR, RS, SR), curculin, glycyrrhizic acid and its salts, thaumatin, monellin, mabinlin, brazzein, hernandulcin, phyllodulcin, glycyphyllin, phloridzin, trilobatin, baiyunoside, osladin, polypodoside A, pterocaryoside A, pterocaryoside B, mukur ozioside, phlomisoside I, periandrin I, abrusoside A, steviolbioside and cyclocarioside I. The natural HP sweetener is present in the disclosed sweetener composition in an amount effective to provide a concentration from about 0.1 ppm to about 3,000 ppm when present in a sweetened composition, such as, for example, a beverage.

In a further aspect, the disclosed sweetening agent can comprise one or more chemically (including enzymatically) modified natural HP sweetener. Modified natural HP sweeteners include glycosylated natural HP sweetener such as glucosyl-, galactosyl-, fructosyl- derivatives containing 1-50 glycosidic residues. Glycosylated natural HP sweeteners may be prepared by enzymatic transglycosylation reaction catalyzed by various enzymes possessing transglycosylating activity. Others include one or more sugar alcohols obtained from sugarsuch by using hydrogenation techniques. In some aspects, a glycosylated natural HP sweetener can be a glucosylated steviol glycoside (which can also be referred to as a "GSG"). An exemplary, but not limiting, GSG that can be used in the disclosed sweetener compositions are those marketed by Almendra under the brand name of Steviaromes^{™}.

Non-limiting examples of HP sweeteners that can be utilized with the disclosed taste modulator compositions include rebaudioside A, rebaudioside B, rebaudioside C, rebaudioside D, rebaudioside E, rebaudioside F, dulcoside A, dulcoside B, rubusoside, stevia, stevioside, mogroside IV, and mogroside V, Luo Han Guo sweetener, siamenoside, monatin and its salts (monatin SS, RR, RS, SR), curculin, glycyrrhizic acid and its salts, thaumatin, monellin, mabinlin, brazzein, hernandulcin, phyllodulcin, glycyphyllin, phloridzin, trilobatin, baiyunoside, osladin, polypodoside A, pterocaryoside A, pterocaryoside B, mukur ozioside, phlomisoside 1, periandrin I, abrusoside A, and cyclocarioside I. HP sweeteners also include modified HP sweeteners. Modified HP sweeteners include HP sweeteners which have been altered naturally. For example, a modified HP sweeteners includes, but is not limited to, HP sweeteners which have been fermented, contacted with enzyme, or derivatized or substituted on the HP sweeteners.

In another aspect, the HP sweeteners may be selected from the group consisting of rebaudioside A, rebaudioside B, rebaudioside C, rebaudioside D, rebaudioside E, rebaudioside F, dulcoside A, dulcoside B, rubusoside, stevia, stevioside, mogroside IV, mogroside V, Luo Han Quo sweetener, siamenoside, monatin and its salts (monatin SS, RR, RS, SR), curculin, glycyrrhizic acid and its salts, thaumatin, monellin, mabinlin, brazzein, hernandulcin, phyllodulcin, glycyphyllin, phloridzin, trilobatin, baiyunoside, osladin, polypodoside A, pterocaryoside A, pterocaryoside B, mukur ozioside, phlomisoside I, periandrin I, abrusoside A, cyclocarioside I, saccharin and its salts, cyclamic acid and its salts, aspartame, aspartame-acesulfame salt, acesulfame potassium, sucralose, alitame, neotame, neohesperidin dihydrochalone (NHDC), advantame and combinations thereof.

In a further aspect, the disclosed sweetening agent can comprise REBA, REBB, REBC, REDD, REBE, REBF, REBM, REBN, or combinations thereof, and at least one other sweetener that in combination function as the sweetening agent (i.e. the substance or substances that provide sweetness) of a disclosed sweetener composition. The disclosed sweetener compositions often exhibit synergy when individual sweetener compounds are combined and have improved flavor and temporal profiles compared to each sweetener alone. One or more additional sweetening agents can be used in the disclosed sweetener compositions. In a yet further aspect, disclosed sweetener compositions comprise REBA and at least one additional sweetener. In a still further aspect, a sweeteners composition contains REBB and at least one additional sweetener. In an even further aspect, a sweeteners composition contains REBC and at least one additional sweetener. In a still further aspect, a sweeteners composition contains REBD and at least one additional sweetener. In a yet further aspect, a sweeteners composition contains REBE and at least one additional sweetener. In an even further aspect, a sweeteners composition contains REBF and at least one additional sweetener. In a still further aspect, a sweeteners composition contains REBM and at least one additional sweetener. In a yet further aspect, a sweeteners composition contains REBN and at least one additional sweetener.

### Umami Agents

Until the close of the twentieth century, taste was typically considered to be one of the five senses which may be subdivided into four basic tastes: sweet, sour, salty, and bitter. Even though this is the case, evidence began to accumulate for a fifth basic taste, savory taste. The first claim for savory taste was by Ikeda K. (J. Tokyo Chem. Soc. (1909) 30, 820-836) who isolated glutamic acid from a seaweed source and argued that its taste was unique. As the monosodium salt, the taste is savory and was given the Japanese word *umami* which means delicious. The literature on umami taste has been reviewed quite comprehensively (see Kawamura, Y. and Kare, M. R. (eds.). 1987. Umami: A Basic Taste, Marcel Dekker; and Bellisle F. (1999) Neurosci. Biobehav. Rev. 23, 423-438).

The umami agent used in the disclosed savory compositions can be any umami tastant, including compositions comprising a single umami agent or mixture of umami agents, including, but not limited to umami tastants and/or umami taste or savory flavor enhancers as described herein. In various aspects, the umami agent is an enhancer, modulator, ligand, activator, agonist or positive allosteric modulator of an umami receptor. A modulator is an agent that effects an increase or decrease of one or more of the following: the cell surface expression of a receptor, the binding of a ligand to a receptor, the intracellular response initiated by an active form of the receptor (either in the presence or absence or an agonist). The modulator can itself be an agonist that binds to the receptor, activates it and thereby modulates an increase in the cellular response. Modulators include various types of compounds, including small molecules, peptides, proteins, nucleic acids, antibodies or fragments thereof. These can be derived from various sources including synthetic or natural, extracts of natural material, for example from animal, mammalian, insect, plant, bacterial or fungal cell material or cultured cells, or conditioned medium of such cells. A ligand is an agent that binds to the receptor; it may be an agonist, partial agonist, enhancer, antagonist, or inverse agonist. An agonist is a ligand of a umami receptor that activates the receptor and increases an intracellular response when it binds to a receptor compared to the intracellular response in the absence of the agonist. Additionally or alternatively, an agonist may decrease internalization of a cell surface receptor such that the cell surface expression of a receptor is increased as compared to the number of cell surface receptors present on the surface of a cell in the absence of an agonist. A partial agonist is an agonist that only partially activates the receptor in comparison to other agonists that maximally activate the receptor. An enhancer increases the binding of an agonist to the receptor as compared to the binding of the agonist in the absence of enhancer, and/or increases the intracellular response induced by an agonist.

It is understood that a natural umami agent, a synthetic umami agent, a semi-synthetic umami agent, and combinations thereof, are all within the scope of the disclosed savory compositions. Umami agents can include glutamate, inosine monophosphate, guanosine monophosphate, and others as disclosed herein or known to the skilled artisan, and combinations thereof. Glutamate can be a zwitterionic or uncharged form of glutamate, or a salt of glutamate comprising glutamate anions in combination with any type of cations, e.g., sodium or potassium cations. In a particular example, glutamate can be monosodium glutamate. The umami agent can also be an extract or mixture, e.g., a plant or animal extract such as a paste or liquid extract that is enriched or have naturally high concentrations of glutamate and/or one or more nucleotides such as inosine monophosphate or guanosine monophosphate. In some instances, the umami agent can be a fermentation product.

Further non-limiting examples of umami tastants and/or umami taste or savory flavor enhancers include, but are not limited to: L-Glu (glutamic acid, glutamate, for example in the form of its salts such as monosodium glutamate, monopotassium glutamate, monoammonium glutamate, calcium diglutamate, magnesium diglutamate); L-Asp (L-aspartate, or a salt thereof); and 5'-ribonucleotides or their salts including, without limitation, calcium 5'-ribonucleotides, disodium 5'-ribonucleotides, and dipotassium 5'-ribonucleotides such as inosinic acid, guanylic acid, adenosinic acid, inosinates, guanylates, and adenylates, including, but not limited to, guanosine 5'-monophosphate, inosine 5'-monophosphate, and 5'-adenylate and their salts such as disodium guanylate, disodium inosinate, disodium adenylate; dipotassium guanylate, dipotassium inosinate, dipotassium adenylate, calcium guanylate, calcium inosinate, and calcium adenylate.

Further non-limiting examples of umami tastants and/or umami taste or savory flavor enhancers include, but are not limited to, natural substances that are derived from animal and vegetable raw materials as well as substances obtained through chemical synthesis, fermentation, genetic recombination, and the like and to use commercially available products, including autolyzed or hydrolyzed proteins such as autolyzed yeast, hydrolyzed yeast, hydrolyzed vegetable proteins; Koji-Aji (a nucleotide-rich yeast extract, with fermented wheat gluten and maltodextrin also containing glutamates produced by Ajinomoto Food Ingredients); and natural preparations or extracts containing one or more of the above, for example including, but not limited to, extracts, purees or concentrates of vegetables (including mushrooms, shiitake, soy, tomato, potato, whey, kelp/seaweeds), cereals, meat, fish (e.g. shellfish, masago), a dairy product such as milk or a cheese, and egg yolks, or derived from the relevant ingredient in fresh or in fermented, partially or fully hydrolyzed form (e.g. various hydrolysed proteins).

Further non-limiting examples of umami tastants and/or umami taste or savory flavor enhancers include, but are not limited to, those described in "Chemistry of Gustatory Stimuli", G.E. DuBois, et al. in The Senses: A Comprehensive Reference, Volume IV, Olfaction and Taste, David Smith and Stuart Firestein, Eds., Elsevier, London, United Kingdom, 2008, pp. 27-74 (e.g., see discussion of umami agonists on pp. 56-58) and "Chemical Modulators of Taste", J.A. DeSimone, et al., in Handbook of Olfaction and Gustation, 3rd Edition, R. L. Doty, Ed., John Wiley & Sons, Inc., Hoboken, NJ, 2015, pp. 665-683 (e.g., see discussion of umami PAMs and ago-enhancers on pp. 672-675).

Further non-limiting examples of umami tastants and/or umami taste or savory flavor enhancers include, but are not limited to, those described in U.S. Pat. Appl. Nos. 11/349,071; 11/349,041; and 10/913,303.

It is understood that umami tastants and/or umami taste or savory flavor enhancers, e.g., L-Glu, L-Asp, and/or 5'-ribonucleotides, are inclusive of at least one salt thereof such as inorganic salts such as alkaline metal salts including sodium salts and potassium salts; alkaline earth metal salts including magnesium salts and calcium salts; and ammonium salts and organic salts of basic amino acid salts including arginine salts, lysine salts, and ornithine salts; amine salts such as monoethanolamine salts and diethanolamine salts, and pyrimidine salts.

Regarding the amount of umami tastants and/or umami taste or savory flavor enhancers used in a beverage, food formulation, food product, and the like, it depends on the type of umami taste receptor agonist and salts used, but between about 0.01 wt%-5 wt% can be used.

### Sweetener Compositions

In various aspects, the present disclosure, relates to sweetener compositions comprising a sweetening agent and a taste modulator composition. The taste modulator composition improves key properties associated with many sweetening agents, including maximal sweetness response; mitigates flavor profile issues such as bitter and/or licorice-like off-tastes; improves sweetness onset and lingering sweet aftertaste properties; improves desensitization/adaptation profile issues; improves body/mouthfeel characteristics; and decreases bitterness off-taste, when present. As used herein, the term "off-taste(s)" refers to an amount or degree of taste that is not characteristically or usually found in a beverage product or a consumable product of the present disclosure. For example, an off-taste is an undesirable taste of a sweetened consumable to consumers, such as, a bitter taste, a licorice-like taste, a metallic taste, an aversive taste, an astringent taste, a delayed sweetness onset, a lingering sweet aftertaste, and the like, etc. In a further aspect, the disclosed sweetener compositions comprise a taste modulator component comprising a first salt having a first cation selected from Na⁺, K⁺, Ca²⁺, and Mg²⁺; and a sweetening agent. The taste modulator component of the disclosed sweetener compositions can optionally further comprise a second cation, a third cation, and a fourth cation.

As noted herein above, frequently HP sweeteners differ significantly from natural caloric sugars in ways that frustrate consumers and limit market penetration of products containing many HP sweeteners. Accepted metrics for commercial viability of a HP sweetener include: 1) Taste Quality; 2) Safety; 3) Solubility; 4) Stability; and 5) Cost. With regard to Taste Quality, HP sweeteners exhibit temporal profiles, maximal responses, flavor profiles, mouthfeels, and often desensitization/adaptation behaviors that differ from sugar. Specifically, HP sweeteners frequently exhibit one or more of the following problems or issues:
- Rₘ Problem: Insufficient Maximal Sweetness Response;
- Flavor Profile Problem: Bitter and Licorice-Like Off-tastes;
- Temporal Profile Problem: Delay in Sweetness Onset and Lingering Sweet Aftertaste (Sweetness Linger = SL);
- Desensitization/Adaptation Profile Problem: Sweetness causing a Desensitization of the Taste System and/or Reduction in Perceived Sweetness on Iterative Tasting; and
- Body/Mouthfeel Problem: Absence of Body/Mouthfeel common in Sugar-Sweetened Formulations.
Attempts have been made in the industry to address the Taste Quality issues associated with many HP sweeteners. However, although some of the currently available taste modulators are able to address the Taste Quality issues, these known taste modulators add unacceptable cost that make their use in common food and beverage products impractical; provide only limited modulation of Taste Quality problems, thus limiting their widespread use; are associated with regulatory or potential toxicity issues; or combinations of all these shortcomings.

The major application of HP sweeteners has been and will continue to be 0-calorie and calorie-reduced beverages. Thus, with regard to the cost metric discussed above, representative cost considerations for a HP sweetener can be assessed at a first approximation on the basis of cost impact for beverage use. Beverage manufacturers typically determine ingredient costs on a Cost per Unit Case (CUC) basis, where a Unit Case is 24 - 8 ounce bottles (ca. 5.7L). For purpose of illustration, in the US at the present time, the sweetener system CUCs for a sucrose-sweetened beverage is about $0.60, a high-fructose corn syrup-sweetened beverage is about $0.50, an aspartame-sweetened beverage is about $0.04 and an aspartame/acesulfame-K sweetened beverage is about $0.03.

In contrast, the use of many HP sweeteners cannot be used in typical beverage or food products because they often require a taste modulator to address the Taste Quality issues noted above. In particular, currently available taste modulators add significant cost to the use of many HP sweeteners. For example, a beverage using a sweetener formulation comprising rebaudioside A is understood in the industry to require the use of a taste modulator such as meso-erythritol in order to achieve desired Taste Quality metrics described above. However, at the levels required for beverage use, a rebaudioside A/meso-erythritol formulation is estimated to cost about $1.20 to about $1.50 on a CUC basis. Thus, although the use of a natural sweetener, such as rebaudioside A, in a beverage product is highly desirable in many respects, the use in such a context is cost prohibitive.

The amount or relative amounts of the sweetening agent and the taste modulator in a disclosed sweetener composition are determined, in part, by the application or use of the disclosed sweetener composition and the product context. That is, the amount of the sweetening agent and the taste modulator in a disclosed sweetener composition in a beverage, a food product, a nutraceutical, a pharmaceutical, and the like will be determined by the requirements for sweetness intensity in a particular product use. In addition, the amount or relative amounts of the sweetening agent and the taste modulator in a disclosed sweetener composition is determined, in part, by established the Dietary Reference Intakes (DRIs) for salts used in the taste modulator, including various regulatory agencies and health or scientific bodies and organizations. For example, exemplary DRIs have been published by the Institute of Medicine of the National Academies of the United States (see: Dietary Reference Requirements: The Essential Guide to Nutrient Requirements, J. J. Otten, J. Pitzi Hellwig, L. D. Meyers, Eds., The National Academies Press, 2006, Washington, D.C.). Thus, the level of the salts (first salt, optional second salt, optional third salt, and optional fourth salt) need to be present in an effective amount to modulate the sweetening agent taste properties, i.e., appropriate mitigation of factors such as maximal sweetness response, bitter and/or licorice-like off-tastes, sweetness linger, desensitization and adaptation, and body/mouthfeel parameters, while at the same time, not presenting concerns with regard to DRIs. Representative DRls, as published by the Institute of Medicine of the National Academies of the United States, are given in Table 2 below.

**Table 2.**

| **Nutrient*** | **DRI** (mg/day) | | | |
|---|---|---|---|---|
| | **Male** | | **Female** | |
| **Sodium** | Age 9-50 | **1500** | Age 9-50 | **1500** |
| | Age 50-70 | 1300 | Age 50-70 | 1300 |
| | Age >70 | 1200 | Age >70 | 1200 |
| **Potassium** | Age 9->70 | **4700** | Age 9-13 | 4500 |
| | | | Age 14->70 | **4700** |
| **Magnesium** | Age 9-13 | 240 | Age 9-13 | 240 |
| | Age 14-18 | 410 | Age 14-18 | 360 |
| | Age 19-30 | 400 | Age 19-30 | 310 |
| | Age 31->70 | 420 | Age 31->70 | **320** |
| **Calcium** | Age 9-18 | 1300 | Age 9-18 | 1300 |
| | Age 19-70 | **1000** | Age 19-50 | **1000** |
| | Age >70 | 1200 | Age 51-70 | 1200 |
| | | | Age >70 | 1200 |
| **Chloride** | Age 9-50 | **2300** | Age 9-50 | **2300** |
| | Age 50-70 | 2000 | Age 50-70 | 2000 |
| | Age >70 | 1800 | Age >70 | 1800 |

| | | | | |
|---|---|---|---|---|
| * Assumes the nutrient is in the form of an ion. | | | | |

In various aspects, the sweetening agent is present in the disclosed sweetener compositions in an amount effective to provide a concentration when present in a beverage, food, nutraceutical, pharmaceutical, or cosmetic from about 1 mg/L to about 1000 mg/L; and wherein a total cation present in an amount effective to provide a concentration when present in a beverage, food, nutraceutical, pharmaceutical, or cosmetic less than or equal to 20% of the DRI provided by the Institute of Medicine of the National Academies of the United States; and wherein the total cation represents a sum of the first cation, and when present, the second cation, the third cation, and the fourth cation.

### Savory Compositions

The taste modulator composition improves key properties associated with many umami agents; mitigates flavor profile issues such as bitter off-tastes; and improves body/mouthfeel characteristics. As used herein, the term "off-taste(s)" refers to an amount or degree of taste that is not characteristically or usually found in a beverage product or a consumable product of the present disclosure.

In a further aspect, the disclosed savory compositions comprise a taste modulator component comprising a first salt having a first cation selected from Na⁺, K⁺, Ca²⁺, and Mg²⁺; and an umami agent. The taste modulator component of the disclosed savory compositions can optionally further comprise a second cation, a third cation, and a fourth cation.

In a further aspect, a savory composition can be a food product including, but not limited to, condiments, e.g. sauces, dips, seasoning and the like, savory products, cereal products, rice products, pasta products, ravioli, tapioca products, sago products, baker's products, biscuit products, pastry products, bread products, confectionery products, dessert products, honey products, treacle products, yeast products, mustard products, vinegar products, processed foods, cooked fruits and vegetable products, meat and meat products, meat analogues/substitutes, jellies, jams, fruit sauces, egg products, dairy products, cheese products, dairy substitute products, soy products, edible oils and fat products.

In a further aspect, a savory composition can be a savory product including, but not limited to, salty snacks (potato chips, crisps, nuts, tortilla-tostada, pretzels, cheese snacks, corn snacks, potato-snacks, ready-to-eat popcorn, microwaveable popcorn, pork rinds, nuts, crackers, cracker snacks, breakfast cereals, meats, aspic, cured meats (ham, bacon), luncheon/breakfast meats (hotdogs, cold cuts, sausage), tomato products, margarine, peanut butter, soup (clear, canned, cream, instant, UHT), canned vegetables, and pasta sauces.

In a further aspect, a savory composition can be a beverage product including, but not limited to, juices, fruit juices, vegetable juices, carbonated soft drinks, beer, wine, hot chocolate, tea and coffee.

### Flavoring Compositions, Flavor Modifier Compositions and Flavorings with Modifying Properties

The disclosed taste modulator compositions can be used as flavor or taste modifiers, such as a flavoring or flavoring agents and flavor or taste enhancers, more particularly, sweet taste modifiers, sweet flavoring agents, sweet flavor enhancers, for foods, beverages, and other comestible or orally administered medicinal or nutraceutical products or compositions. In some aspects, the disclosed taste modulator compositions can be used without a flavor, flavor modifier, flavor agent, flavor enhancer, or flavoring with modifying properties for comestible products. In other aspects, the disclosed taste modulator compositions are used with one or more a flavor, flavor modifier, flavor agent, flavor enhancer, or flavoring with modifying properties for comestible products. In a further aspect, the disclosed taste modulator compositions can be used in a flavoring with modifying properties composition comprising a disclosed modulator composition and one or more flavor, flavor modifier, flavor agent, flavor enhancer, or flavoring.

The suitable amount of the disclosed taste modulator compositions to use with one or more flavor, flavor modifier, flavor agent, flavor enhancer, or flavoring with modifying properties can be assessed and further optimized using a suitable sensory testing methodology, e.g., the sensory testing methodology described herein below for sensory assessment of sweetness. Moreover, such a sensory test methodology can be useful in identifying suitable disclosed taste modulator compositions (and concentrations of same) to be used in combination with flavor, flavor modifier, flavor agent, flavor enhancer, or flavoring with modifying properties. The sensory test methodology described herein below can be well quantified and controlled by tasting the candidate compounds in aqueous solutions, as compared to control aqueous solution, or alternatively by tasting the disclosed taste modulator compositions of the disclosure in actual food compositions.

In various aspects, the disclosed taste modulator compositions, either alone or in combination with one or more flavor, flavor modifier, flavor agent, flavor enhancer, or flavoring with modifying properties have application in foods, beverages and other comestible compositions wherein sweet compounds are conventionally utilized. These compositions include compositions for human and animal consumption. This includes food or drinks (liquids) for consumption by agricultural animals, pets and zoo animals. Those of ordinary skill in the art of preparing and selling comestible compositions (e.g., edible foods or beverages, or precursors or flavor modifiers thereof) are well aware of a large variety of classes, subclasses and species of the comestible compositions, and utilize well-known and recognized terms of art to refer to those comestible compositions while endeavoring to prepare and sell various of those comestible compositions. Such a list of terms of art is enumerated below, and it is specifically contemplated hereby that the disclosed taste modulator compositions could be used to modify or enhance the sweet flavors of the following list comestible compositions, either singly or in all reasonable combinations or mixtures thereof: one or more confectioneries, chocolate confectionery, tablets, boxed assortments, standard boxed assortments, twist wrapped miniatures, seasonal chocolate, chocolate with toys, other chocolate confectionery, mints, standard mints, power mints, boiled sweets, pastilles, gums, jellies and chews, toffees, caramels and nougat, medicated confectionery, lollipops, licorice, other sugar confectionery, gum, chewing gum, gum with one or more sweeteners, sugar-free gum, functional gum, bubble gum, bread, packaged/industrial bread, unpackaged/artisanal bread, pastries, cakes, packaged/industrial cakes, unpackaged/artisanal cakes, cookies, chocolate coated biscuits, sandwich biscuits, filled biscuits, savory biscuits and crackers, bread substitutes, breakfast cereals, cereals, family breakfast cereals, flakes, muesli, children's breakfast cereals, hot cereals, ice cream, impulse ice cream, single portion dairy ice cream, single portion water ice cream, multi-pack dairy ice cream, multi-pack water ice cream, take-home ice cream, take-home dairy ice cream, ice cream desserts, bulk ice cream, take-home water ice cream, fr ozen yogurt, artisanal ice cream, dairy products, milk, fresh/pasteurized milk, full fat fresh/pasteurized milk, semi skimmed fresh/pasteurized milk, full fat milk, semi skimmed milk, fat-free milk, goat milk, condensed/evaporated milk, plain condensed/evaporated milk, flavored, functional and other condensed milk, flavored milk drinks, dairy only flavored milk drinks, flavored milk drinks with fruit juice, soy milk, sour milk drinks, fermented dairy drinks, coffee whiteners, powder milk, flavored powder milk drinks, cream, cheese, processed cheese, spreadable processed cheese, non-spreadable processed cheese, unprocessed cheese, spreadable unprocessed cheese, hard cheese, packaged hard cheese, unpackaged hard cheese, yogurt, plain/natural yogurt, flavored yogurt, fruited yogurt, probiotic yogurt, drinking yogurt, regular drinking yogurt, probiotic drinking yogurt, chilled and shelf-stable desserts, dairy- based desserts, soy-based desserts, chilled snacks, sweet and savory snacks, fruit snacks, chips/crisps, extruded snacks, tortilla/corn chips, popcorn, pretzels, nuts, other sweet and savory snacks, snack bars, granola bars, breakfast bars, energy bars, fruit bars, other snack bars, meal replacement products, slimming products, convalescence drinks, ready meals, canned ready meals, fr ozen ready meals, dried ready meals, chilled ready meals, dinner mixes, fr ozen pizza, chilled pizza, soup, canned soup, dehydrated soup, instant soup, chilled soup, soup, fr ozen soup, pasta, canned pasta, dried pasta, chilled/fresh pasta, noodles, plain noodles, instant noodles, cups/bowl instant noodles, pouch instant noodles, chilled noodles, snack noodles, canned food, canned meat and meat products, canned fish/seafood, canned vegetables, canned tomatoes, canned beans, canned fruit, canned ready meals, canned soup, canned pasta, other canned foods, fr ozen food, fr ozen processed red meat, fr ozen processed poultry, fr ozen processed fish/seafood, fr ozen processed vegetables, fr ozen meat substitutes, fr ozen potatoes, oven baked potato chips, other oven baked potato products, non-oven fr ozen potatoes, fr ozen bakery products, fr ozen desserts, fr ozen ready meals, fr ozen pizza, fr ozen soup, fr ozen noodles, other fr ozen food, dried food, dessert mixes, dried ready meals, dehydrated soup, instant soup, dried pasta, plain noodles, instant noodles, cups/bowl instant noodles, pouch instant noodles, chilled food, chilled processed meats, chilled fish/seafood products, chilled processed fish, chilled coated fish, chilled smoked fish, chilled lunch kit, chilled ready meals, chilled pizza, chilled soup, chilled/fresh pasta, chilled noodles, oils and fats, olive oil, vegetable and Seed oil, cooking fats, butter, margarine, spreadable oils and fats, functional spreadable oils and fats, sauces, dressings and condiments, tomato pastes and purees, bouillon/stock cubes, stock cubes, gravy granules, liquid stocks, herbs and spices, fermented sauces, soy based sauces, pasta sauces, wet sauces, dry sauces/powder mixes, ketchup, mayonnaise, regular mayonnaise, mustard, salad dressings, regular salad dressings, low fat salad dressings, vinaigrettes, dips, pickled products, other sauces, dressings and condiments, baby food, milk formula, standard milk formula, follow-on milk formula, toddler milk formula, hypoallergenic milk formula, prepared baby food, dried baby food, other baby food, spreads, jams and preserves, honey, chocolate spreads, nut- based spreads, and yeast-based spreads.

In a further aspect, the disclosed taste modulator compositions can be used to modify or enhance the sweet flavor of one or more of the following sub-groups of comestible compositions: confectioneries, bakery products, ice creams, dairy products, sweet snacks, snack bars, meal replacement products, ready meals, soups, pastas, noodles, canned foods, fr ozen foods, dried foods, chilled foods, oils and fats, baby foods, or spreads, or a mixture thereof.

In general an ingestible composition will be produced that contains a sufficient amount of the disclosed taste modulator compositions described hereinabove to produce a composition having the desired flavor or taste characteristics such as "sweet" taste characteristics.

Typically at least a sweet flavor modulating amount, of one or more of the disclosed taste modulator compositions can be added to the comestible product, so that the sweet flavor modified comestible product has an increased sweet taste as compared to the comestible product prepared without the disclosed taste modulator compositions, as judged by human beings or animals in general, or in the case of formulations testing, as judged by a majority of a panel of human taste testers, via procedures described elsewhere herein.

The concentration of sweet flavor agent needed to modulate or improve the flavor of the comestible product or composition will of course vary dependent on many variables, including the specific type of ingestible composition, what sweet compounds are already present and the concentrations thereof, the amount of presence of other flavors with modifying properties, and the enhancer effect of the particular compound on such sweet compounds. As noted, an application of the disclosed taste modulator compositions is for modulating (inducing, enhancing or inhibiting) the sweet tastes or other taste properties of other natural or synthetic sweet tastants. A broad range of concentrations of the disclosed taste modulator compositions can be employed to provide such sweet taste enhancement as described herein elsewhere.

In a further aspect, the disclosed taste modulator compositions can be used to modify or enhance the umami flavor of one or more of the following sub-groups of comestible compositions: confectioneries, bakery products, ice creams, dairy products, snacks, snack bars, meal replacement products, ready meals, soups, pastas, noodles, canned foods, frozen foods, dried foods, chilled foods, oils and fats, baby foods, or spreads, or a mixture thereof.

In general an ingestible composition will be produced that contains a sufficient amount of the disclosed taste modulator compositions described hereinabove to produce a composition having the desired flavor or taste characteristics such as "umami" taste characteristics.

Typically at least a umami flavor modulating amount, of one or more of the disclosed taste modulator compositions can be added to the comestible product, so that the umami flavor modified comestible product has an increased umami taste as compared to the comestible product prepared without the disclosed taste modulator compositions, as judged by human beings or animals in general, or in the case of formulations testing, as judged by a majority of a panel of human taste testers, via procedures described elsewhere herein.

The concentration of umami flavor agent needed to modulate or improve the flavor of the comestible product or composition will of course vary dependent on many variables, including the specific type of ingestible composition, what umami compounds are already present and the concentrations thereof, the amount of presence of other flavors with modifying properties, and the enhancer effect of the particular compound on such umami compounds. As noted, an application of the disclosed taste modulator compositions is for modulating (inducing, enhancing or inhibiting) the umami tastes or other taste properties of other natural or synthetic umami tastants. A broad range of concentrations of the disclosed taste modulator compositions can be employed to provide such umami taste enhancement as described herein elsewhere.

Examples of foods and beverages wherein the disclosed taste modulator compositions may be incorporated included by way of example the Wet Soup Category, the Dehydrated and Culinary Food Category, the Beverage Category, the Fr ozen Food Category, the Snack Food Category, and seasonings or seasoning blends. "Wet Soup Category" means wet/liquid soups regardless of concentration or container, including fr ozen Soups. For the purpose of this definition soup(s) means a food prepared from meat, poultry, fish, vegetables, grains, fruit and other ingredients, cooked in a liquid which may include visible pieces of some or all of these ingredients. It may be clear (as a broth) or thick (as a chowder), smooth, pureed or chunky, ready-to-serve, semi- condensed or condensed and may be served hot or cold, as a first course or as the main course of a meal or as a between meal snack (sipped like a beverage). Soup may be used as an ingredient for preparing other meal components and may range from broths (consomme) to sauces (cream or cheese-based soups).

"Dehydrated and Culinary Food Category" means: (i) Cooking aid products such as: powders, granules, pastes, concentrated liquid products, including concentrated bouillon, bouillon and bouillon like products in pressed cubes, tablets or powder or granulated form, which are sold separately as a finished product or as an ingredient within a product, sauces and recipe mixes (regardless of technology); (ii) Meal solutions products such as: dehydrated and freeze dried soups, including dehydrated soup mixes, dehydrated instant soups, dehydrated ready-to-cook soups, dehydrated or ambient preparations of ready-made dishes, meals and single serve entrees including pasta, potato and rice dishes; and (iii) Meal embellishment products such as: condiments, marinades, salad dressings, salad toppings, dips, breading, batter mixes, shelf stable spreads, barbecue sauces, liquid recipe mixes, concentrates, sauces or sauce mixes, including recipe mixes for salad, sold as a finished product or as an ingredient within a product, whether dehydrated, liquid or fr ozen.

"Beverage Category" means beverages, beverage mixes and concentrates, including but not limited to, alcoholic and non-alcoholic ready to drink and dry powdered beverages. Other examples of foods and beverages wherein compounds according to the disclosure may be incorporated included by way of example carbonated and non-carbonated beverages, e.g., sodas, fruit or vegetable juices, alcoholic and non-alcoholic beverages, confectionary products, e.g., cakes, cookies, pies, candies, chewing gums, gelatins, ice creams, sorbets, puddings, jams, jellies, salad dressings, and other condiments, cereal, and other breakfast foods, canned fruits and fruit sauces and the like.

Additionally, the subject compounds can be used in flavor preparations to be added to foods and beverages. In preferred instances the composition will comprise another flavor or taste modifier such as a sweet tastant.

Accordingly, in some aspects, the disclosure relates to methods for modulating the sweet taste of a comestible product comprising: a) providing at least one comestible product, or a precursor thereof, and b) combining the comestible product or precursor thereof with at least a sweet flavor modulating amount of the disclosed taste modulator compositions, so as to form a modified comestible product.

The disclosure also relates to the modified comestible products produced by such processes, and similar processes for producing comestible products well known to those of ordinary skill in the art, especially if such compositions comprise other flavorings with modifying properties. The disclosed taste modulator compositions can be combined with or applied to the comestible or medicinal products or precursor thereof in any of innumerable ways known to cooks the world over, or producers of comestible or medicinal products. For example, the disclosed taste modulator compositions can be dissolved in or dispersed in or one of many known comestibly acceptable liquids, solids, or other carriers, such as water at neutral, acidic, or basic pH, fruit or vegetable juices, vinegar, marinades, beer, wine, natural water/fat emulsions such as milk or condensed milk, edible oils and shortenings, fatty acids, certain low molecular weight oligomers of propylene glycol, glyceryl esters of fatty acids, and dispersions or emulsions of such hydrophobic substances in aqueous media, salts such as sodium chloride, vegetable flours, solvents such as ethanol, solid edible diluents such as vegetable powders or flours, and the like, and then combined with precursors of the comestible or medicinal products, or applied directly to the comestible or medicinal products.

Steviol glycosides, stevia-derived sweeteners, and stevia-derived extracts provide sweetness and other taste attributes at a higher than certain threshold level of concentrations in water. Below the threshold level of concentration, the steviol glycosides, stevia-derived sweeteners, stevia-derived extracts, and their mixtures have no recognizable sweetness taste, but such stevia extract below the threshold level of significant sweetness recognition can be associated with sweet and flavor profile modification in food and beverage applications. Accordingly, in various aspects, the present disclosure pertains to flavorings with modifying properties comprising a disclosed taste modulator composition and at least one steviol glycoside, stevia-derived sweetener, stevia-derived extract, and combinations thereof, such that the at least one steviol glycoside, stevia-derived sweetener, stevia-derived extract, and combinations thereof is present in an amount less than 1.5 wt% sucrose equivalent. In some aspects, the least one steviol glycoside, stevia-derived sweetener, stevia-derived extract, and combinations thereof comprises one or more glucosylated steviol glycoside.

In other aspects, the present disclosure pertains to flavorings with modifying properties comprising a disclosed taste modulator composition and at least one *Siraitia grosvenorii* (*luo han guo* or monk fruit)-derived sweetener, extract, juice, and combinations thereof, such that the at least least one *Siraitia grosvenorii (luo han guo* or monk fruit)-derived sweetener, extract, juice, and combinations thereof is present in an amount less than 1.5 wt% sucrose equivalent.

In further aspects, the present disclosure pertains to flavorings with modifying properties comprising: (a) a disclosed taste modulator composition; (b) at least one *Siraitia grosvenorii* (*luo han guo* or monk fruit)-derived sweetener, extract, juice, and combinations thereof, such that the at least one *Siraitia grosvenorii* (*luo han guo* or monk fruit)-derived sweetener, extract, juice, and combinations thereof is present in an amount less than 1.5 wt% sucrose equivalent; and (c) at least one steviol glycoside, stevia-derived sweetener, stevia-derived extract, and combinations thereof, such that the at least one steviol glycoside, stevia-derived sweetener, stevia-derived extract, and combinations thereof is present in an amount less than 1.5 wt% sucrose equivalent. In some aspects, the least one steviol glycoside, stevia-derived sweetener, stevia-derived extract, and combinations thereof comprises one or more glucosylated steviol glycoside.

The present disclosure is directed to a taste and flavor modifying composition. The disclosed taste and flavor modifying composition, which can modify the intensity of a taste and/or a flavor in a food or beverage product, comprises a disclosed taste modulator composition and at least one steviol glycoside, stevia-derived sweetener, stevia-derived extract, and combinations thereof, comprising one or more steviol glycosides with other water soluble molecules derived from Stevia plant, such as non-limiting examples of plant glycosides, flavonoids, labdane diterpene, triterpenes.

The present disclosure is also directed to a food or beverage product having an intense taste and flavor profile, wherein the food or beverage product comprises a disclosed taste and flavor modifying composition, which can modify the intensity of a taste and/or a flavor in a food or beverage product, comprises a disclosed taste modulator composition and at least one steviol glycoside, stevia-derived sweetener, stevia-derived extract, and combinations thereof, comprising one or more steviol glycosides with other water soluble molecules derived from Stevia plant, such as non-limiting examples of plant glycosides, flavonoids, labdane diterpene, triterpenes. A wide range of food and beverage products, such as, but not limited to, carbonated soft drinks, fruit juices, dairy foods, dairy beverages, baked goods, cereal products, snack foods, and table top sweeteners, may be made in accordance with the present disclosure. The taste and flavor profile of a food or beverage product comprising a taste and flavor modifying composition, wherein the taste and flavor modifying composition comprising the stevia extract of steviol glycosides and water soluble molecules derived from stevia plant, may be more intense than a comparative taste and flavor profile of a comparative food or beverage product which does not include the taste and flavor modifying composition. Moreover, the mouthfeel and overall taste perception of a food or beverage product comprising the taste and flavor modifying composition, wherein the taste and flavor enhancing composition includes the complex mixture of steviol glycosides and water soluble molecules, may be improved in relation to a mouthfeel and overall taste perception of a comparative food or beverage product which does not include the taste and flavor enhancing composition.

The present disclosure is further directed to a method of increasing the taste and flavor intensity of a food or beverage product, comprising the step of adding a taste and flavor enhancing composition to the food or beverage product, wherein the taste and flavor modifying composition comprising the stevia extract of steviol glycosides and water soluble molecules derived from stevia plant. The present disclosure is also directed to a method of improving the organoleptic properties of a food or beverage product comprising a high fructose syrup, comprising the step of adding the taste and flavor modifying composition to the food or beverage product. For example, adding the taste and flavor modifying composition may cause the high fructose syrup, such as high fructose corn syrup, to taste more like sugar. Also, if the high fructose syrup is high fructose corn syrup 42 (HFCS 42), adding the taste and flavor enhancing composition may cause the HFCS 42 to taste more like high fructose corn syrup 55 (HFCS 55).

The present disclosure is further directed to a method of increasing the taste and flavor intensity of a medical food and pharma product, comprising the step of adding a taste and flavor modifying composition to the food or beverage product, wherein the taste and flavor modifying composition comprising the stevia extract of selected steviol glycosides and water soluble molecules derived from stevia plant. The present disclosure is also directed to a method of improving the organoleptic properties of a medical food or pharma product containing functional food ingredients like vitamins, minerals and amino acids, comprising the step of adding the taste and flavor modifying composition to the food or beverage product. For example, adding the taste and flavor modifying composition may cause the off-taste due to vitamins, mineral, amino acids and other non-limiting functional ingredients, to improve taste and palatability.

The present disclosure is also directed to a method of making a taste and flavor enhancing composition, comprising: extracting steviol glycosides and other water soluble molecules from leaves of a *Stevia rebaudiana* plant, and separating the excess steviol glycosides than the amount and type of steviol glycosides required to contribute the taste and flavor modifying characteristics of the stevia extract, and adding to the extract prepared a disclosed taste modulator composition. The present disclosure also pertains to kits for making a taste and flavor enhancing composition, comprising: (a) a disclosed taste modulator composition; and (b) instructions to utilize the disclosed taste modulator composition with one or more disclosed sweet flavorings, such as at least one *Siraitia grosvenorii* (*luo han guo* or monk fruit)-derived sweetener, extract, juice, and combinations thereof, such that the at least one *Siraitia grosvenorii (luo han guo* or monk fruit)-derived sweetener, extract, juice, and combinations thereof is present in an amount less than 1.5 wt% sucrose equivalent and/or at least one *Siraitia grosvenorii (luo han guo* or monk fruit)-derived sweetener, extract, juice, and combinations thereof, such that the at least one *Siraitia grosvenorii (luo han guo* or monk fruit)-derived sweetener, extract, juice, and combinations thereof is present in an amount less than 1.5 wt% sucrose equivalent. The kit can further comprise one or more disclosed sweet flavorings, such as at least one *Siraitia grosvenorii (luo han guo* or monk fruit)-derived sweetener, extract, juice, and combinations thereof, such that the at least one *Siraitia grosvenorii* (*luo han guo* or monk fruit)-derived sweetener, extract, juice, and combinations thereof and/or at least one *Siraitia grosvenorii (luo han guo* or monk fruit)-derived sweetener, extract, juice, and combinations thereof.

The present disclosure is also directed to a taste and flavor profile enhancing composition. The composition includes a disclosed glucosylated steviol glycoside composition and a disclosed taste modulator composition which can enhance the intensity of a taste and/or a flavor in a food or beverage product. In some aspects, the glucosylated steviol glycosides may include a plurality of glucose units. For example, the glucosylated steviol glycosides may include three, four, five, or more than five glucose units. As used herein, "a disclosed glucosylated steviol glycoside composition" refers to any glucosylated steviol composition comprise one or more steviol or steviol derivative as described herein throughout.

The present disclosure is also directed to a food or beverage product having an intense taste and flavor profile, wherein the food or beverage product includes a taste and flavor enhancing composition comprising a glucosylated steviol glycoside composition and a disclosed taste modulator composition. A wide range of food and beverage products, such as, but not limited to, carbonated soft drinks, fruit juices, dairy foods, dairy beverages, baked goods, cereal products, and table top sweeteners, may be made in accordance with the present disclosure. The taste and flavor profile of a food or beverage product including a taste and flavor enhancing composition, wherein the taste and flavor enhancing composition includes a disclosed glucosylated steviol glycoside composition and a disclosed taste modulator composition, may be more intense than a comparative taste and flavor profile of a comparative food or beverage product which does not include the taste and flavor enhancing composition. Moreover, the mouthfeel of a food or beverage product including the taste and flavor enhancing composition, wherein the taste and flavor enhancing composition includes a disclosed glucosylated steviol glycoside composition and a disclosed taste modulator composition, may be improved in relation to a mouthfeel of a comparative food or beverage product which does not include the taste and flavor enhancing composition.

The present disclosure is further directed to a method of increasing the taste and flavor intensity of a food or beverage product, including the step of adding a taste and flavor enhancing composition to the food or beverage product, wherein the taste and flavor enhancing composition includes a disclosed glucosylated steviol glycoside composition and a disclosed taste modulator composition. The present disclosure is also directed to a method of improving the organoleptic properties of a food or beverage product including a high fructose syrup, including the step of adding the taste and flavor enhancing composition to the food or beverage product. For example, adding the taste and flavor enhancing composition may cause the high fructose syrup, such as high fructose corn syrup, to taste more like sugar. Also, if the high fructose syrup is high fructose corn syrup 42 (HFCS 42), adding the taste and flavor enhancing composition may cause the HFCS 42 to taste more like high fructose corn syrup 55 (HFCS 55).

The present disclosure is further directed to a method of making a food or beverage product, including: adding a taste and flavor enhancing composition including a disclosed glucosylated steviol glycoside composition and a disclosed taste modulator composition, and adding a reduced amount of erythritol, wherein the reduced amount of erythritol is less than the amount of erythritol in a comparative food or beverage composition which does not include the taste and flavor enhancing composition. The mouthfeel of the food or beverage product is similar to the mouthfeel of the comparative food or beverage product, even though the comparative food or beverage product contains a higher level of erythritol.

The present disclosure is also directed to a taste and flavor profile enhancing composition. The composition includes a disclosed glucosylated steviol glycoside composition, a disclosed monk fruit composition, and a disclosed taste modulator composition which can enhance the intensity of a taste and/or a flavor in a food or beverage product. In some aspects, the glucosylated steviol glycosides may include a plurality of glucose units. For example, the glucosylated steviol glycosides may include three, four, five, or more than five glucose units. As used herein, "a disclosed glucosylated steviol glycoside composition" refers to any glucosylated steviol composition comprise one or more steviol or steviol derivative as described herein throughout. As used herein, "a disclosed monk fruit composition" refers to any monk fruit juice, extract, composition, or mixture, including a juice, extract, composition, or mixture comprising mogroside V, as described herein throughout.

The present disclosure is also directed to a food or beverage product having an intense taste and flavor profile, wherein the food or beverage product includes a taste and flavor enhancing composition comprising a glucosylated steviol glycoside composition and a disclosed taste modulator composition. A wide range of food and beverage products, such as, but not limited to, carbonated soft drinks, fruit juices, dairy foods, dairy beverages, baked goods, cereal products, and table top sweeteners, may be made in accordance with the present disclosure. The taste and flavor profile of a food or beverage product including a taste and flavor enhancing composition, wherein the taste and flavor enhancing composition includes a disclosed glucosylated steviol glycoside composition, a disclosed monk fruit composition, and a disclosed taste modulator composition, may be more intense than a comparative taste and flavor profile of a comparative food or beverage product which does not include the taste and flavor enhancing composition. Moreover, the mouthfeel of a food or beverage product including the taste and flavor enhancing composition, wherein the taste and flavor enhancing composition includes a disclosed glucosylated steviol glycoside composition, a disclosed monk fruit composition, and a disclosed taste modulator composition, may be improved in relation to a mouthfeel of a comparative food or beverage product which does not include the taste and flavor enhancing composition.

The present disclosure is further directed to a method of increasing the taste and flavor intensity of a food or beverage product, including the step of adding a taste and flavor enhancing composition to the food or beverage product, wherein the taste and flavor enhancing composition includes a disclosed glucosylated steviol glycoside composition, a disclosed monk fruit composition, and a disclosed taste modulator composition. The present disclosure is also directed to a method of improving the organoleptic properties of a food or beverage product including a high fructose syrup, including the step of adding the taste and flavor enhancing composition to the food or beverage product. For example, adding the taste and flavor enhancing composition may cause the high fructose syrup, such as high fructose corn syrup, to taste more like sugar. Also, if the high fructose syrup is high fructose corn syrup 42 (HFCS 42), adding the taste and flavor enhancing composition may cause the HFCS 42 to taste more like high fructose corn syrup 55 (HFCS 55).

The present disclosure is further directed to a method of making a food or beverage product, including: adding a taste and flavor enhancing composition including a disclosed glucosylated steviol glycoside composition, a disclosed monk fruit composition, and a disclosed taste modulator composition, and adding a reduced amount of erythritol, wherein the reduced amount of erythritol is less than the amount of erythritol in a comparative food or beverage composition which does not include the taste and flavor enhancing composition. The mouthfeel of the food or beverage product is similar to the mouthfeel of the comparative food or beverage product, even though the comparative food or beverage product contains a higher level of erythritol.

In a further aspect, the disclosed taste modulator compositions can be used to modify or enhance the flavor, e.g., sweet flavor and/or umami flavor of a food for specified health use, foods with health claims such as foods with nutrient function claims, nutritional supplements and medical foods.

### Methods of Making the Disclosed Sweetening Compositions

In various aspects, the present disclosure, relates to methods for making a disclosed sweetener composition comprising: mixing a taste modulator component comprising a first salt having a first cation selected from Na⁺, K⁺, Ca²⁺, and Mg²⁺; and a sweetening agent; wherein the mixing is carried out until a mixture of the taste modulator and the sweetening agent is essentially homogenous. In various aspects, the disclosed methods of making a disclosed sweetener composition can further comprise mixing a solvent with the taste modulator and the sweetening agent; and mixing the taste modulator, the sweetening agent, and the solvent until a solution or a suspension is essentially homogeneous. In a further aspect, the disclosed methods of making a disclosed sweetener composition can further comprise spray-drying or lyophilizing the solution or the suspension. In some aspects, the disclosed methods of making a disclosed sweetener composition can further comprise tableting the mixture of the taste modulator and the sweetening agent.

### Products Comprising the Disclosed Sweetener Compositions

In various aspects, the present disclosure, relates to products comprising a disclosed sweetening composition. In various aspects, the product can be a beverage, a food product, a nutraceutical, a concentrated sweetener composition, pharmaceutical, a dietary supplement, a dental hygienic composition, an edible gel composition, a cosmetic product, and a tabletop flavoring. In a further aspect, the present disclosure relates to a tabletop sweetener composition comprising a disclosed taste modulator composition and one or more disclosed sweetening agent.

As used herein, "food product" or "food item" refers to fruits, vegetables, juices, meat products such as ham, bacon and sausage; egg products, fruit concentrates, gelatins and gelatin-like products such as jams, jellies, preserves, and the like; milk products such as ice cream, sour cream, yogurt, and sherbet; icings, syrups including molasses; corn, wheat, rye, soybean, oat, rice and barley products, cereal products, nut meats and nut products, cakes, cookies, confectionaries such as candies, gums, fruit flavored drops, and chocolates, chewing gum, mints, creams, icing, ice cream, pies and breads. "Food product" or "food item" also refers to condiments such as herbs, spices and seasonings, flavor enhancers, such as monosodium glutamate. "Food product" or "food item" further refers to also includes prepared packaged products, such as dietetic sweeteners, liquid sweeteners, tabletop flavorings, granulated flavor mixes which upon reconstitution with water provide non-carbonated drinks, instant pudding mixes, instant coffee and tea, coffee whiteners, malted milk mixes, pet foods, livestock feed, tobacco, and materials for baking applications, such as powdered baking mixes for the preparation of breads, cookies, cakes, pancakes, donuts and the like. "Food product" or "food item" also refers to diet or low-calorie food and beverages containing little or no sucrose.

As used herein, "dietary supplement(s)" refers to compounds intended to supplement the diet and provide nutrients, such as vitamins, minerals, fiber, fatty acids, amino acids, etc. that may be missing or may not be consumed in sufficient quantities in a diet. Any suitable dietary supplement known in the art may be used. Examples of suitable dietary supplements can be, for example, nutrients, vitamins, minerals, fiber, fatty acids, herbs, botanicals, amino acids, and metabolites.

As used herein, "nutraceutical(s)" refers to compounds, which includes any food or part of a food that may provide medicinal or health benefits, including the prevention and/or treatment of disease or disorder (e.g., fatigue, insomnia, effects of aging, memory loss, mood disorders, cardiovascular disease and high levels of cholesterol in the blood, diabetes, osteoporosis, inflammation, autoimmune disorders, etc.). Any suitable nutraceutical known in the art may be used. In some aspects, nutraceuticals can be used as supplements to food and beverages and as pharmaceutical formulations for enteral or parenteral applications which may be solid formulations, such as capsules or tablets, or liquid formulations, such as solutions or suspensions.

In some aspects, dietary supplements and nutraceuticals can further contain protective hydrocolloids (such as gums, proteins, modified starches), binders, film-forming agents, encapsulating agents/materials, wall/shell materials, matrix compounds, coatings, emulsifiers, surface active agents, solubilizing agents (oils, fats, waxes, lecithins, etc.), adsorbents, carriers, fillers, co-compounds, dispersing agents, wetting agents, processing aids (solvents), flowing agents, taste-masking agents, weighting agents, gelling agents, gel-forming agents, antioxidants and antimicrobials.

As used herein, a "gel" refers to a colloidal system in which a network of particles spans the volume of a liquid medium. Although gels mainly are composed of liquids, and thus exhibit densities similar to liquids, gels have the structural coherence of solids due to the network of particles that spans the liquid medium. For this reason, gels generally appear to be solid, jelly-like materials. Gels can be used in a number of applications. For example, gels can be used in foods, paints, and adhesives. Gels that can be eaten are referred to as "edible gel compositions." Edible gel compositions typically are eaten as snacks, as desserts, as a part of staple foods, or along with staple foods. Examples of suitable edible gel compositions can be, for example, gel desserts, puddings, jams, jellies, pastes, trifles, aspics, marshmallows, gummy candies, and the like. In some aspects, edible gel mixes generally are powdered or granular solids to which a fluid may be added to form an edible gel composition. Examples of suitable fluids can be, for example, water, dairy fluids, dairy analogue fluids, juices, alcohol, alcoholic beverages, and combinations thereof. Examples of suitable dairy fluids can be, for example, milk, cultured milk, cream, fluid whey, and mixtures thereof. Examples of suitable dairy analogue fluids can be, for example, soy milk and non-dairy coffee whitener.

As used herein, the term "gelling ingredient" refers to any material that can form a colloidal system within a liquid medium. Examples of suitable gelling ingredients can be, for example, gelatin, alginate, carageenan, gum, pectin, konjac, agar, food acid, rennet, starch, starch derivatives, and combinations thereof. It is well known to those in the art that the amount of gelling ingredient used in an edible gel mix or an edible gel composition can vary considerably depending on a number of factors such as, for example, the particular gelling ingredient used, the particular fluid base used, and the desired properties of the gel.

Gel mixes and gel compositions of the present disclosure can be prepared by any suitable method known in the art. In some aspects, edible gel mixes and edible gel compositions of the present disclosure can be prepared using other ingredients in addition to a disclosed sweetener composition and the gelling agent. Examples of other suitable ingredients can be, for example, a food acid, a salt of a food acid, a buffering system, a bulking agent, a sequestrant, a cross-linking agent, one or more flavors, one or more colors, and combinations thereof.

In various aspects, a disclosed beverage can be a carbonated beverage product and a non-carbonated beverage product. The disclosed beverage can also be, for example, a soft drink, a fountain beverage, a fr ozen beverage; a ready-to-drink beverage; a fr ozen and ready-to-drink beverage, coffee, tea, a dairy beverage, a powdered soft drink, a liquid concentrate, flavored water, enhanced water, fruit juice, a fruit juice flavored drink, a sport drink, and an energy drink. It is understood that the disclosed beverage products can include one or more beverage ingredients such as, for example, acidulants, fruit juices and/or vegetable juices, pulp, etc., flavorings, coloring, preservatives, vitamins, minerals, electrolytes, erythritol, tagatose, glycerine, and carbon dioxide.

In various aspects, disclosed beverages can have any of numerous different specific formulations or constitutions. The formulation of a beverage product of the present disclosure can vary to a certain extent, depending upon such factors as the product's intended market segment, its desired nutritional characteristics, flavor profile, and the like. For example, in certain aspects, it can generally be an option to add further ingredients to the formulation of a particular beverage product. For example, additional (i.e., more and/or other) sweeteners can be added, flavorings, electrolytes, vitamins, fruit juices or other fruit products, tastants, masking agents and the like, flavor enhancers, and/or carbonation typically may be added to any such formulations to vary the taste, mouthfeel, nutritional characteristics, etc. In some aspects, the disclosed beverage can be a cola beverage that contains water, a disclosed sweetener composition, an acidulant, and flavoring. Exemplary flavorings can be, for example, cola flavoring, citrus flavoring, and spice flavorings. In some aspects, carbonation in the form of carbon dioxide can be added for effervescence. In other aspects, preservatives can be added, depending upon the other ingredients, production technique, desired shelf life, etc. In certain aspects, caffeine can be added. In a further aspect, a disclosed beverage can be a cola-flavored carbonated beverage, characteristically containing carbonated water, sweetener, kola nut extract and/or other flavoring, caramel coloring, one or more acids, and optionally other ingredients.

In various aspects, the product can be foods with health claims such as foods with nutrient function claims, nutritional supplements and medical foods.

In various aspects, the product can be in a form in which the consumption unit volume per time is packed or filled in a bag, box, or the like in an amount to be eaten in one meal or in a form in which a beverage, in which the beverage components are filled in a bottle or the like and mixed with a fluid, such as water, in a form to be consumed in one meal.

In one aspect of the present disclosure, a disclosed tabletop sweetener composition is provided that includes a HP sweetener and a taste modulator composition. In one aspect of the present disclosure, the weight ratio on a dry basis of the HP sweetener to the taste modulator composition is from about 0.0010:1 to about 1000:1. In another aspect of the present disclosure, the weight ratio on a dry basis of the HP sweetener to the taste modulator composition is from about 0.01:1 to about 286:1. In yet another aspect of the present disclosure, the weight ratio on a dry basis of the HP sweetener to the taste modulator composition is from about 1.8:1 to about 115:1. In a further aspect, a disclosed product is a tabletop sweetener comprising a disclosed sweetener composition. The tabletop composition optionally can further include at least one bulking agent, additive, anti-caking agent, functional ingredient and combinations thereof. The tabletop sweetener composition can be present in the form of a solid or a liquid. The liquid tabletop sweetener can comprise water and/or, other liquid carrier, and optionally additives, such, as for example polyols (e.g. erythritol, sorbitol, propylene glycol or glycerol), acids (e.g. citric acid), antimicrobial agents (e.g. benzoic acid or a salt thereof).

In another aspect of the present disclosure, a disclosed tabletop sweetener composition is provided that includes a bulking material, a HP sweetener and a taste modulator composition. In one aspect of the present disclosure, the weight ratio on a dry basis of the bulking material to the HP sweetener to the taste modulator composition is from about 0.0010:0.1:1 to about 1000:100,000:1. In another aspect of the present disclosure, the weight ratio on a dry basis of the bulking material to the HP sweetener to the taste modulator composition is from about 225:1.80:1 to about 14,370:115:1. In still another aspect, the sweetener may include optional ingredients such as for example, characterizing flavors and colors. Alternatively, optional ingredients may be added to the taste modulator composition. It is also possible that optional ingredients may be added to both the sweetener and the taste modulator composition. Such optional ingredients generally are known to those of skill in the art and may include, for instance, coloring agents, carriers, flavor compounds and the like. For instance, the taste modulator composition may include a strawberry flavor compound to provide a sweetener composition capable of delivering not only a sweet flavor but also a strawberry flavor. This could then be incorporated into a strawberry yogurt product to increase the perception of strawberry flavor compared to a yogurt product without the taste modulator composition. Alternatively, a disclosed tabletop sweetener composition may be colored to a golden brown color to simulate the appearance of raw sugar. Other optional ingredients may include certain carriers and inactive ingredients. These carriers and inactive ingredients may merely facilitate processing of the sweetener. Additionally, a flow agent or anti-caking agent such as tricalcium phosphate may be added to improve flowability of a tabletop sweetener.

A disclosed tabletop sweetener composition may take many forms including, but not limited to, a crystal, a powder, a tablet, a cube, a glaze or coating, a granulated product, or combinations thereof.

In some cases, a disclosed tabletop sweetener composition may be provided in the form of a crystal that has an appearance comparable to that of sucrose crystals, e.g., to improve end user acceptance of the sweetener compositions. It may also be desirable to provide the sweetener in the form of a crystal that has similar solubility profile to sucrose, which becomes apparent, e.g., when the sweetener is mixed into an unsweetened beverage.

In some circumstances, the disclosed tabletop sweetener composition is not formulated to mimic the appearance or solubility characteristics of sucrose, is may be formulated to minimize volume, maximize solubility, maximize stability, or otherwise improve product handling and distribution.

One form of a disclosed tabletop sweetener composition may be an admixture. The disclosed tabletop sweetener composition may also be provided in the form of coated granules in which one or more first component of the sweetener composition is coated over one or more second component of the sweetener composition. For example, the taste modulator composition may be coated onto granules, crystals, or other forms of a HP sweetener, such that taste buds are first exposed to the taste modulator composition, and then to the HP sweetener. In this manner, the taste buds are modified by the taste modulator composition in preparation for exposure to the HP sweetener. In another example, the HP sweetener may be coated onto granules, crystals, or other forms of the taste modulator composition, such that taste buds are first exposed to the HP sweetener, followed by exposure to the taste modulator composition, which alters the perceived sweetness of the HP sweetener. This arrangement allows the taste modulator composition to potentially mask a bitter aftertaste associated with a HP sweetener while minimally affecting its initial perception of sweetness. In yet another example, the HP sweetener and taste modulator composition may be coated onto granules, crystals, or other forms of a bulking material, such that taste buds are first exposed to the HP sweetener and taste modulator composition, followed by exposure to the bulking material.

The disclosed tabletop sweetener composition may further include one or more bulking or filling materials. In one aspect of the present disclosure, the bulking material may add bulk to the sweetener thereby making a single serving of the present compositions more similar to that of sucrose. End users of a sweetener may also find it easier to control the amount of sweetener added to a food or beverage, particularly when the serving size is similar to a known sweetener. Bulking materials may also contribute to body, viscosity, and other aspects of mouth-feel in liquids; volume, cell structure, crumb structure, and humectancy in baked goods; control over the freezing and melting points of foods and beverages; and overall visual and textural impressions of foods and beverages that include the present sweetener. In a further aspect, the bulking material itself may contribute to an increased sweet quality of the HP sweetener. In another aspect, the bulking material is low to non-caloric and may provide less than about 0.2 calories per gram of bulking agent.

In still another aspect of the present disclosure, the bulking material has a uniform crystalline structure, i.e. narrow particle size distribution. The uniform crystalline structure may provide for greater control over the ratio of bulking material to HP sweetener to taste modulator composition. In one aspect of the present disclosure, the bulking material has a size of from about 0.125 mm to about 1.0 mm. In another aspect of the present disclosure, the bulking material has a size of from about 0.21 mm to about 0.71 mm. In still another aspect of the present disclosure, the bulking material has a size of from about 0.25 mm to about 0.60 mm.

In yet another aspect of the present disclosure, the bulking agent has a solubility profile that is slower than either the HP sweetener or taste modulator composition. Thus, if the HP sweetener and taste modulator composition were to be deposited onto a bulking agent to form a tabletop sweetener product, the tabletop sweetener product may actually perform more like sugar when introduced into a beverage, particularly a cold beverage, where the granules do not immediately dissolve.

Exemplary bulking materials may be selected from the group consisting of maltodextrin, corn syrup solids, sucrose, fructose, glucose, invert sugar, sorbitol, xylose, ribulose, mannose, xylitol, mannitol, galactitol, erythritol, maltitol, lactitol, isomalt, maltose, tagatose, lactose, inulin, glycerol, propylene glycol, polyols, polydextrose, fructooligosaccharides, cellulose and cellulose derivatives, trehalose, isomaltulose, arabinogalactan, gum Arabic, gum tragacanth, guar gum and hydrolyzed guar gum, and mixtures thereof. It may also be possible to utilize certain starches and modified starches.

In one aspect of the present disclosure, the bulking material is erythritol. In another aspect, the bulking material is glycerol or propylene glycol. These particular bulking materials are available in a liquid form, which may provide for a liquid tabletop sweetener preparation.

Exemplary filling agents include, but are not limited to, filling agents such as cellulose and its derivatives including crystal cellulose, hydroxypropyl cellulose; starch and its derivatives including wheat starch, corn starch, sodium carboxymethyl starch, and dextrin; natural high-polymer compounds such as gum arabic and sodium alginate; sugars and their derivatives including glucose, maltose, sorbitol, maltitol, and mannitol; and inorganic salts including sodium chloride, calcium carbonate, and magnesium silicate; binding agents such as guar gum, synthetic aluminum silicate, stearic acid, highly-polymer polyvinylpyrrolidone, and lactic acid; lubricants such as talc, magnesium stearate, and polyethylene glycol 6000; disintegrating agents such as adipic acid, calcium stearate, and white sugar; surface acting agents such as sucrose fatty acid esters, soybean lecithin, polyoxyethylene hydrogenated castor oil, and polyoxyethylene monostearate esters; thickening agents such as sodium carboxymethyl cellulose, carboxyvinyl polymers, xanthan gum, and gelatin; coating agents such as ethyl acrylate methyl methacrylate copolymer dispersion, caramel, carnauba wax, shellac, white sugar, and pullulan; pH adjusting agents such as citric acid, sodium citrate, acetic acid, sodium acetate, and sodium hydroxide; antioxidant agents such as ascorbic acid, tocopherol acetate, natural vitamin E, and propyl gallate; flavorings such as aspartame, licorice extract, and saccharin; preservatives, such as sodium benzoate, sodium edetate, sorbic acid, sodium sorbate, methyl parahydroxybenzoate, and butyl parahydroxybenzoate; and coloring agents such as red iron oxide, yellow iron oxide, black iron oxide, carmine, Food Blue No. 1, Food Yellow No. 4, Food Yellow No. 4 Aluminum Lake, Food Yellow No. 2, and sodium copper chlorophyllin.

The present disclosure further includes methods of preparing the disclosed tabletop sweetener composition. In one aspect, the disclosed tabletop sweetener composition of the present disclosure is prepared by dissolving a HP sweetener and a taste modulator composition in water. The HP sweetener and taste modulator composition may either be dissolved individually to form two aqueous solutions or in combination to form a single aqueous solution containing both the HP sweetener and taste modulator composition. In the event that the HP sweetener and taste modulator composition are dissolved in combination, the HP sweetener and taste modulator composition may be added in any order, including simultaneously. In the event the HP sweetener and taste modulator composition are dissolved individually, they may be later combined into a single, aqueous mixture. In one aspect, the temperature of the water is at room temperature. In another aspect, the temperature of the water is heated, such as for example to from about 10 to about 70 °C. In still another aspect, the temperature of the water used for the HP sweetener is heated while the temperature of the water used for the taste modulator composition is at room temperature. Where the taste modulator composition includes more than one component, such as for example, a plurality of congruent flavor volatiles and at least one non-congruent flavor volatile, the components may be delivered in a single fraction or in more than one fraction. For example, the components may be added using a powder fraction containing a blend of dry powdered components and a liquid fraction containing and blend of the remaining components that have been dissolved in an appropriate carrier solution such as water and ethanol. The sweetener can then be processed in a number of ways, such as for example, spray drying, to reduce the moisture level of the sweetener.

In another aspect, is provided a method of preparing a disclosed tabletop sweetener composition. Generally, a HP sweetener and a taste modulator composition are deposited onto a bulking material having a size distribution of from about 0.125 mm to about 1.0 mm. The HP sweetener and taste modulator composition can be deposited in any order, including simultaneously. Methods to deposit the HP sweetener and taste modulator composition will be generally known to one of skill in the art. For example, the bulking material can be placed in a coating vessel (positioned on the right side of the diagram) and air is blown through the vessel (from the bottom of the vessel through the top) in order to cause the bulking material to move about randomly inside of the vessel (i.e., the particles are fluidized). Next, a solution comprising HP sweetener in water is introduced into the vessel and is allowed to deposit on the surface of the bulking material. Heated air is blown through the coating vessel in order to dry the HP sweetener onto the bulking material. After coating the bulking material with HP sweetener, the taste modulator composition is introduced into the coating vessel as a water-based solution. Similar to the HP sweetener, the taste modulator composition deposits on the surface of the bulking material and is dried by blowing air through the coating vessel. In a particular aspect of the present disclosure, the air that is blown through the coating vessel is not heated. This may reduce thermal degradation of the taste modulator composition. The resulting tabletop sweetener composition includes a bulking material with HP sweetener and a taste modulator composition deposited on its surface. The resulting tabletop sweetener may also be prepared by first introducing the taste modulator composition into the vessel and then introducing the HP sweetener solution into the vessel. Alternatively, the HP sweetener solution and liquid taste modulator composition may be added simultaneously into the vessel. In one aspect, the HP sweetener is rebaudioside A and the bulking material is erythritol. In another aspect, the size distribution of the bulking material is such that the tabletop sweetener has a desired taste and serving-to-serving consistency. In particular, the size distribution of the bulking material is selected to provide tabletop sweetener particles that have the desired ratio of HP sweetener to bulking material and HP sweetener to taste modulator composition. Furthermore, the tabletop sweetener particle size is similar to sugar.

In still another aspect, an HP sweetener is dissolved in room temperature water. A taste modulator composition, also at room temperature, is blended into the HP sweetener-water mixture. A bulking material is added to an agglomeration unit where it is suspended by heated air. While suspended, the mixture of HP sweetener, taste modulator composition and water is sprayed into the agglomeration unit in such a way as to allow the components to deposit onto the bulking material. By controlling the temperature in the agglomeration unit the water is removed and the moisture content of tabletop sweetener is comparable to the starting moisture of the bulking material.

In yet another aspect, a HP sweetener is dissolved in heated water. In one aspect, the heated water increases the solubility of the HP sweetener and therefore less water is necessary to fully dissolve the HP sweetener. A bulking material is added to an agglomeration unit where it is suspended by heated air. While suspended, the mixture of HP sweetener and water is sprayed into the agglomeration unit in such a way as to allow the components to deposit onto the bulking material. The HP sweetener is then dried onto the bulking material using heated air. In one aspect, the air is heated to from about 20 to about 130 °C. In another aspect, the air is heated to from about 60 to about 70 °C. The bulking material deposited with HP sweetener continues to be suspended by air only the temperature of the air is reduced. In one aspect the temperature of the air is reduced to ambient temperature. A mixture of a taste modulator composition and room temperature water is then introduced into the agglomeration unit in such a way as to allow the components to deposit onto the bulking material and HP sweetener. By controlling the temperature in the agglomeration unit the water is removed to obtain final moisture content of the tabletop sweetener comparable to that of the starting moisture of the bulking material. In one aspect, the air temperature is from about 20 to about 130 °C. In an aspect, the method produces a tabletop sweetener in which the ratio on a dry weight basis of bulking material to HP sweetener to taste modulator composition is from about 225:1.80:1 to about 14,370:115:1. In a further aspect, the bulking material is erythritol and the HP sweetener is rebaudioside A.

Also provided in the present disclosure are food and beverage products containing either the disclosed tabletop sweetener composition. Exemplary foods and beverages include baked goods, chocolate, candy and confections, chewing gum, ice cream, yogurt, breakfast cereal, oatmeal, pudding, fruit preserves and preparations, breakfast bars, protein bars, granola bars, cereal coatings, syrups, marinades, ketchup, salad dressings, baby food, pet food, animal feed, soft drinks, fruit juices, coffee, tea, sport and energy drinks, and other foods and beverages. A particular class of beverages for which the present compositions and methods are useful is diet soft drinks (or sodas), such as colas, citrus and fruit flavored beverages, and the like. Additionally, pharmaceutical and over the counter drug products may contain either the disclosed tabletop sweetener composition.

### Products Comprising the Disclosed Savory Compositions

In various aspects, the present disclosure, relates to products comprising a disclosed savory composition. In various aspects, the product can be a beverage, a food product, a nutraceutical, a concentrated sweetener composition, pharmaceutical, a dietary supplement, a dental hygienic composition, an edible gel composition, a cosmetic product, and a tabletop flavoring. In a further aspect, the present disclosure relates to a tabletop savory composition comprising a disclosed taste modulator composition and one or more disclosed umami agents.

In various aspects, a disclosed beverage can be a carbonated beverage product and a non-carbonated beverage product. The disclosed beverage can also be, for example, a soft drink, a fountain beverage, a fr ozen beverage; a ready-to-drink beverage; a fr ozen and ready-to-drink beverage, coffee, tea, a dairy beverage, a powdered soft drink, a liquid concentrate, flavored water, enhanced water, fruit juice, a fruit juice flavored drink, a sport drink, and an energy drink. It is understood that the disclosed beverage products can include one or more beverage ingredients such as, for example, acidulants, fruit juices and/or vegetable juices, pulp, etc., flavorings, coloring, preservatives, vitamins, minerals, electrolytes, erythritol, tagatose, glycerine, and carbon dioxide.

In various aspects, disclosed beverages can have any of numerous different specific formulations or constitutions. The formulation of a beverage product of the present disclosure can vary to a certain extent, depending upon such factors as the product's intended market segment, its desired nutritional characteristics, flavor profile, and the like. For example, in certain aspects, it can generally be an option to add further ingredients to the formulation of a particular beverage product. For example, additional (i.e., more and/or other) umami agents can be added, flavorings, electrolytes, vitamins, fruit juices or other fruit products, tastants, masking agents and the like, flavor enhancers, and/or carbonation typically may be added to any such formulations to vary the taste, mouthfeel, nutritional characteristics, etc.

In various aspects, the product can be foods with health claims such as foods with nutrient function claims, nutritional supplements and medical foods.

In various aspects, the product can be in a form in which the consumption unit volume per time is packed or filled in a bag, box, or the like in an amount to be eaten in one meal or in a form in which a beverage, in which the beverage components are filled in a bottle or the like and mixed with a fluid, such as water, in a form to be consumed in one meal.

In one aspect of the present disclosure, a disclosed tabletop savory composition is provided that includes an umami agent and a taste modulator composition. In one aspect of the present disclosure, the weight ratio on a dry basis of the umami agent to the taste modulator composition is from about 0.0010:1 to about 1000:1. In another aspect of the present disclosure, the weight ratio on a dry basis of the umami agent to the taste modulator composition is from about 0.01:1 to about 286:1. In yet another aspect of the present disclosure, the weight ratio on a dry basis of the umami agent to the taste modulator composition is from about 1.8:1 to about 115:1. In a further aspect, a disclosed product is a tabletop savory comprising a disclosed savory composition. The tabletop composition optionally can further include at least one bulking agent, additive, anti-caking agent, functional ingredient and combinations thereof. The tabletop savory composition can be present in the form of a solid or a liquid. The liquid tabletop savory composition can comprise water and/or, other liquid carrier, and optionally additives, such, as for example polyols (e.g. erythritol, sorbitol, propylene glycol or glycerol), acids (e.g. citric acid), antimicrobial agents (e.g. benzoic acid or a salt thereof).

In another aspect of the present disclosure, a disclosed tabletop savory composition is provided that includes a bulking material, an umami agent and a taste modulator composition. In one aspect of the present disclosure, the weight ratio on a dry basis of the bulking material to the umami agent to the taste modulator composition is from about 0.0010:0.1:1 to about 1000:100,000:1. In another aspect of the present disclosure, the weight ratio on a dry basis of the bulking material to the umami agent to the taste modulator composition is from about 225:1.80:1 to about 14,370:115:1. In still another aspect, the savory composition may include optional ingredients such as for example, characterizing flavors and colors. Alternatively, optional ingredients may be added to the taste modulator composition. It is also possible that optional ingredients may be added to both the umami agent and the taste modulator composition. Such optional ingredients generally are known to those of skill in the art and may include, for instance, coloring agents, carriers, flavor compounds and the like. For instance, the taste modulator composition may include a beef flavor compound to provide a savory composition capable of delivering not only a savory flavor but also a beef flavor. This could then be incorporated into a food product, e.g., soup, to increase the perception of beef flavor compared to a soup product without the taste modulator composition. Alternatively, a disclosed tabletop savory composition may be colored to a golden brown color to simulate the appearance of a cooked meat. Other optional ingredients may include certain carriers and inactive ingredients. These carriers and inactive ingredients may merely facilitate processing of the savory composition. Additionally, a flow agent or anti-caking agent such as tricalcium phosphate may be added to improve flowability of a tabletop savory.

A disclosed tabletop savory composition may take many forms including, but not limited to, a crystal, a powder, a tablet, a cube, a glaze or coating, a granulated product, or combinations thereof.

In some cases, a disclosed tabletop savory composition may be provided in the form of a crystal that has an appearance comparable to that of salt crystals, e.g., to improve end user acceptance of the savory compositions. It may also be desirable to provide the savory composition in the form of a crystal that has similar solubility profile to salt, which becomes apparent, e.g., when the savory composition is mixed into a beverage or food.

In some circumstances, the disclosed tabletop savory composition is not formulated to mimic the appearance or solubility characteristics of salt, is may be formulated to minimize volume, maximize solubility, maximize stability, or otherwise improve product handling and distribution.

One form of a disclosed tabletop savory composition may be an admixture. The disclosed tabletop savory composition may also be provided in the form of coated granules in which one or more first component of the savory composition is coated over one or more second component of the savory composition. For example, the taste modulator composition may be coated onto granules, crystals, or other forms of an umami agent, such that taste buds are first exposed to the taste modulator composition, and then to the umami agent. In this manner, the taste buds are modified by the taste modulator composition in preparation for exposure to the umami agent. In another example, the umami agent may be coated onto granules, crystals, or other forms of the taste modulator composition, such that taste buds are first exposed to the umami agent, followed by exposure to the taste modulator composition, which alters the perceived flavor of the umami agent. This arrangement allows the taste modulator composition to potentially mask a bitter aftertaste associated with an umami agent while minimally affecting its initial perception of umami. In yet another example, the umami agent and taste modulator composition may be coated onto granules, crystals, or other forms of a bulking material, such that taste buds are first exposed to the umami agent and taste modulator composition, followed by exposure to the bulking material.

The disclosed tabletop savory composition may further include one or more bulking or filling materials. In one aspect of the present disclosure, the bulking material may add bulk to the savory composition thereby making a single serving of the present compositions more similar to that of salt. End users of a savory composition may also find it easier to control the amount of savory composition added to a food or beverage, particularly when the serving size is similar to a known savory agent or a flavor modifier. Bulking materials may also contribute to body, viscosity, and other aspects of mouth-feel in liquids; volume, cell structure, crumb structure, and humectancy in baked goods; control over the freezing and melting points of foods and beverages; and overall visual and textural impressions of foods and beverages that include the present umami agent. In a further aspect, the bulking material itself may contribute to an increased savory quality of the umami agent. In another aspect, the bulking material is low to non-caloric and may provide less than about 0.2 calories per gram of bulking agent.

In still another aspect of the present disclosure, the bulking material has a uniform crystalline structure, i.e. narrow particle size distribution. The uniform crystalline structure may provide for greater control over the ratio of bulking material to umami agent to taste modulator composition. In one aspect of the present disclosure, the bulking material has a size of from about 0.125 mm to about 1.0 mm. In another aspect of the present disclosure, the bulking material has a size of from about 0.21 mm to about 0.71 mm. In still another aspect of the present disclosure, the bulking material has a size of from about 0.25 mm to about 0.60 mm.

In yet another aspect of the present disclosure, the bulking agent has a solubility profile that is slower than either the umami agent or taste modulator composition. Thus, if the umami agent and taste modulator composition were to be deposited onto a bulking agent to form a tabletop savory product, the tabletop savory product may actually perform more like sugar when introduced into a beverage, particularly a cold beverage, where the granules do not immediately dissolve.

Exemplary bulking materials may be selected from the group consisting of maltodextrin, corn syrup solids, sucrose, fructose, glucose, invert sugar, sorbitol, xylose, ribulose, mannose, xylitol, mannitol, galactitol, erythritol, maltitol, lactitol, isomalt, maltose, tagatose, lactose, inulin, glycerol, propylene glycol, polyols, polydextrose, fructooligosaccharides, cellulose and cellulose derivatives, trehalose, isomaltulose, arabinogalactan, gum Arabic, gum tragacanth, guar gum and hydrolyzed guar gum, and mixtures thereof. It may also be possible to utilize certain starches and modified starches.

In one aspect of the present disclosure, the bulking material is erythritol. In another aspect, the bulking material is glycerol or propylene glycol. These particular bulking materials are available in a liquid form, which may provide for a liquid tabletop savory preparation.

Exemplary filling agents include, but are not limited to, filling agents such as cellulose and its derivatives including crystal cellulose, hydroxypropyl cellulose; starch and its derivatives including wheat starch, corn starch, sodium carboxymethyl starch, and dextrin; natural high-polymer compounds such as gum arabic and sodium alginate; sugars and their derivatives including glucose, maltose, sorbitol, maltitol, and mannitol; and inorganic salts including sodium chloride, calcium carbonate, and magnesium silicate; binding agents such as guar gum, synthetic aluminum silicate, stearic acid, highly-polymer polyvinylpyrrolidone, and lactic acid; lubricants such as talc, magnesium stearate, and polyethylene glycol 6000; disintegrating agents such as adipic acid, calcium stearate, and white sugar; surface acting agents such as sucrose fatty acid esters, soybean lecithin, polyoxyethylene hydrogenated castor oil, and polyoxyethylene monostearate esters; thickening agents such as sodium carboxymethyl cellulose, carboxyvinyl polymers, xanthan gum, and gelatin; coating agents such as ethyl acrylate methyl methacrylate copolymer dispersion, caramel, carnauba wax, shellac, white sugar, and pullulan; pH adjusting agents such as citric acid, sodium citrate, acetic acid, sodium acetate, and sodium hydroxide; antioxidant agents such as ascorbic acid, tocopherol acetate, natural vitamin E, and propyl gallate; flavorings such as aspartame, licorice extract, and saccharin; preservatives, such as sodium benzoate, sodium edetate, sorbic acid, sodium sorbate, methyl parahydroxybenzoate, and butyl parahydroxybenzoate; and coloring agents such as red iron oxide, yellow iron oxide, black iron oxide, carmine, Food Blue No. 1, Food Yellow No. 4, Food Yellow No. 4 Aluminum Lake, Food Yellow No. 2, and sodium copper chlorophyllin.

The present disclosure further includes methods of preparing the disclosed tabletop savory composition. In one aspect, the disclosed tabletop savory composition of the present disclosure is prepared by dissolving an umami agent and a taste modulator composition in water. The umami agent and taste modulator composition may either be dissolved individually to form two aqueous solutions or in combination to form a single aqueous solution containing both the umami agent and taste modulator composition. In the event that the umami agent and taste modulator composition are dissolved in combination, the umami agent and taste modulator composition may be added in any order, including simultaneously. In the event the umami agent and taste modulator composition are dissolved individually, they may be later combined into a single, aqueous mixture. In one aspect, the temperature of the water is at room temperature. In another aspect, the temperature of the water is heated, such as for example to from about 10 to about 70 °C. In still another aspect, the temperature of the water used for the umami agent is heated while the temperature of the water used for the taste modulator composition is at room temperature. Where the taste modulator composition includes more than one component, such as for example, a plurality of congruent flavor volatiles and at least one non-congruent flavor volatile, the components may be delivered in a single fraction or in more than one fraction. For example, the components may be added using a powder fraction containing a blend of dry powdered components and a liquid fraction containing and blend of the remaining components that have been dissolved in an appropriate carrier solution such as water and ethanol. The savory composition can then be processed in a number of ways, such as for example, spray drying, to reduce the moisture level of the composition.

In another aspect, is provided a method of preparing a disclosed tabletop savory composition. Generally, an umami agent and a taste modulator composition are deposited onto a bulking material having a size distribution of from about 0.125 mm to about 1.0 mm. The umami agent and taste modulator composition can be deposited in any order, including simultaneously. Methods to deposit the umami agent and taste modulator composition will be generally known to one of skill in the art. For example, the bulking material can be placed in a coating vessel (positioned on the right side of the diagram) and air is blown through the vessel (from the bottom of the vessel through the top) in order to cause the bulking material to move about randomly inside of the vessel (i.e., the particles are fluidized). Next, a solution comprising umami agent in water is introduced into the vessel and is allowed to deposit on the surface of the bulking material. Heated air is blown through the coating vessel in order to dry the umami agent onto the bulking material. After coating the bulking material with umami agent, the taste modulator composition is introduced into the coating vessel as a water-based solution. Similar to the umami agent, the taste modulator composition deposits on the surface of the bulking material and is dried by blowing air through the coating vessel. In a particular aspect of the present disclosure, the air that is blown through the coating vessel is not heated. This may reduce thermal degradation of the taste modulator composition. The resulting tabletop savory composition includes a bulking material with umami agent and a taste modulator composition deposited on its surface. The resulting tabletop savory may also be prepared by first introducing the taste modulator composition into the vessel and then introducing the umami agent solution into the vessel. Alternatively, the umami agent solution and liquid taste modulator composition may be added simultaneously into the vessel. In one aspect, the umami agent is rebaudioside A and the bulking material is erythritol. In another aspect, the size distribution of the bulking material is such that the tabletop savory has a desired taste and serving-to-serving consistency. In particular, the size distribution of the bulking material is selected to provide tabletop savory particles that have the desired ratio of umami agent to bulking material and umami agent to taste modulator composition. Furthermore, the tabletop savory particle size is similar to sugar.

In still another aspect, an umami agent is dissolved in room temperature water. A taste modulator composition, also at room temperature, is blended into the umami agent-water mixture. A bulking material is added to an agglomeration unit where it is suspended by heated air. While suspended, the mixture of umami agent, taste modulator composition and water is sprayed into the agglomeration unit in such a way as to allow the components to deposit onto the bulking material. By controlling the temperature in the agglomeration unit the water is removed and the moisture content of tabletop savory is comparable to the starting moisture of the bulking material.

In yet another aspect, an umami agent is dissolved in heated water. In one aspect, the heated water increases the solubility of the umami agent and therefore less water is necessary to fully dissolve the umami agent. A bulking material is added to an agglomeration unit where it is suspended by heated air. While suspended, the mixture of umami agent and water is sprayed into the agglomeration unit in such a way as to allow the components to deposit onto the bulking material. The umami agent is then dried onto the bulking material using heated air. In one aspect, the air is heated to from about 20 to about 130 °C. In another aspect, the air is heated to from about 60 to about 70 °C. The bulking material deposited with umami agent continues to be suspended by air only the temperature of the air is reduced. In one aspect the temperature of the air is reduced to ambient temperature. A mixture of a taste modulator composition and room temperature water is then introduced into the agglomeration unit in such a way as to allow the components to deposit onto the bulking material and umami agent. By controlling the temperature in the agglomeration unit the water is removed to obtain final moisture content of the tabletop savory comparable to that of the starting moisture of the bulking material. In one aspect, the air temperature is from about 20 to about 130 °C. In an aspect, the method produces a tabletop savory in which the ratio on a dry weight basis of bulking material to umami agent to taste modulator composition is from about 225:1.80:1 to about 14,370:115:1. In a further aspect, the bulking material is erythritol and the umami agent is rebaudioside A.

Also provided in the present disclosure are food and beverage products containing either the disclosed tabletop savory composition. Exemplary foods and beverages include baked goods, chocolate, candy and confections, chewing gum, ice cream, yogurt, breakfast cereal, oatmeal, pudding, fruit preserves and preparations, breakfast bars, protein bars, granola bars, cereal coatings, syrups, marinades, ketchup, salad dressings, baby food, pet food, animal feed, soft drinks, fruit juices, coffee, tea, sport and energy drinks, and other foods and beverages. A particular class of beverages for which the present compositions and methods are useful is diet soft drinks (or sodas), such as colas, citrus and fruit flavored beverages, and the like. Additionally, pharmaceutical and over the counter drug products may contain either the disclosed tabletop savory composition.

### Sensory Testing Methodology

In various aspects, the present disclosure pertains to methods of testing the disclosed sweetener compositions, e.g., a sensory methodology or method for sweetener evaluation. In a particular aspect, the sensory methodology used is known as a "Flavor Profile Analysis" as has been previously described (see: B. T. Carr, S. D. Pecore, K. M. Gibes and G. E. DuBois, "Sensory Methods for Sweetener Evaluation", Chapter 11 In Flavor Measurement, C. T. Ho and C. H. Manley, Eds., Marcel Dekker, New York, NY, 1993). The full set of sensory parameters that are assessed in the sensory testing method are: (a) Sweetness Intensity (which can be abbreviated in tables herein as "S"); (b) Sourness Intensity ((which can be abbreviated in tables herein as "So"); (c) Saltiness Intensity (which can be abbreviated in tables herein as "Sa"); (d) Bitterness Intensity (which can be abbreviated in tables herein as "B"); (e) Body/Mouthfeel Intensity (which can be abbreviated in tables herein as "B/MF"); (f) Astringency Intensity (which can be abbreviated in tables herein as "A"); (g) Sweetness Linger (which can be abbreviated in tables herein as "SL"); (h) Sweetness Appearance Time (which can be abbreviated in tables herein as "AT"); and (i) Sweetness Desensitization (which can be abbreviated in tables herein as "SD"). In conducting the sensory testing method, both individual and group scores can be averaged and subjected to further statistical analysis.

Typically, a panel of 15 subjects is recruited from a larger group based on a panelist's ability to correctly rank a series of 6, 7, 8, 9 and 10% sucrose solutions in order of increasing sweetness intensity. The panelists are then trained to gain familiarity with the following taste attributes based on the tastes of the stimuli shown in parentheses with the taste attribute: (a) Sweet (Sucrose); (b) Sour (Citric Acid); (c) Salty (Sodium Chloride); (d) Bitter (Caffeine); (e) Body/Mouthfeel (Glucose); and (f) Astringency (Alum). Following familiarization with foregoing six taste attributes, panelists are trained in the technique of intensity scaling with a range of sucrose solutions (2.5, 5, 7.5, 10, 12.5 and 15% sucrose). In the training program, panelists were provided these sucrose standard solutions for the purpose of memorization of their perceived intensities on a 0-15 scale. Panelists are then provided sucrose solutions as unknowns and required to correctly rate their intensities on a 0-15 scale. In the next stage of training, panelists are instructed to rate the intensities of sour (citric acid), salty (sodium chloride), bitter (caffeine), body/mouthfeel (glucose) and astringent (alum) samples based on the learned 0-15 sucrose intensity scale.

In addition to rating the intensities of the foregoing six attributes, panelists are also trained in the rating of in sweetness onset time, sweetness linger and sweetness desensitization. Each of these briefly discussed in the following.

Sweetness Appearance Time (AT): This time begins when the sample is taken into the mouth and is until maximal sweetness intensity is perceived; Permissible Ratings are: (i) R (Rapid as for 10% Sucrose), and in scoring, R is assigned a numerical score of 0.0; (ii) D (Delay as for 500 PPM REBA), and in scoring, D is assigned a numerical score of 2.5; and (iii) SD (Significant Delay as for 3000 PPM Mono Ammonium Glycyrrhizinate), and in scoring, SD is assigned a numerical score of 5.0.

Sweetness Linger (SL): On tasting the sample and quantifying Attributes a-g, the sample is expectorated @ 15 sec and the mouth rinsed with water (1X15 mL) and the water expectorated @ 30 sec. The tongue and mouth are then held motionless and attention is paid to sweetness buildup in the mouth over the next 120 sec. The perceived sweetness intensity @ 120 sec is SL. 10% Sucrose and 500 PPM REBA, in water, are standards and exhibit SLs of 0 and 5 under these conditions.

Sweetness Desensitization (SD): At the end of the SL scaling, the level of desensitization or tongue-numbing perceived is rated. Permissible Ratings are: (i) N (None as for 10% Sucrose), and in scoring, N is assigned a numerical score of 0.0; (ii) S (Slight as for 500 PPM REBA), and in scoring, S is assigned a numerical score of 2.5; and (iii) M (Medium as for 1000 PPM REBA), and in scoring, M is assigned a numerical score of 5.0.
Further features of the present invention are described below.

The second anion may comprise citrate (C₆H₅O₇⁻³) or chloride (Cl⁻).

The third salt, if present, optionallyhas a third anion comprising gluconate (C₆H₁₁O₇-), citrate (C₆H₅O₇⁻³), hydrogen citrate (C₆H₆O₇⁻²), dihydrogen citrate (C₆H₇O₇⁻), malate (C₄H₆O₅⁻²), hydrogen malate (C₄H₇O₅⁻), maleate (C₄H₂O₄²), hydrogen maleate (C₄H₃O₄⁻), fumarate (C₄H₂O₄⁻²), hydrogen fumarate (C₄H₃O₄⁻), succinate (C₄H₄O₄⁻²), hydrogen succinate (C₄H₅O₄⁻), glutarate (C₅H₆O₄⁻²) , hydrogen glutarate (C₅H₇O₄⁻), adipate (C₆H₈O₄⁻²), hydrogen adipate (C₆H₉O₄⁻), lactate (C₃H₅O₃⁻), tartrate (C₄H₄O₆⁻²), bitartrate (C₄H₅O₆⁻), phosphate (PO₄⁻³), monohydrogen phosphate (HPO₄⁻²), dihydrogen phosphate (H₂PO₄⁻), fluoride (F⁻), chloride (Cl⁻), sulfate (SO₄⁻²), bisulfate (HSO₄⁻), nitrate (NO₃⁻), carbonate (CO₃⁻²), bicarbonate (HCO₃⁻), glycerate (C₃H₅O₄⁻), glycolate (C₂H₃O₃⁻), or combinations thereof.

The third anion may comprise citrate (C₆H₅O₇⁻³), chloride (Cl⁻), phosphate (PO₄⁻³), carbonate (CO₃⁻²), sulfate (SO₄⁻²), bisulfate, (HSO₄⁻) and combinations thereof.

The third anion may comprise citrate (C₆H₅O₇⁻³) or chloride (Cl⁻).

The taste modulator component may further comprise a fourth salt having a fourth cation selected from Na⁺, K⁺, Ca²⁺, and Mg²⁺; and wherein the first cation, the second cation, the third cation, and the fourth cation are not the same.

The fourth salt may have a fourth anion comprising gluconate (C₆H₁₁O₇⁻), citrate (C₆H₅O₇⁻³), hydrogen citrate (C₆H₆O₇⁻²), dihydrogen citrate (C₆H₇O₇⁻), malate (C₄H₆O₅⁻²), hydrogen malate (C₄H₇O₅⁻), maleate (C₄H₂O₄⁻²), hydrogen maleate (C₄H₃O₄⁻), fumarate (C₄H₂O₄⁻²), hydrogen fumarate (C₄H₃O₄⁻), succinate (C₄H₄O₄⁻²), hydrogen succinate (C₄H₅O₄⁻), glutarate (C₅H₆O₄⁻²) , hydrogen glutarate (C₅H₇O₄⁻), adipate (C₆H₈O₄⁻²), hydrogen adipate (C₆H₉O₄⁻), lactate (C₃H₅O₃⁻), tartrate (C₄H₄O₆⁻²), bitartrate (C₄H₅O₆⁻), phosphate (PO₄⁻³), monohydrogen phosphate (HPO₄⁻²), dihydrogen phosphate (H₂PO₄⁻), fluoride (F⁻), chloride (Cl⁻), sulfate (SO₄⁻²), bisulfate (HSO₄⁻), nitrate (NO₃⁻), carbonate (CO₃⁻²), bicarbonate (HCO₃⁻), glycerate (C₃H₅O₄⁻), glycolate (C₂H₃O₃⁻), or combinations thereof.

The fourth anion may comprise citrate (C₆H₅O₇⁻³), chloride (Cl⁻), phosphate (PO₄⁻³), carbonate (CO₃⁻²), sulfate (SO₄⁻²), bisulfate, (HSO₄⁻) and combinations thereof.

The fourth anion may comprises citrate (C₆H₅O₇⁻³) or chloride (Cl⁻).

The composition may further comprise a CaSR modulator agonist, CaSR positive allosteric modulator, or combinations thereof.

The CaSR modulator may be a CaSR agonist, CaSR positive allosteric modulator, or combinations thereof.

The CaSR modulator may be a polyamine, aminoglycoside antibiotic, a salt, an amino acid, a peptide, other CaSR modulator, or combinations thereof.

The amino acid may be an L-amino acid.

The amino acid may be glycine, leucine, glutamate, aspartate, tryptophan, phenylalanine, or combinations thereof.

The polyamine may be putrescine, cadaverine, spermidine, spermine, poly-L-arginine, or combinations thereof.

The aminoglycoside antibiotic may be amikacin, gentamicin, kanamycin, neomycin, netilmicin, paromomycin, streptomycin, tobramycin, apramycin, or combinations thereof.

The salt may bean aluminum salt, an iron salt, a gadolinium salt, a zinc salt, a strontium salt.

The peptide may have2-8 amino acids.

The peptide may have a γ-glutamyl residue.

The peptide may be Glu-Asp, Glu-Glu, Asp-Glu, Thr-Glu, Asp-Glu-Ser, Glu-Gly-Ser, Glu-Val-Glu, Gly-Leu-Pro-Asp, Gly-His-Gly-Asp, Asp-Asp-Asp-Asp, Gly-Asp-Glu-Glu-Ser-Leu-Ala, or combinations thereof.

The peptide may be glutathione.

The other CaSR modulator may be cinacalcet, calindol, or a combination thereof.

The umami agent may comprise a L-glutamate, L-glutamic acid, a salt of L-glutamic acid, L-glutamine, a salt of L-glutamine, L-aspartic acid, a salt of L-aspartic acid, a 5'-ribonucleotide or salt thereof, or combinations thereof.

The salt of glutamic acid may be monosodium glutamate, monopotassium glutamate, monoammonium glutamate, calcium diglutamate, magnesium diglutamate, or combinations thereof.

The 5'-ribonucleotide may be inosinic acid, guanylic acid, adenosinic acid, an inosinate, a guanylate, an adenylate, or combinations thereof.

The salt of a 5'-ribonucleotide may be calcium 5'-ribonucleotide, disodium 5'-ribonucleotide, magnesium 5'-ribonucleotide, and dipotassium 5'-ribonucleotide.

The salt of a 5'-ribonucleotide may be guanosine 5'-monophosphate, inosine 5'-monophosphate, and 5'-adenylate and their salts such as disodium guanylate, disodium inosinate, disodium adenylate; dipotassium guanylate, dipotassium inosinate, dipotassium adenylate, calcium guanylate, calcium inosinate, calcium adenylate, and combinations thereof.

The umami agent and the taste modulator component are optionally present in a ratio of the umami agent to a total cation; wherein the umami agent is present in an amount of about 0.1 µg to about 1000 mg to about 0.1 mmol to about 30 mmol of the total cation; and wherein the total cation represents a sum of the first cation, and when present, the second cation, the third cation, and the fourth cation.

The ratio of the umami agent to the total cation is optionally about 100 to about 1000 mg of the umami agent to the total cation comprising about 0.1 mmol to about 10 mmol Na⁺, when Na⁺ is present; about 0.1 mmol to about 20 mmol K⁺, when K⁺ is present; about 0.1 mmol to about 5 mmol Mg²⁺, when Mg²⁺ is present; about 0.1 mmol to about 5 mmol Ca²⁺, when Ca²⁺ is present; and combinations thereof provided that the total cation is about 0.1 mmol to about 30 mmol.

The total cation optionally comprises one or more of Na⁺, K⁺, Ca²⁺, and Mg²⁺, provided that the total cation is about 0.1 mmol to about 20 mmol.

The total cation optionally comprises one or more of Na⁺, K⁺, Ca²⁺, and Mg²⁺, provided that the total cation is about 0.1 mmol to about 10 mmol, optionally about 1 mmol to about 10 mmol, optionally about 5 mmol to about 10 mmol Na⁺, optionally about 1 mmol to about 10 mmol K⁺, optionally about 5 mmol to about 10 mmol K⁺, optionally about 1 mmol to about 10 mmol Mg²⁺, optionally about 1 mmol to about 5 mmol Mg²⁺, optionally about 1 mmol to about 10 mmol Ca²⁺, optionally about 1 mmol to about 5 mmol Ca²⁺, optionally about 1 mmol to about 10 mmol Na⁺ and about 1 mmol to about 10 mmol K⁺; optionally about 3 mmol to about 7 mmol Na⁺ and about 3 mmol to about 7 mmol K⁺; optionally about 4 mmol to about 6 mmol Na⁺ and about 4 mmol to about 6 mmol K⁺; optionally about 1 mmol to about 10 mmol Na⁺ and about 1 mmol to about 10 mmol Mg²⁺; optionally about 3 mmol to about 7 mmol Na⁺ and about 3 mmol to about 7 mmol Mg²⁺; optionally about 4 mmol to about 6 mmol Na⁺ and about 4 mmol to about 6 mmol Mg²⁺; optionally about 1 mmol to about 10 mmol Na⁺ and about 1 mmol to about 10 mmol Ca²⁺; optionally about 3 mmol to about 7 mmol Na⁺ and about 3 mmol to about 7 mmol Ca²⁺; optionally about 4 mmol to about 6 mmol Na⁺ and about 4 mmol to about 6 mmol Ca²⁺; optionally about 1 mmol to about 10 mmol K⁺ and about 1 mmol to about 10 mmol Mg²⁺; optionally about 3 mmol to about 7 mmol K⁺ and about 3 mmol to about 7 mmol Mg²⁺; optionally about 4 mmol to about 6 mmol K⁺ and about 4 mmol to about 6 mmol Mg²⁺; optionally about 1 mmol to about 10 mmol K⁺ and about 1 mmol to about 10 mmol Ca²⁺; optionally about 3 mmol to about 7 mmol K⁺ and about 3 mmol to about 7 mmol Ca²⁺; optionally about 4 mmol to about 6 mmol K⁺ and about 4 mmol to about 6 mmol Ca²⁺; optionally about 1 mmol to about 10 mmol Mg²⁺ and about 1 mmol to about 10 mmol Ca²⁺; optionally about 2 mmol to about 6 mmol Mg²⁺ and about 2 mmol to about 6 mmol Ca²⁺; optionally about 3 mmol to about 5 mmol Mg²⁺ and about 3 mmol to about 5 mmol Ca²⁺; optionally about 1 mmol to about 10 mmol Na⁺, about 1 mmol to about 10 mmol K⁺ and about 1 mmol to about 10 mmol Mg²⁺; optionally about 1 mmol to about 5 mmol Na⁺, about 1 mmol to about 5 mmol K⁺, and about 1 mmol to about 5 mmol Mg²⁺; optionally about 2.5 mmol to about 5 mmol Na⁺, about 2.5 mmol to about 5 mmol K⁺, and about 2.5 mmol to about 5 mmol Mg²⁺; optionally about 1 mmol to about 10 mmol Na⁺, about 1 mmol to about 10 mmol K⁺, and about 1 mmol to about 10 mmol Ca²⁺; optionally about 1 mmol to about 5 mmol Na⁺, about 1 mmol to about 5 mmol K⁺, and about 1 mmol to about 5 mmol Ca²⁺; optionally about 2.5 mmol to about 5 mmol Na⁺; about 2.5 mmol to about 5 mmol K⁺; and about 2.5 mmol to about 5 mmol Ca²⁺; optionally about 1 mmol to about 10 mmol K⁺, about 1 mmol to about 10 mmol Mg²⁺, and about 1 mmol to about 10 mmol Ca²⁺; optionally about 1 mmol to about 5 mmol K⁺, about 1 mmol to about 5 mmol Mg²⁺, and about 1 mmol to about 5 mmol Ca²⁺; optionally about 2.5 mmol to about 5 mmol K⁺, about 2.5 mmol to about 5 mmol Mg²⁺, and about 2.5 mmol to about 5 mmol Ca²⁺; optionally about 1 mmol to about 10 mmol Na⁺, about 1 mmol to about 10 mmol K⁺, about 1 mmol to about 10 mmol Mg²⁺, and about 1 mmol to about 10 mmol Ca²⁺; optionally about 1 mmol to about 4 mmol Na⁺, about 1 mmol to about 4 mmol K⁺, about 1 mmol to about 4 mmol Mg²⁺, and about 1 mmol to about 4 mmol Ca²⁺; and optionally about 1 mmol to about 3 mmol Na⁺, about 1 mmol to about 3 mmol K⁺, about 1 mmol to about 3 mmol Mg²⁺, and about 1 mmol to about 3 mmol Ca²⁺.

The molar ratio of the umami agent to the total cation is optionally about 0.001 to about 100, optionally about 0.1 to about 9, optionally about 0.1 to about 8, optionally about 0.1 to about 7, optionally about 0.1 to about 6, optionally about 0.1 to about 5., optionally about 0.1 to about 4, optionally about 0.1 to about 3, optionally about 0.1 to about 2, optionally about 0.5 to about 10, optionally about 0.5 to about 5, and optionally about 0.5 to about 3.

The umami agent is optionally present in an amount effective to provide a concentration when present in a beverage, food, nutraceutical, pharmaceutical, or cosmetic from about 0.001 mM to about 100 mM; and wherein a total cation is present in an effective amount to provide a concentration when present in a beverage, food, nutraceutical, pharmaceutical, or cosmetic from about 0.1 mM to about 30 mM; and wherein the total cation represents a sum of the first cation, and when present, the second cation, the third cation, and the fourth cation.

The total cation is optionally present in an effective amount to provide a concentration when present in a beverage, food, nutraceutical, pharmaceutical, or cosmetic from about 0.1 mM to about 10 mM Na⁺, when Na⁺ is present; from about 0.1 mM to about 20 mM K⁺, when K⁺ is present; from about 0.1 mM to about 5 mM Mg+, when Mg+ is present; from about 0.1 mM to about 5 mM Ca²⁺, when Ca²⁺ is present; and combinations thereof provided that the total cation present is from about 0.1 mM to about 50 mM.

The total cation is present in an effective amount to provide a concentration when present in a beverage, food, nutraceutical, pharmaceutical, or cosmetic from about 0.1 mM to about 40 mM, optionally from about 0.1 mM to about 30 mM, optionally from about 0.1 mM to about 20 mM, optionally from about 0.1 mM to about 10 mM, optionally from about 1 mM to about 25 mM Na⁺, optionally from about 1 mM to about 17.5 mM Na⁺, optionally from about 1 mM to about 10 mM Na⁺, optionally from about 5 mM to about 10 mM Na⁺, optionally from about 1 mM to about 25 mM K⁺, optionally from about 1 mM to about 17.5 mM K⁺, optionally from about 1 mM to about 10 mM K⁺, optionally from about 5 mM to about 10 mM K⁺, optionally from about 1 mM to about 15 mM Mg²⁺, optionally from about 1 mM to about 10 mM Mg²⁺, optionally from about 3 mM to about 5 mM Mg²⁺, optionally from about 1 mM to about 5 mM Mg²⁺, optionally from about 1 mM to about 25 mM Ca²⁺, optionally from about 1 mM to about 17.5 mM Ca²⁺, optionally from about 1 mM to about 10 mM Ca²⁺, optionally from about 3 mM to about 6 mM Ca²⁺, optionally from about 1 mM to about 5 mM Ca²⁺, optionally from about 1 mM to about 10 mM Na⁺ and from about 1 mM to about 10 mM K⁺; optionally from about 3 mM to about 7 mM Na⁺ and from about 3 mM to about 7 mM K⁺; optionally from about 4 mM to about 6 mM Na⁺ and from about 4 mM to about 6 mM K⁺; optionally from about 1 mM to about 10 mM Na⁺ and from about 1 mM to about 10 mM Mg²⁺; optionally from about 3 mM to about 7 mM Na⁺ and from about 3 mM to about 7 mM Mg²⁺; optionally from about 4 mM to about 6 mM Na⁺ and from about 4 mM to about 6 mM Mg²⁺; optionally from about 1 mM to about 10 mM Na⁺ and from about 1 mM to about 10 mM Ca²⁺; optionally from about 3 mM to about 7 mM Na⁺ and from about 3 mM to about 7 mM Ca²⁺; optionally from about 4 mM to about 6 mM Na⁺ and from about 4 mM to about 6 mM Ca²⁺; optionally from about 1 mM to about 10 mM K⁺ and from about 1 mM to about 10 mM Mg²⁺; optionally from about 3 mM to about 7 mM K⁺ and from about 3 mM to about 7 mM Mg²⁺; optionally from about 4 mM to about 6 mM K⁺ and from about 4 mM to about 6 mM Mg²⁺; optionally from about 1 mM to about 10 mM K⁺ and from about 1 mM to about 10 mM Ca²⁺; optionally from about 3 mM to about 7 mM K⁺ and from about 3 mM to about 7 mM Ca²⁺; optionally from about 4 mM to about 6 mM K⁺ and from about 4 mM to about 6 mM Ca²⁺; optionally from about 1 mM to about 10 mM Mg²⁺ and from about 1 mM to about 10 mM Ca²⁺; optionally from about 2 mM to about 6 mM Mg²⁺ and from about 2 mM to about 6 mM Ca²⁺; optionally from about 3 mM to about 5 mM Mg²⁺ and from about 3 mM to about 5 mM Ca²⁺; optionally from about 1 mM to about 10 mM Na⁺, from about 1 mM to about 10 mM K⁺ and from about 1 mM to about 10 mM Mg²⁺; optionally about 1 mM to about 5 mM Na⁺, about 1 mM to about 5 mM K⁺ and about 1 mM to about 5 mM Mg²⁺; optionally from about 2.5 mM to about 5 mM Na⁺, from about 2.5 mM to about 5 mM K⁺, and from about 2.5 mM to about 5 mM Mg²⁺; optionally from about 1 mM to about 10 mM Na⁺, from about 1 mM to about 10 mM K⁺, and from about 1 mM to about 10 mM Ca²⁺; optionally from about 1 mM to about 5 mM Na⁺, from about 1 mM to about 5 mM K⁺ and from about 1 mM to about 5 mM Ca²⁺; optionally from about 2.5 mM to about 5 mM Na⁺, from about 2.5 mM to about 5 mM K⁺, and from about 2.5 mM to about 5 mM Ca²⁺; optionally from about 1 mM to about 10 mM K⁺, from about 1 mM to about 10 mM Mg²⁺ and from about 1 mM to about 10 mM Ca²⁺; optionally from about 1 mM to about 5 mM K⁺, from about 1 mM to about 5 mM Mg²⁺, and from about 1 mM to about 5 mM Ca²⁺; optionally from about 2.5 mM to about 5 mM K⁺, from about 2.5 mM to about 5 mM Mg²⁺, and from about 2.5 mM to about 5 mM Ca²⁺; optionally from about 1 mM to about 10 mM Na⁺, from about 1 mM to about 10 mM K⁺, from about 1 mM to about 10 mM Mg²⁺, and from about 1 mM to about 10 mM Ca²⁺; optionally from about 1 mM to about 4 mM Na⁺, from about 1 mM to about 4 mM K⁺, from about 1 mM to about 4 mM Mg²⁺, and from about 1 mM to about 4 mM Ca²⁺; and optionally from about 1 mM to about 3 mM Na⁺, from about 1 mM to about 3 mM K⁺, from about 1 mM to about 3 mM Mg²⁺, and from about 1 mM to about 3 mM Ca²⁺.

The umami agent is optionally present in an amount effective to provide a concentration when present in a beverage, food, nutraceutical, pharmaceutical, or cosmetic from about 0.1 µg/100 g to about 1000 mg/100 g, optionally from about 0.1 µg/100 g to about 500 mg/100 g, optionally from about 0.1 µg/100 g to about 400 mg/100 g, optionally from about 0.1 µg/100 g to about 300 mg/100 g, optionally from about 0.1 µg/100 g to about 200 mg/100 g, optionally from about 0.1 µg/100 g to about 100 mg/100 g, optionally from about 1 µg to about 50 mg/100 g, optionally about 0.1 µg/100 g to about 25 mg/100 g, optionally from about 0.1 µg/100 g to about 10 mg/100 g, optionally from about 0.1 µg/100 g to about 900 mg/100 g, optionally from about 0.1 µg/100 g to about 800 mg/100 g, optionally from about 0.1 µg/100 g to about 700 mg/100 g, optionally from about 0.1 µg/100 g to about 600 mg/100 g, optionally from about 0.1 µg/100 g to about 500 mg/100 g, optionally from about 1 µg/100 g to about 1000 mg/100 g, optionally from about 1 µg/100 g to about 800 mg/100 g, optionally from about 1 µg/100 g to about 700 mg/100 g, optionally from about 1 µg/100 g to about 600 mg/100 g and optionally from 1 µg/100 g to about 500 mg/100 g.

The composition is optionally a powder, a particulate, an agglomerated solid, a solid, a gel, or combinations thereof, optionally a powder or an agglomerated solid

The composition is optinally a particulate; and wherein the particulate comprises a nanoparticule, a microparticule, or combinations thereof.

The composition may have inhibited bitterness, improved mouthfeel, or a combination thereof, when compared to a baseline; wherein the baseline composition consists essentially of identical components as the composition without the taste modulator component; and wherein the bitterness, mouthfeel, or a combination thereof is determined using a sensory panel study as described herein.

The bitterness of the composition may be decreased compared to the baseline composition by about 1%, about 2%, about 3%, about 4%, about 5%, about 6%, about 7%, about 8%, about 9%, about 10%, about 11%, about 12%, about 13%, about 14%, about 15%, about 16%, about 17%, about 18%, about 19%, about 20%, about 21%, about 22%, about 23%, about 24%, about 25%, about 26%, about 27%, about 28%, about 29%, about 30%, about 31%, about 32%, about 33%, about 34%, about 35%, about 36%, about 37%, about 38%, about 39%, about 40%, about 41%, about 42%, about 43%, about 44%, about 45%, about 46%, about 47%, about 48%, about 49%, about 50%, about 51%, about 52%, about 53%, about 54%, about 55%, about 56%, about 57%, about 58%, about 59%, about 60%, about 61%, about 62%, about 63%, about 64%, about 65%, about 66%, about 67%, about 68%, about 69%, about 70%, about 71%, about 72%, about 73%, about 74%, about 75%, about 76%, about 77%, about 78%, about 79%, about 80%, about 81%, about 82%, about 83%, about 84%, about 85%, about 86%, about 87%, about 88%, about 89%, about 90%, about 91%, about 92%, about 93%, about 94%, about 95%, about 96%, about 97%, about 98%, about 99%, about 100%, or combinations thereof.

The bitterness of the composition may be decreased compared to the baseline composition by about 1.1-fold, about 1.2-fold, about 1.3-fold, about 1.4-fold, about 1.5-fold, about 1.6-fold, about 1.7-fold, about 1.8-fold, about 1.9-fold, about 2-fold, about 2.1-fold, about 2.2-fold, about 2.3-fold, about 2.4-fold, about 2.5-fold, about 2.6-fold, about 2.7-fold, about 2.8-fold, about 2.9-fold, about 3-fold, about 3.1-fold, about 3.2-fold, about 3.3-fold, about 3.4-fold, about 3.5-fold, about 3.6-fold, about 3.7-fold, about 3.8-fold, about 3.9-fold, about 4-fold, about 4.1-fold, about 4.2-fold, about 4.3-fold, about 4.4-fold, about 4.5-fold, about 4.6-fold, about 4.7-fold, about 4.8-fold, about 4.9-fold,about 5-fold, about 6-fold, about 7-fold, about 8-fold, about 9-fold, about 10-fold, about 11-fold, about 12-fold, about 13-fold, about 14-fold, about 15-fold, about 16-fold, about 17-fold, about 18-fold, about 19-fold, about 20-fold, about 21-fold, about 22-fold, about 23-fold, about 24-fold, about 25-fold, about 26-fold, about 27-fold, about 28-fold, about 29-fold, about 30-fold, about 31-fold, about 32-fold, about 33-fold, about 34-fold, about 35-fold, about 36-fold, about 37-fold, about 38-fold, about 39-fold, about 40-fold, about 41-fold, about 42-fold, about 43-fold, about 44-fold, about 45-fold, about 46-fold, about 47-fold, about 48-fold, about 49-fold, about 50-fold, about 51-fold, about 52-fold, about 53-fold, about 54-fold, about 55-fold, about 56-fold, about 57-fold, about 58-fold, about 59-fold, about 60-fold, about 61-fold, about 62-fold, about 63-fold, about 64-fold, about 65-fold, about 66-fold, about 67-fold, about 68-fold, about 69-fold, about 70-fold, about 71-fold, about 72-fold, about 73-fold, about 74-fold, about 75-fold, about 76-fold, about 77-fold, about 78-fold, about 79-fold, about 80-fold, about 81-fold, about 82-fold, about 83-fold, about 84-fold, about 85-fold, about 86-fold, about 87-fold, about 88-fold, about 89-fold, about 90-fold, about 91-fold, about 92-fold, about 93-fold, about 94-fold, about 95-fold, about 96-fold, about 97-fold, about 98-fold, about 99-fold, about 100-fold, or combinations thereof.

The mouthfeel of the composition is optionally increased compared to the baseline composition by about 1%, about 2%, about 3%, about 4%, about 5%, about 6%, about 7%, about 8%, about 9%, about 10%, about 11%, about 12%, about 13%, about 14%, about 15%, about 16%, about 17%, about 18%, about 19%, about 20%, about 21%, about 22%, about 23%, about 24%, about 25%, about 26%, about 27%, about 28%, about 29%, about 30%, about 31%, about 32%, about 33%, about 34%, about 35%, about 36%, about 37%, about 38%, about 39%, about 40%, about 41%, about 42%, about 43%, about 44%, about 45%, about 46%, about 47%, about 48%, about 49%, about 50%, about 51%, about 52%, about 53%, about 54%, about 55%, about 56%, about 57%, about 58%, about 59%, about 60%, about 61%, about 62%, about 63%, about 64%, about 65%, about 66%, about 67%, about 68%, about 69%, about 70%, about 71%, about 72%, about 73%, about 74%, about 75%, about 76%, about 77%, about 78%, about 79%, about 80%, about 81%, about 82%, about 83%, about 84%, about 85%, about 86%, about 87%, about 88%, about 89%, about 90%, about 91%, about 92%, about 93%, about 94%, about 95%, about 96%, about 97%, about 98%, about 99%, about 100%; or combinations thereof.

The mouthfeel of the composition is optionally increased compared to the baseline composition by about 1.1-fold, about 1.2-fold, about 1.3-fold, about 1.4-fold, about 1.5-fold, about 1.6-fold, about 1.7-fold, about 1.8-fold, about 1.9-fold, about 2-fold, about 2.1-fold, about 2.2-fold, about 2.3-fold, about 2.4-fold, about 2.5-fold, about 2.6-fold, about 2.7-fold, about 2.8-fold, about 2.9-fold, about 3-fold, about 3.1-fold, about 3.2-fold, about 3.3-fold, about 3.4-fold, about 3.5-fold, about 3.6-fold, about 3.7-fold, about 3.8-fold, about 3.9-fold, about 4-fold, about 4.1-fold, about 4.2-fold, about 4.3-fold, about 4.4-fold, about 4.5-fold, about 4.6-fold, about 4.7-fold, about 4.8-fold, about 4.9-fold,about 5-fold, about 6-fold, about 7-fold, about 8-fold, about 9-fold, about 10-fold, about 11-fold, about 12-fold, about 13-fold, about 14-fold, about 15-fold, about 16-fold, about 17-fold, about 18-fold, about 19-fold, about 20-fold, about 21-fold, about 22-fold, about 23-fold, about 24-fold, about 25-fold, about 26-fold, about 27-fold, about 28-fold, about 29-fold, about 30-fold, about 31-fold, about 32-fold, about 33-fold, about 34-fold, about 35-fold, about 36-fold, about 37-fold, about 38-fold, about 39-fold, about 40-fold, about 41-fold, about 42-fold, about 43-fold, about 44-fold, about 45-fold, about 46-fold, about 47-fold, about 48-fold, about 49-fold, about 50-fold, about 51-fold, about 52-fold, about 53-fold, about 54-fold, about 55-fold, about 56-fold, about 57-fold, about 58-fold, about 59-fold, about 60-fold, about 61-fold, about 62-fold, about 63-fold, about 64-fold, about 65-fold, about 66-fold, about 67-fold, about 68-fold, about 69-fold, about 70-fold, about 71-fold, about 72-fold, about 73-fold, about 74-fold, about 75-fold, about 76-fold, about 77-fold, about 78-fold, about 79-fold, about 80-fold, about 81-fold, about 82-fold, about 83-fold, about 84-fold, about 85-fold, about 86-fold, about 87-fold, about 88-fold, about 89-fold, about 90-fold, about 91-fold, about 92-fold, about 93-fold, about 94-fold, about 95-fold, about 96-fold, about 97-fold, about 98-fold, about 99-fold, about 100-fold; or combinations thereof.

A method for making the composition is provided, comprising:
mixing a taste modulator component comprising a first salt having a first cation selected from Na⁺, K⁺, Ca²⁺, and Mg²⁺; and
a umami agent;
wherein the mixing is carried out until a mixture of the taste modulator and the umami agent is essentially homogenous.

Mixing is optionally carried out using a rotating drum mixer.

The method may further comprise mixing a solvent with the taste modulator and the umami agent; and mixing the taste modulator, the umami agent, and the solvent until a solution or a suspension is essentially homogeneous. The solvent may comprise water.

The method may further comprise spray-drying the solution or the suspension.

The method may further comprise lyophilizing the solution or the suspension.

The method may further comprise tableting the mixture.

A product is provided comprising the composition of the present invention.

The product may be a beverage, a food, a nutraceutical, or a concentrated savory composition.

The product may be a beverage, such as a carbonated beverage or a non-carbonated beverage.

The prduct optionally comprises from about 0.1 mM to about 30 mM of a total cation; and wherein the total cation represents a sum of the first cation, and when present, the second cation, the third cation, and the fourth cation.

The total cation may be present in an amount from about 0.1 mM to about 10 mM Na⁺, when Na⁺ is present; from about 0.1 mM to about 20 mM K⁺, when K⁺ is present; from about 0.1 mM to about 5 mM Mg+, when Mg+ is present; from about 0.1 mM to about 5 mM Ca²⁺, when Ca²⁺ is present; and combinations thereof provided that the total cation present is from about 0.1 mM to about 50 mM, optionally from about 0.1 mM to about 40 mM, optionally from about 0.1 mM to about 30 mM, optionally from about 0.1 mM to about 20 mM, optionally from about 0.1 mM to about 10 mM, optionally from about 1 mM to about 25 mM Na⁺, optionally from about 1 mM to about 17.5 mM Na⁺, optionally from about 1 mM to about 10 mM Na⁺, optionally from about 5 mM to about 10 mM Na⁺, optionally from about 1 mM to about 25 mM K⁺, optionally from about 1 mM to about 17.5 mM K⁺, optionally from about 1 mM to about 10 mM K⁺, optionally from about 5 mM to about 10 mM K⁺, optionally from about 1 mM to about 15 mM Mg²⁺, optionally from about 1 mM to about 10 mM Mg²⁺, optionally from about 3 mM to about 5 mM Mg²⁺, optionally from about 1 mM to about 5 mM Mg²⁺, optionally from about 1 mM to about 25 mM Ca²⁺., optionally from about 1 mM to about 17.5 mM Ca²⁺, optionally from about 1 mM to about 10 mM Ca²⁺, optionaly from about 3 mM to about 6 mM Ca²⁺, optionally from about 1 mM to about 5 mM Ca²⁺, optionally from about 1 mM to about 10 mM Na⁺ and from about 1 mM to about 10 mM K⁺; optionally from about 3 mM to about 7 mM Na⁺ and from about 3 mM to about 7 mM K⁺; optionally from about 4 mM to about 6 mM Na⁺ and from about 4 mM to about 6 mM K⁺; optionally from about 1 mM to about 10 mM Na⁺ and from about 1 mM to about 10 mM Mg²⁺; optionally from about 3 mM to about 7 mM Na⁺ and from about 3 mM to about 7 mM Mg²⁺; optionally from about 4 mM to about 6 mM Na⁺ and from about 4 mM to about 6 mM Mg²⁺; optionally from about 1 mM to about 10 mM Na⁺ and from about 1 mM to about 10 mM Ca²⁺; optionally from about 3 mM to about 7 mM Na⁺ and from about 3 mM to about 7 mM Ca²⁺; optionally from about 4 mM to about 6 mM Na⁺ and from about 4 mM to about 6 mM Ca²⁺; optionally from about 1 mM to about 10 mM K⁺ and from about 1 mM to about 10 mM Mg²⁺; optionally from about 3 mM to about 7 mM K⁺ and from about 3 mM to about 7 mM Mg²⁺; optionally from about 4 mM to about 6 mM K⁺ and from about 4 mM to about 6 mM Mg²⁺; optionally from about 1 mM to about 10 mM K⁺ and from about 1 mM to about 10 mM Ca²⁺; optionally from about 3 mM to about 7 mM K⁺ and from about 3 mM to about 7 mM Ca²⁺; optionally from about 4 mM to about 6 mM K⁺ and from about 4 mM to about 6 mM Ca²⁺; optionally from about 1 mM to about 10 mM Mg²⁺ and from about 1 mM to about 10 mM Ca²⁺; optionally from about 2 mM to about 6 mM Mg²⁺ and from about 2 mM to about 6 mM Ca²⁺; optionally from about 3 mM to about 5 mM Mg²⁺ and from about 3 mM to about 5 mM Ca²⁺; optionally from about 1 mM to about 10 mM Na⁺, from about 1 mM to about 10 mM K⁺, and from about 1 mM to about 10 mM Mg²⁺; optionally from about 1 mM to about 5 mM Na⁺, from about 1 mM to about 5 mM K⁺, and from about 1 mM to about 5 mM Mg²⁺; optionally from about 2.5 mM to about 5 mM Na⁺, from about 2.5 mM to about 5 mM K⁺, and from about 2.5 mM to about 5 mM Mg²⁺; optionally from about 1 mM to about 10 mM Na⁺, from about 1 mM to about 10 mM K⁺, and from about 1 mM to about 10 mM Ca²⁺; optionally from about 1 mM to about 5 mM Na⁺, from about 1 mM to about 5 mM K⁺, and from about 1 mM to about 5 mM Ca²⁺; optionally from about 2.5 mM to about 5 mM Na⁺, from about 2.5 mM to about 5 mM K⁺, and from about 2.5 mM to about 5 mM Ca²⁺; optionally from about 1 mM to about 10 mM K⁺, from about 1 mM to about 10 mM Mg²⁺, and from about 1 mM to about 10 mM Ca²⁺; optionally from about 1 mM to about 5 mM K⁺, from about 1 mM to about 5 mM Mg²⁺, and from about 1 mM to about 5 mM Ca²⁺; optionally from about 2.5 mM to about 5 mM K⁺, from about 2.5 mM to about 5 mM Mg²⁺, and from about 2.5 mM to about 5 mM Ca²⁺; optionally from about 1 mM to about 10 mM Na⁺, from about 1 mM to about 10 mM K⁺, from about 1 mM to about 10 mM Mg²⁺, and from about 1 mM to about 10 mM Ca²⁺; optionally from about 1 mM to about 4 mM Na⁺, from about 1 mM to about 4 mM K⁺, from about 1 mM to about 4 mM Mg²⁺, and from about 1 mM to about 4 mM Ca²⁺; and optionally from about 1 mM to about 3 mM Na⁺, from about 1 mM to about 3 mM K⁺, from about 1 mM to about 3 mM Mg²⁺, and from about 1 mM to about 3 mM Ca²⁺.

The umami agent may be present in the produce in an amount from about 0.1 µg/100 g to about 1000 mg/100 g, optionally from about 0.1 µg/100 g to about 500 mg/100 g, optionally from about 0.1 µg/100 g to about 400 mg/100 g, optionally from about 0.1 µg/100 g to about 300 mg/100 g, optionally from about 0.1 µg/100 g to about 200 mg/100 g, optionally from about 0.1 µg/100 g to about 100 mg/100 g, optionally from about 0.1 µg/100 g to about 50 mg/100 g, optionally from about 0.1 µg/100 g to about 25 mg/100 g, optionally from about 0.1 µg/100 g to about 10 mg/100 g, optionally from about 1 µg/100 g to about 900 mg/100 g, optionally from about 1 µg/100 g to about 800 mg/100 g, optionally from about 1 µg/100 g to about 700 mg/100 g, optionally from about 1 µg/100 g to about 600 mg/100 g, optionally from about 1 µg/100 g to about 500 mg/100 g, optionally from about 10 µg/100 g to about 1000 mg/100 g, optionally from about 10 µg/100 g to about 900 mg/100 g, optionally from about 10 µg/100 g to about 800 mg/100 g, optionally from about 10 µg/100 g to about 700 mg/100 g, optionally from about 10 µg/100 g to about 600 mg/100 g, and optionally from about 10 µg/100 g to about 500 mg/100 g.

The first anion and the second anion of the taste modulator composition may not be the same.

The second anion may comprises citrate (C₆H₅O₇⁻³), sulfate (SO₄⁻²), or combinations thereof.

The second anion may comprise sulfate (SO₄⁻²),

The second anion may comprises citrate (C₆H₅O₇⁻³).

The second anion may comprise chloride (Cl⁻).

The first anion, the second anion, and the third anion are optionally the same.

The first anion, the second anion, and the third anion are optionally not the same.

The third salt optionally has a third anion comprising gluconate (C₆H₁₁O₇⁻), citrate (C₆H₅O₇⁻³), hydrogen citrate (C₆H₆O₇⁻²), dihydrogen citrate (C₆H₇O₇⁻), malate (C₄H₆O₅⁻²), hydrogen malate (C₄H₇O₅⁻), maleate (C₄H₂O₄⁻²), hydrogen maleate (C₄H₃O₄⁻), fumarate (C₄H₂O₄⁻²), hydrogen fumarate (C₄H₃O₄⁻), succinate (C₄H₄O₄⁻²), hydrogen succinate (C₄H₅O₄⁻), glutarate (C₅H₆O₄⁻²) , hydrogen glutarate (C₅H₇O₄⁻), adipate (C₆H₈O₄⁻²), hydrogen adipate (C₆H₉O₄⁻), lactate (C₃H₅O₃⁻), tartrate (C₄H₄O₆⁻²), bitartrate (C₄H₅O₆⁻), phosphate (PO₄⁻³), monohydrogen phosphate (HPO₄⁻²), dihydrogen phosphate (H₂PO₄⁻), fluoride (F⁻), chloride (Cl⁻), sulfate (SO₄⁻²), bisulfate (HSO₄⁻), nitrate (NO₃⁻), carbonate (CO₃⁻²), bicarbonate (HCO₃⁻), glycerate (C₃H₅O₄⁻), glycolate (C₂H₃O₃⁻), or combinations thereof.

The third anion may comprise citrate (C₆H₅O₇⁻³), chloride (Cl⁻), phosphate (PO₄⁻³), carbonate (CO₃⁻²), sulfate (SO₄⁻²), bisulfate, (HSO₄⁻) and combinations thereof.

The third anion may comprise citrate (C₆H₅O₇⁻³), sulfate (SO₄⁻²), or combinations thereof.

The third anion may comprise sulfate (SO₄⁻²).

The third anion may comprise citrate (C₆H₅O₇⁻³).

The third anion may comprise chloride (Cl⁻).

The taste modulator composition may further comprise a fourth modulator component comprising a fourth salt having a fourth cation selected from Na⁺, K⁺, Ca²⁺, and Mg²⁺.

The first cation, the second cation, third cation, and the fourth cation are optionally not the same; and wherein the first anion, the second anion, the third anion, and the fourth anion are the same.

The fourth salt may have a fourth anion comprising gluconate (C₆H₁₁O₇⁻), citrate (C₆H₅O₇⁻³), hydrogen citrate (C₆H₆O₇⁻²), dihydrogen citrate (C₆H₇O₇⁻), malate (C₄H₆O₅⁻²), hydrogen malate (C₄H₇O₅⁻), maleate (C₄H₂O₄⁻²), hydrogen maleate (C₄H₃O₄⁻), fumarate (C₄H₂O₄⁻²), hydrogen fumarate (C₄H₃O₄⁻), succinate (C₄H₄O₄⁻²), hydrogen succinate (C₄H₅O₄⁻), glutarate (C₅H₆O₄⁻²) , hydrogen glutarate (C₅H₇O₄⁻), adipate (C₆H₈O₄⁻²), hydrogen adipate (C₆H₉O₄⁻), lactate (C₃H₅O₃⁻), tartrate (C₄H₄O₆⁻²), bitartrate (C₄H₅O₆⁻), phosphate (PO₄⁻³), monohydrogen phosphate (HPO₄⁻²), dihydrogen phosphate (H₂PO₄⁻), fluoride (F⁻), chloride (Cl⁻), sulfate (SO₄⁻²), bisulfate (HSO₄⁻), nitrate (NO₃⁻), carbonate (CO₃⁻²), bicarbonate (HCO₃⁻), glycerate (C₃H₅O₄⁻), glycolate (C₂H₃O₃⁻), or combinations thereof.

The fourth anion may comprise citrate (C₆H₅O₇⁻³), chloride (Cl⁻), phosphate (PO₄⁻³), carbonate (CO₃⁻²), sulfate (SO₄⁻²), bisulfate, (HSO₄⁻) and combinations thereof.

The fourth anion may comprise citrate (C₆H₅O₇⁻³), sulfate (SO₄⁻²), or combinations thereof, optionally sulfate (SO₄⁻²), optionally citrate (C₆H₅O₇⁻³), and optionally chloride (Cl⁻).

The composition is optionally a beverage composition.

The umami agent is optionally present in the beverage composition in an amount of from about 0.1 µg/100 g to about 1000 mg/100 g; and wherein the total cation present is from about 0.1 mM to about 30 mM of the total cation; and wherein the total cation represents a sum of the first cation, and when present, the second cation, the third cation, and the fourth cation.

The umami agent is optionally present in an amount of from about 0.1 µg/100 g to about 1000 mg/100 g; and wherein the total cation present is about 0.1 mM to about 10 mM Na⁺, when Na⁺ is present; about 0.1 mM to about 20 mM K⁺, when K⁺ is present; about 0.1 mM to about 5 mM Mg²⁺, when Mg²⁺ is present; about 0.1 mM to about 5 mM Ca²⁺, when Ca²⁺ is present; and combinations thereof provided that the total cation is about 0.1 mM to about 30 mM.

The umami agent is optionally present in an amount of about 1 µg/100 g to about 1000 mg/100 g, optionally about 1 µg/100 g to about 900 mg/100 g, optionally about 1 µg/100 g to about 800 mg/100 g, optionally about 1 µg/100 g to about 700 mg/100 g, optionally about 1 µg/100 g to about 600 mg/100 g, optionally about 1 µg/100 g to about 500 mg/100 g, optionally about 1 µg/100 g to about 400 mg/100 g, optionally about 1 µg/100 g to about 300 mg/100 g, optionally about 10 µg/100 g to about 900 mg/100 g, optionally about 10 µg/100 g g to about 800 mg/100 g, optionally about 10 µg/100 g to about 700 mg/100 g, optionally about 10 g/100 g to about 600 mg/100 g, optionally about 10 µg/100 g to about 500 mg/100 g, optionally about 10 µg/100 g to about 400 mg/100 g, optionally about 10 µg/100 g to about 300 mg/100 g, optionally about 50 µg/100 g to about 900 mg/100 g, optionally about 50 µg/100 g to about 800 mg/100 g, optionally about 50 µg/100 g to about 700 mg/100 g, optionally about 50 µg/100 g to about 600 mg/100 g, optionally about 50 µg/100 g to about 500 mg/100 g, optionally about 50 µg/100 g to about 400 mg/100 g, optionally about 100 µg/100 g to about 900 mg/100 g, optionally about 100 µg/100 g to about 800 mg/100 g, optionally about 100 µg/100 g to about 700 mg/100 g, optionally about 100 µg/100 g to about 600 mg/100 g, and optionally about 100 µg/100 g to about 500 mg/100 g.K⁺ is optionally present in the beverage composition in an amount from about 0.1 mM to about 20 mM, optionally from about 0.5 mM to about 20 mM, optionally from about 1 mM to about 20 mM, optionally from about 2 mM to about 20 mM, optionally from about 3 mM to about 20 mM, optionally from about 4 mM to about 20 mM, optionally from about 5 mM to about 20 mM, optionally from about 6 mM to about 20 mM, optionally from about 7 mM to about 20 mM, optionally from about 8 mM to about 20 mM, optionally from about 9 mM to about 20 mM, optionally from about 10 mM to about 20 mM, optionally from about 0.5 mM to about 15 mM, optionally from about 1 mM to about 15 mM, optionally from about 2 mM to about 15 mM, optionally from about 3 mM to about 15 mM, optionally from about 4 mM to about 15 mM, optionally from about 5 mM to about 15 mM, optionally from about 6 mM to about 15 mM, optionally from about 7 mM to about 15 mM, optionally from about 8 mM to about 15 mM, optionally from about 9 mM to about 15 mM, optionally from about 10 mM to about 15 mM, optionally from about 0.5 mM to about 10 mM, optionally from about 1 mM to about 10 mM, optionally from about 2 mM to about 10 mM, optionally from about 3 mM to about 10 mM, optionally from about 4 mM to about 10 mM, optionally from about 5 mM to about 10 mM, optionally from about 6 mM to about 10 mM, optionally from about 7 mM to about 10 mM, optionally from about 8 mM to about 10 mM, and optionally from about 9 mM to about 10 mM.

Mg+2 is optionally present in the beverage composition in an amount from about 0.1 mM to about 5 mM, optionally from about 0.2 mM to about 5 mM, optionally from about 0.3 mM to about 5 mM, optionally from about 0.4 mM to about 5 mM, optionally from about 0.5 mM to about 5 mM, optionally from about 0.6 mM to about 5 mM, optionally from about 0.7 mM to about 5 mM, optionally from about 0.8 mM to about 5 mM, optionally from about 0.9 mM to about 5 mM, optionally from about 1.0 mM to about 5 mM, optionally from about 0.1 mM to about 4 mM, optionally from about 0.2 mM to about 4 mM, optionally from about 0.3 mM to about 4 mM, optionally from about 0.4 mM to about 4 mM, optionally from about 0.5 mM to about 4 mM, optionally from about 0.6 mM to about 4 mM, optionally from about 0.7 mM to about 4 mM, optionally from about 0.8 mM to about 4 mM, optionally from about 0.9 mM to about 4 mM, optionally from about 1.0 mM to about 4 mM, optionally from about 0.1 mM to about 3.5 mM, optionally from about 0.2 mM to about 3.5 mM, optionally from about 0.3 mM to about 3.5 mM, optionally from about 0.4 mM to about 3.5 mM, optionally from about 0.5 mM to about 3.5 mM, optionally from about 0.6 mM to about 3.5 mM, optionally from about 0.7 mM to about 3.5 mM, optionally from about 0.8 mM to about 3.5 mM, optionally from about 0.9 mM to about 3.5 mM, and optionally from about 1.0 mM to about 3.5 mM.

Ca+2 may be present in the beverage composition in an amount from about 0.1 mM to about 5 mM, optionally from about 0.2 mM to about 5 mM, optionally from about 0.3 mM to about 5 mM, optionally from about 0.4 mM to about 5 mM, optionally from about 0.5 mM to about 5 mM, optionally from about 0.6 mM to about 5 mM, optionally from about 0.7 mM to about 5 mM, optionally from about 0.8 mM to about 5 mM, optionally from about 0.9 mM to about 5 mM, optionally from about 1.0 mM to about 5 mM, optionally from about 0.1 mM to about 4 mM, optionally from about 0.2 mM to about 4 mM, optionally from about 0.3 mM to about 4 mM, optionally from about 0.4 mM to about 4 mM, optionally from about 0.5 mM to about 4 mM, optionally from about 0.6 mM to about 4 mM, optionally from about 0.7 mM to about 4 mM, optionally from about 0.8 mM to about 4 mM, optionally from about 0.9 mM to about 4 mM, optionally from about 1.0 mM to about 4 mM, optionally from about 0.1 mM to about 3.5 mM, optionally from about 0.2 mM to about 3.5 mM, optionally from about 0.3 mM to about 3.5 mM, optionally from about 0.4 mM to about 3.5 mM, optionally from about 0.5 mM to about 3.5 mM, optionally from about 0.6 mM to about 3.5 mM, optionally from about 0.7 mM to about 3.5 mM, optionally from about 0.8 mM to about 3.5 mM, optionally from about 0.9 mM to about 3.5 mM, and optionally from about 1.0 mM to about 3.5 mM.

The first taste modulator component in the composition may be at a concentration of from about 1 mM to about 10 mM; and wherein the second taste modulator component is at a concentration of from about 1 mM to about 10 mM.

The first taste modulator component in the composition may be at a concentration of from about 1 mM to about 5 mM; and wherein the second taste modulator component is at a concentration of from about 1 mM to about 5 mM.

The first anion is optionally selected from citrate, sulfate, chloride, and combinations thereof.

The first anion is optionally chloride.

The second anion is optionally selected from citrate, sulfate, chloride, and combinations thereof.

The second anion may be chloride.

The third taste modulator component may be at a concentration of from about 1 mM to about 25 mM, optionally
from about 1 mM to about 15 mM, and optionally from about 5 mM to about 15 mM.

The third anion may be selected from citrate, chloride, phosphate, carbonate, sulfate, and combinations thereof; optionally from citrate, sulfate, chloride, and combinations thereof.

The third anion may be chloride.

The concentration of the first taste modulator component may be from about 0.1 mM to about 5 mM; wherein the concentration of the second taste modulator component is from about 0.1 mM to about 5 mM; and where the concentration of the third taste modulator component is from about 0.1 mM to about 25 mM.

The umami agent may comprise L-glutamate, L-glutamic acid, a salt of L-glutamic acid, L-glutamine, a salt of L-glutamine, L-aspartic acid, a salt of L-aspartic acid, a 5'-ribonucleotide, a 5'-ribonucleotide salt thereof, autolyzed protein, hydrolyzed protein, or combinations thereof

The umami agent may be selected from guanosine 5'-monophosphate, inosine 5'-monophosphate, disodium guanylate, disodium inosinate, disodium adenylate; dipotassium guanylate, dipotassium inosinate, dipotassium adenylate, calcium guanylate, calcium inosinate, calcium adenylate, and combinations thereof.

The umami agent may be an extract, a puree, or a puree prepared from a yeast, a vegetable, a cereal, a meat, a fish, a dairy product, or a egg yolk.

The umami agent may be selected from autolyzed yeast protein, hydrolyzed yeast protein, hydrolyzed vegetable protein, and combinations thereof.

The umami agent may be fermented.

The pH of the savory composition may be from about pH 2.5 to about pH 7.

A product is provided comprising the composition of the invention.

The product may be a savory composition, optionally a food product.

The food product may be a condiment, a cereal product, a rice product, a pasta product, a tapioca product, a sago product, a baker's product, a biscuit product, a pastry product, a bread product, a yeast product, a mustard product, a vinegar product, a processed food product, a cooked vegetable product, a meat, a meat product, a meat substitute product, an egg product, a dairy product, a cheese product, a dairy substitute product, a soy product, an edible oil, or a fat product.

The food product may be a snack product such as potato chips, crisps, nuts, tortilla-tostada, pretzels, cheese snacks, corn snacks, potato-snacks, ready-to-eat popcorn, microwaveable popcorn, pork rinds, nuts, crackers, cracker snacks; an aspic product; a cured meat product such as a ham or bacon; a luncheon or breakfast meat product, such as hotdogs, cold cuts, and sausages; a tomato product; a margarine product; a peanut butter product; a soup product such as clear soups, canned soups, cream soups, instant soups, and vegetable or meat broth products; a canned vegetable product; or a pasta sauce product.

A method for improving mouthfeel is provided, the method comprising: adding a taste modulator composition to product comprising an umami agent; wherein the taste modulator composition consists essentially of a first taste modulator component consisting essentially of a first salt having a first cation Mg²⁺ and a first anion; a second taste modulator component consisting essentially of a second salt having a second cation Ca²⁺ and a second anion; and optionally a third taste modulator component consisting essentially of a third salt having a third cation selected from K⁺ and Na⁺ and a third anion; wherein the first taste modulator component is at a concentration of from about 0.1 mM to about 10 mM; wherein the second taste modulator component is at a concentration of from about 0.1 mM to about 10 mM; wherein the third taste modulator component, when present, is at a concentration of from about 0.1 mM to about 25 mM; wherein the umami agent is present in an amount of from about 0.01 wt% to about 5 wt%; and wherein bitterness is inhibited when compared to a baseline product; wherein the baseline product consists essentially of identical components as the product without the taste modulator component; and wherein the bitterness is determined using a sensory panel study.

The mouthfeel is optionally improved compared to the baseline product by about 1%, about 2%, about 3%, about 4%, about 5%, about 6%, about 7%, about 8%, about 9%, about 10%, about 11%, about 12%, about 13%, about 14%, about 15%, about 16%, about 17%, about 18%, about 19%, about 20%, about 21%, about 22%, about 23%, about 24%, about 25%, about 26%, about 27%, about 28%, about 29%, about 30%, about 31%, about 32%, about 33%, about 34%, about 35%, about 36%, about 37%, about 38%, about 39%, about 40%, about 41%, about 42%, about 43%, about 44%, about 45%, about 46%, about 47%, about 48%, about 49%, about 50%, about 51%, about 52%, about 53%, about 54%, about 55%, about 56%, about 57%, about 58%, about 59%, about 60%, about 61%, about 62%, about 63%, about 64%, about 65%, about 66%, about 67%, about 68%, about 69%, about 70%, about 71%, about 72%, about 73%, about 74%, about 75%, about 76%, about 77%, about 78%, about 79%, about 80%, about 81%, about 82%, about 83%, about 84%, about 85%, about 86%, about 87%, about 88%, about 89%, about 90%, about 91%, about 92%, about 93%, about 94%, about 95%, about 96%, about 97%, about 98%, about 99%, about 100%, about 101%, about 102%, about 103%, about 104%, about 105%, about 106%, about 107%, about 108%, about 109%, about 110%, about 111%, about 112%, about 113%, about 114%, about 115%, about 116%, about 117%, about 118%, about 119%, about 120%, about 121%, about 122%, about 123%, about 124%, about 125%, about 126%, about 127%, about 128%, about 129%, about 130%, about 131%, about 132%, about 133%, about 134%, about 135%, about 136%, about 137%, about 138%, about 139%, about 140%, about 141%, about 142%, about 143%, about 144%, about 145%, about 146%, about 147%, about 148%, about 149%, about 150%, about 151%, about 152%, about 153%, about 154%, about 155%, about 156%, about 157%, about 158%, about 159%, about 160%, about 161%, about 162%, about 163%, about 164%, about 165%, about 166%, about 167%, about 168%, about 169%, about 170%, about 171%, about 172%, about 173%, about 174%, about 175%, about 176%, about 177%, about 178%, about 179%, about 180%, about 181%, about 182%, about 183%, about 184%, about 185%, about 186%, about 187%, about 188%, about 189%, about 190%, about 191%, about 192%, about 193%, about 194%, about 195%, about 196%, about 197%, about 198%, about 199%, about 200%, or combinations thereof.

The mouthfeel may be improved compared to the baseline product by from about 10% to about 200%, optionally by from about 50% to about 200%, optionally by from about 100% to about 200%, optionally by from about 150% to about 200%, optionally by at least 25%, optionally by at least 30%, optionally by at least 40%, optionally by at least 50%, optionally by at least 75%, and optionally by at least 100%.

The mouthfeel may be improved compared to the baseline composition by about 1.1-fold, about 1.2-fold, about 1.3-fold, about 1.4-fold, about 1.5-fold, about 1.6-fold, about 1.7-fold, about 1.8-fold, about 1.9-fold, about 2-fold, about 2.1-fold, about 2.2-fold, about 2.3-fold, about 2.4-fold, about 2.5-fold, about 2.6-fold, about 2.7-fold, about 2.8-fold, about 2.9-fold, about 3-fold, about 3.1-fold, about 3.2-fold, about 3.3-fold, about 3.4-fold, about 3.5-fold, about 3.6-fold, about 3.7-fold, about 3.8-fold, about 3.9-fold, about 4-fold, about 4.1-fold, about 4.2-fold, about 4.3-fold, about 4.4-fold, about 4.5-fold, about 4.6-fold, about 4.7-fold, about 4.8-fold, about 4.9-fold,about 5-fold, about 6-fold, about 7-fold, about 8-fold, about 9-fold, about 10-fold, about 11-fold, about 12-fold, about 13-fold, about 14-fold, about 15-fold, about 16-fold, about 17-fold, about 18-fold, about 19-fold, about 20-fold, about 21-fold, about 22-fold, about 23-fold, about 24-fold, about 25-fold, about 26-fold, about 27-fold, about 28-fold, about 29-fold, about 30-fold, about 31-fold, about 32-fold, about 33-fold, about 34-fold, about 35-fold, about 36-fold, about 37-fold, about 38-fold, about 39-fold, about 40-fold, about 41-fold, about 42-fold, about 43-fold, about 44-fold, about 45-fold, about 46-fold, about 47-fold, about 48-fold, about 49-fold, about 50-fold, about 51-fold, about 52-fold, about 53-fold, about 54-fold, about 55-fold, about 56-fold, about 57-fold, about 58-fold, about 59-fold, about 60-fold, about 61-fold, about 62-fold, about 63-fold, about 64-fold, about 65-fold, about 66-fold, about 67-fold, about 68-fold, about 69-fold, about 70-fold, about 71-fold, about 72-fold, about 73-fold, about 74-fold, about 75-fold, about 76-fold, about 77-fold, about 78-fold, about 79-fold, about 80-fold, about 81-fold, about 82-fold, about 83-fold, about 84-fold, about 85-fold, about 86-fold, about 87-fold, about 88-fold, about 89-fold, about 90-fold, about 91-fold, about 92-fold, about 93-fold, about 94-fold, about 95-fold, about 96-fold, about 97-fold, about 98-fold, about 99-fold, about 100-fold, about 100-fold, about 101-fold, about 102-fold, about 103-fold, about 104-fold, about 105-fold, about 106-fold, about 107-fold, about 108-fold, about 109-fold,about 110-fold, about 111-fold, about 112-fold, about 113-fold, about 114-fold, about 115-fold, about 116-fold, about 117-fold, about 118-fold, about 119-fold, about 120-fold, about 121-fold, about 122-fold, about 123-fold, about 124-fold, about 125-fold, about 126-fold, about 127-fold, about 128-fold, about 129-fold, about 130-fold, about 131-fold, about 132-fold, about 133-fold, about 134-fold, about 135-fold, about 136-fold, about 137-fold, about 138-fold, about 139-fold, about 140-fold, about 141-fold, about 142-fold, about 143-fold, about 144-fold, about 145-fold, about 146-fold, about 147-fold, about 148-fold, about 149-fold, about 150-fold, about 151-fold, about 152-fold, about 153-fold, about 154-fold, about 155-fold, about 156-fold, about 157-fold, about 158-fold, about 159-fold, about 160-fold, about 161-fold, about 162-fold, about 163-fold, about 164-fold, about 165-fold, about 166-fold, about 167-fold, about 168-fold, about 169-fold, about 170-fold, about 171-fold, about 172-fold, about 173-fold, about 174-fold, about 175-fold, about 176-fold, about 177-fold, about 178-fold, about 179-fold, about 180-fold, about 181-fold, about 182-fold, about 183-fold, about 184-fold, about 185-fold, about 186-fold, about 187-fold, about 188-fold, about 189-fold, about 190-fold, about 191-fold, about 192-fold, about 193-fold, about 194-fold, about 195-fold, about 196-fold, about 197-fold, about 198-fold, about 199-fold, about 200-foldor combinations thereof.

From the foregoing, it will be seen that aspects herein are well adapted to attain all the ends and objects hereinabove set forth together with other advantages which are obvious and which are inherent to the structure.

While specific elements and steps are discussed in connection to one another, it is understood that any element and/or steps provided herein is contemplated as being combinable with any other elements and/or steps regardless of explicit provision of the same while still being within the scope provided herein.

It will be understood that certain features and sub-combinations are of utility and may be employed without reference to other features and sub-combinations. This is contemplated by and is within the scope of the claims.

Since many possible aspects may be made without departing from the scope thereof, it is to be understood that all matter herein set forth or shown in the accompanying drawings and detailed description is to be interpreted as illustrative and not in a limiting sense.

It is also to be understood that the terminology used herein is for the purpose of describing particular aspects only, and is not intended to be limiting. The skilled artisan will recognize many variants and adaptations of the aspects described herein. These variants and adaptations are intended to be included in the teachings of this disclosure and to be encompassed by the claims herein.

Now having described the aspects of the present disclosure, in general, the following Examples describe some additional aspects of the present disclosure. While aspects of the present disclosure are described in connection with the following examples and the corresponding text and figures, there is no intent to limit aspects of the present disclosure to this description.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary of the disclosure and are not intended to limit the scope of what the inventors regard as their disclosure. Efforts have been made to ensure accuracy with respect to numbers (e.g., amounts, temperature, etc.), but some errors and deviations should be accounted for. Unless indicated otherwise, ingredient concentrations are weight/volume (e.g., mg/L) or molar/millimolar, temperature is in °C or is at ambient temperature, and pressure is at or near atmospheric.

It should be noted that certain tables (Tables 4-13 and 59) referred to herein below follow this section and before the claims in full-page format in landscape orientation and rotated 90° counterclockwise to the text preceding and following these tables.

### Example 1. Materials and Methods - Umami Taste.

Representative formulations within the scope of the disclosed formulations were prepared and subjected to sensory testing by the methods described above in the section entitled Testing Methodology, where formulations were rated on a 0-15 scales for the Taste Attributes: Umami Intensity (Ul), Saltiness Intensity (Sal), Sourness Intensity (Sol), Bitterness Intensity (BI), Astringency Intensity (Al), and Mouthfeel Intensity (MF). In sensory test sessions, the number of samples evaluated was limited to four. In the initial phase of formulation screening, testing was carried out in triplicate with a single subject extensively experienced in the technique of flavor profile analysis.

Materials used in these studies were as follows: MSG·H₂O, monohydrate form ≥ 93.0% (Millipore Sigma Corporation, St. Louis, Missouri); inosine 5'-monophosphate disodium salt hydrate with formula given as C₁₀H₁₁N₄O₈PNa₂.xH₂O, although sample specification information provided no information as to specific H₂O content; potassium chloride (NOW Foods, Bloomingdale, Illinois); magnesium chloride hexahydrate (Heiltropfen Laboratories LLP, London, United Kingdom); calcium chloride, anhydrous ≥ 93.0% (Millipore Sigma Corporation); and distilled water (Kroger brand distilled water).

### Example 2. Effect of a Representative Disclosed Taste Modulation Formulation on Umami Taste.

This study assessed the effect of a disclosed taste modulation formulation on umami taste and other sensory perceptions as described above for the test method, i.e., Umami Intensity (Ul), Sourness Intensity (Sol), Saltiness Intensity (Sal), Bitterness Intensity (BI), Mouthfeel Intensity (MF) and Astringency Intensity (Al).

The sensory protocol was as follows:
1. Scramble ambient temperature samples so that each test solution is an unknown sample for sensory testing.
2. Rinse mouth with 15 mL water while swishing vigorously followed by expectoration.
3. Take 15 mL of the sample into the mouth and swish around vigorously for 15 sec scaling Umami Intensity (U), Sourness Intensity (So), Saltiness Intensity (Sa), Bitterness Intensity (B), Mouthfeel Intensity (MF) and Astringency Intensity (A) on 0-15 scales during this period and recording them in a table.
4. Expectorate sample, rinse mouth vigorously with 15 mL water and expectorate at 15 sec.
5. Note any change in sensory perceptions over the next 2 min and record observations in a table.
6. Rinse mouth with 15 mL water with vigorous agitation in the mouth for 15 sec and expectorate.
7. Wait a minimum of 15 min and repeat with next sample.
8. Break sample code to identify samples.

Materials: MSG.H₂O (MW = 187.13): Sigma-Aldrich Monohydrate (>/= 93.0%); Potassium Chloride (MW = 74.55): Now Foods (Bloomingdale, IL); Magnesium Chloride Hexahydrate (M = 203.30): Heiltropfen (Germany); Calcium Chloride (MW = 110.98): Sigma-Aldrich Anhydrous (>/= 93.0%); and Water: Kroger Brand Distilled Water.

Briefly, a stock solution of 10 mM KCI (746 mg/L) / 3 mM MgCl₂•6H₂O (610 mg/L) / 3 mM CaCl₂ (333 mg/L) in 1.00 L water was prepared in a 1L E-flask, stirring to full dissolution. 100 mL portions of the mineral salt solution were then transferred to two 250 mL plastic-capped glass bottles and 100 mL portions of waterwere added to the other two 250 mL plastic-capped glass bottles. Sample completion was carried out by addition of MSG as follows for Sample Nos. 1-4.

Sample 1: MSG·H₂O (12 mM, 224 mg/100 mL) in water; pH = 6.72 at 22 °C. Indicated in Sample ID below as "MSG Control 1."

Sample 2: MSG·H₂O (12 mM, 224 mg/100 mL) in water. Indicated in Sample ID below as "MSG Control 2."

Sample 3: MSG·H₂O (12 mM, 224 mg/100 mL) in the stock solution described above (10 mM KCI, 3 mM MgCl₂, and 3 mM CaCl₂); pH = 7.08 at 22 °C. Indicated in Sample ID below as "MSG + TMS - 1."

Sample 4: MSG·H₂O (12 mM, 224 mg/100 mL) in the stock solution described above (10 mM KCI, 3 mM MgCl₂, and 3 mM CaCl₂). Indicated in Sample ID below as "MSG + TMS - 2."

Three independent trials were carried out and the data are summarized below in Table 1, with individual results from each trial and average of the three trials as indicated.

**Table 1.**

| **Samples** | **UI** | **Sol** | **Sal** | **BI** | **MF** | **AI** | **Comments** |
|---|---|---|---|---|---|---|---|
| MSG | 5,5,4 | 0,0,0 | 2,2,2 | 3,3,3 | 3,3,4 | 0,0,0 | Excellent inter-trial reproducibility showing weak MF and weak bitter off taste in every trial. |
| Control 1 | **Ave:** | **Ave:** | **Ave:** | **Ave:** | **Ave:** | **Ave:** | |
| | **4.7** | **0.0** | **2.0** | **3.0** | **3.3** | **0.0** | |
| MSG | 5,5,4 | 0,0,0 | 2,2,2 | 3,3,3 | 3,3,3 | 0,0,0 | Excellent inter-trial reproducibility showing weak MF and weak bitter off taste in every trial. |
| Control 2 | **Ave:** | **Ave:** | **Ave:** | **Ave:** | **Ave:** | **Ave:** | |
| | **4.7** | **0.0** | **2.0** | **3.0** | **3.0** | **0.0** | |
| MSG + | 5,5,5 | 0,0,0 | 2,2,2 | 0,0,0 | 6,6,6 | 0,0,0 | Excellent inter-trial reproducibility showing significantly increased MF and reduction in bitter off taste. |
| TMS - 1 | **Ave:** | **Ave:** | **Ave:** | **Ave:** | **Ave:** | **Ave:** | |
| | **5.0** | **0.0** | **2.0** | **0.0** | **6.0** | **0.0** | |
| MSG + | 5,5,5 | 0,0,0 | 2,2,2 | 0,0,0 | 6,6,6 | 0,0,0 | Excellent inter-trial reproducibility showing significantly increased MF and reduction in bitter off taste. |
| TMS - 2 | **Ave:** | **Ave:** | **Ave:** | **Ave:** | **Ave:** | **Ave:** | |
| | **5.0** | **0.0** | **2.0** | **0.0** | **6.0** | **0.0** | |

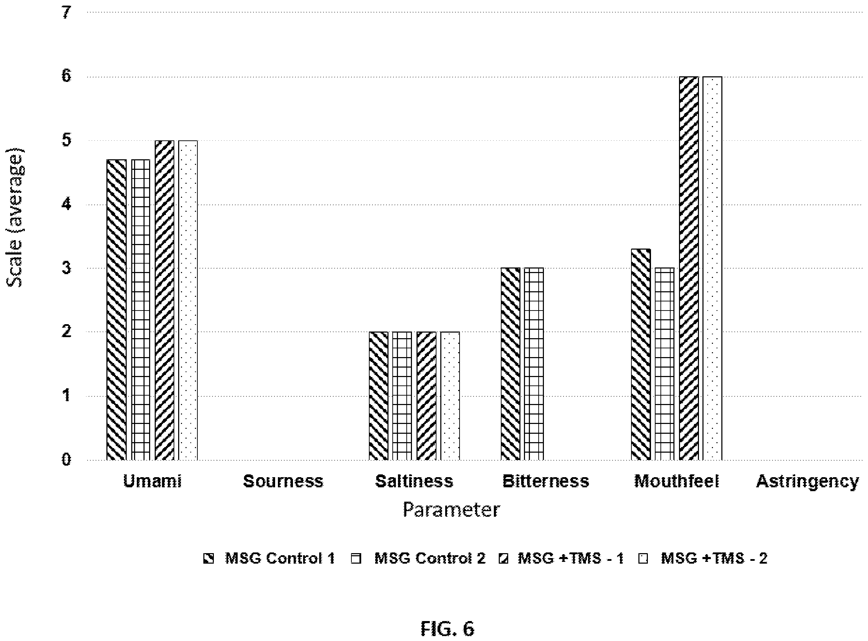

The data obtained in the sensory trials above indicated that a control solution having MSG at 12 mM exhibited a weak to medium intensity umami taste with some mouthfeel and, surprisingly, a noticeable bitter off-taste. The disclosed taste modulator composition tested in the above sensory trials demonstrated that it was capable of completely eliminating the bitter off-taste of the control solution and that it markedly increased the mouthfeel. The average of the data for the three trials is shown graphically in FIG. 6. These data show that the disclosed taste modulation compositions can eliminate bitter off-taste and improve mouthfeel in a common commercial umami taste stimulus. The disclosed taste modulation compositions are believed to be useful for improving taste qualities of a variety of savory foods.

### Example 3. Effect of a Representative Disclosed Taste Modulation Formulation on Umami Taste.

This study assessed the effects of a disclosed taste modulation formulation on umami taste and other sensory perceptions as described above for the test method, i.e., Umami Intensity (UI), Sourness Intensity (Sol), Saltiness Intensity (Sal), Bitterness Intensity (BI), Mouthfeel Intensity (MF) and Astringency Intensity (Al).

The sensory protocol was as described above in Example 2.

Materials: MSG.H₂O (MW = 187.13): Sigma-Aldrich Monohydrate (>/= 93.0%); Potassium Chloride (MW = 74.55): Now Foods (Bloomingdale, IL); Magnesium Chloride Hexahydrate (M = 203.30): Heiltropfen (Germany); Calcium Chloride (MW = 110.98): Sigma-Aldrich Anhydrous (>/= 93.0%); Water: Kroger Brand Distilled Water; and Inosine 5'-Monophosphate Disodium Salt Hydrate (MW = 392.17 Anhydrous). For the Inosine 5'-Monophosphate Disodium Salt Hydrate used, the manufacturer's formula was given as C₁₀H₁₁N₄O₈PNa₂.xH₂O, i.e., the material was specified as a hydrate but no information was provided regarding H₂O content.

Briefly, a stock solution of 10 mM KCI (746 mg/L) / 3 mM MgCl₂•6H₂O (610 mg/L) / 3 mM CaCl₂ (333 mg/L) in 1.00 L water was prepared in a 1L E-flask, stirring to full dissolution. 100 mL portions of the mineral salt solution were then transferred to two 250 mL plastic-capped glass bottles and 100 mL portions of waterwere added to the other two 250 mL plastic-capped glass bottles. Sample completion was carried out by addition of MSG as follows for Sample Nos. 1-4.

Sample 1: MSG·H₂O (12 mM, 224 mg/100 mL) and IMP (1.2 mM, 47mg/100 mL) in water; pH = 7.36 at 22 °C. Indicated in Sample ID below as "MSG/IMP Control 1."

Sample 2: MSG·H₂O (12 mM, 224 mg/100 mL) and IMP (1.2 mM, 47mg/100 mL)in water. Indicated in Sample ID below as "MSG/IMP Control 2."

Sample 3: MSG·H₂O (12 mM, 224 mg/100 mL) and IMP (1.2 mM, 47mg/100 mL)in the stock solution described above (10 mM KCI, 3 mM MgCl₂, and 3 mM CaCl₂); pH = 7.35 at 22 °C. Indicated in Sample ID below as "MSG/IMP + TMS - 1."

Sample 4: MSG·H₂O (12 mM, 224 mg/100 mL) in the stock solution described above (10 mM KCI, 3 mM MgCl₂, and 3 mM CaCl₂). Indicated in Sample ID below as "MSG/IMP + TMS - 2."

Three independent trials were carried out and the data are summarized below in Table 2, with individual results from each trial and average of the three trials as indicated.

**Table 2.**

| **Samples** | **UI** | **Sol** | **Sal** | **BI** | **MF** | **Al** | **Comments** |
|---|---|---|---|---|---|---|---|
| MSG/IMP | 6,6.6 | 0,0,0 | 2,2,2 | 3,3,3 | 3,3,3 | 2,1,2 | Excellent reproducibility. |
| Control 1 | **Ave:** | **Ave:** | **Ave:** | **Ave:** | **Ave:** | **Ave:** | |
| | **6.0** | **0.0** | **2.0** | **3.0** | **3.0** | **1.7** | |
| MSG/IMP | 5,6,6 | 0,0,0 | 2,1,2 | 3,3,3 | 3,3,3 | 2,1,2 | Excellent reproducibility. |
| Control 2 | **Ave:** | **Ave:** | **Ave:** | **Ave:** | **Ave:** | **Ave:** | |
| | **5.7** | **0.0** | **1.7** | **3.0** | **3.0** | **1.7** | |
| MSG/IMP + TMS - 1 | 6,6.6 | 0,0,0 | 2,2,2 | 0,0,0 | 6,6.6 | 1,1,2 | Excellent reproducibility. |
| | **Ave:** | **Ave:** | **Ave:** | **Ave:** | **Ave:** | **Ave:** | |
| | **6.0** | **0.0** | **2.0** | **0.0** | **6.0** | **1.3** | |
| MSG/IMP + TMS - 2 | 6,7,7 | 0,0,0 | 2,2,2 | 0,0,0 | 6,6.6 | 0,0,2 | Excellent reproducibility. |
| | **Ave:** | **Ave:** | **Ave:** | **Ave:** | **Ave:** | **Ave:** | |
| | **6.7** | **0.0** | **2.0** | **0.0** | **6.0** | **0.7** | |

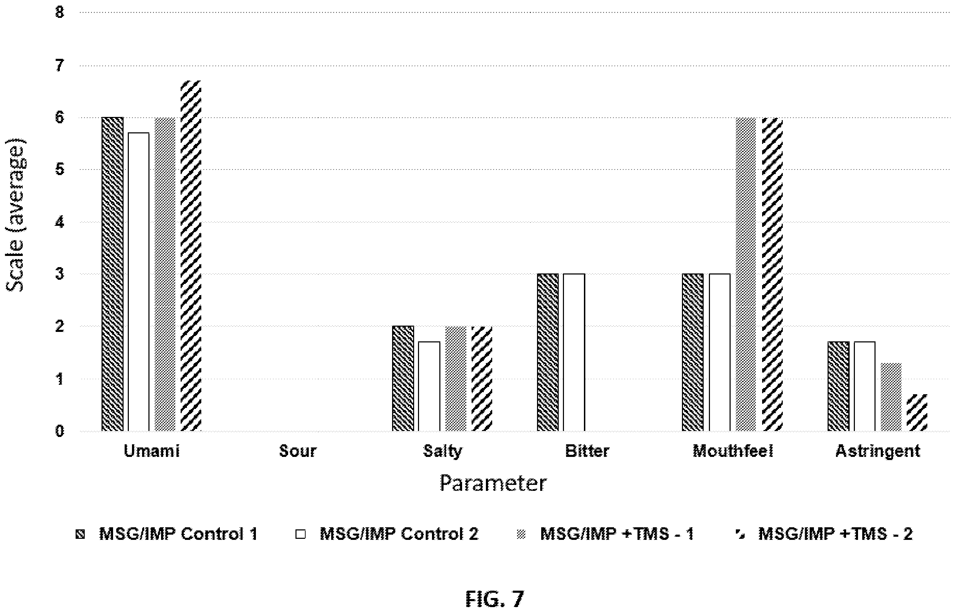

The data obtained in the sensory trials above indicated that a control solution having MSG at 12 mM and IMP at 1.2 mM exhibited a medium intensity umami taste with some mouthfeel and, surprisingly, a noticeable bitter off-taste. The disclosed taste modulator composition tested in the above sensory trials demonstrated that it was capable of completely eliminating the bitter off-taste of the control solution and that it markedly increased the mouthfeel. The average of the data for the three trials is shown graphically in FIG. 7. These data show that the disclosed taste modulation compositions can eliminate bitter off-taste and improve mouthfeel in a common commercial umami taste stimulus. The disclosed taste modulation compositions are believed to be useful for improving taste qualities of a variety of savory foods.

### Example 4. Effect of a Representative Disclosed Taste Modulation Formulation on Mouthfeel with Umami Taste.

This study assessed the effects of a disclosed taste modulation formulation on umami taste and other sensory perceptions as described above for the test method, i.e., Umami Intensity (Ul), Sourness Intensity (Sol), Saltiness Intensity (Sal), Bitterness Intensity (BI), Mouthfeel Intensity (MF) and Astringency Intensity (Al).

The sensory protocol was as described above in Example 2.

Materials: Materials: MSG (MW = 187.13; Ajinomoto Foods North America, Inc., Ontario, CA); Potassium Chloride (MW = 74.55): Now Foods (Bloomingdale, IL); Magnesium Chloride Hexahydrate (MgCl₂•6H₂O; M = 203.30): Heiltropfen (Germany); Calcium Chloride (MW = 110.98): Sigma-Aldrich Anhydrous (>/= 93.0%); Water: Kroger Brand Distilled Water;

Briefly, a MSG Stock Solution of 12 mM MSG (224mg/L) was prepared and 100 mL portions of it were added to four 250 mL plastic-capped glass bottles. Sample preparation was complted as follows:
Sample 1: 100 mL of MSG Stock Solution; pH = 6.71. Indicated in Sample ID below as "MSG Control 1."
Sample 2: 100 mL of MSG Stock Solution + 10 mM KCI (74mg/100 mL), 1.5 mM MgCl₂.6H₂O (31mg/100 mL), and 1.5 mM CaCl₂ (17mg/100 mL); pH 7.11. Indicated in Sample ID below as "MSG/K/Mg/Ca Sample 1."
Sample 3: 100 mL of MSG Stock Solution + 10 mM KCI (74mg/100 mL), 3.0 mM MgCl₂.6H₂O (61mg/100 mL), and 3.0 mM CaCl₂ (33mg/100 mL); pH 7.10. Indicated in Sample ID below as "MSG/K/Mg/Ca Sample 2."
Sample 4: 100 mL of MSG Stock Solution + 10 mM KCI (74mg/100 mL), 5 mM MgCl₂.6H₂O (102mg/100 mL), and 5 mM CaCl₂ (55mg/100 mL); pH 7.11. Indicated in Sample ID below as "MSG/K/Mg/Ca Sample 3."

Eight independent trials were carried out and the average results are summarized below in Table 3.

**Table 3.**

| **Samples** | **Ul** | **Sol** | **Sal** | **Bl** | **MF** | **Al** |
|---|---|---|---|---|---|---|
| MSG Control 1 | 5.0 | 0.0 | 2.0 | 0.0 | 1.5 | 0.0 |
| MSG/K/Mg /Ca Sample 1 | 5.0 | 0.0 | 2.0 | 0.0 | 4.2 | 0.0 |
| MSG/K/Mg /Ca Sample 2 | 5.0 | 0.0 | 2.0 | 0.0 | 5.2 | 0.0 |
| MSG/K/Mg /Ca Sample 3 | 5.0 | 0.0 | 2.0 | 0.0 | 5.0 | 0.0 |

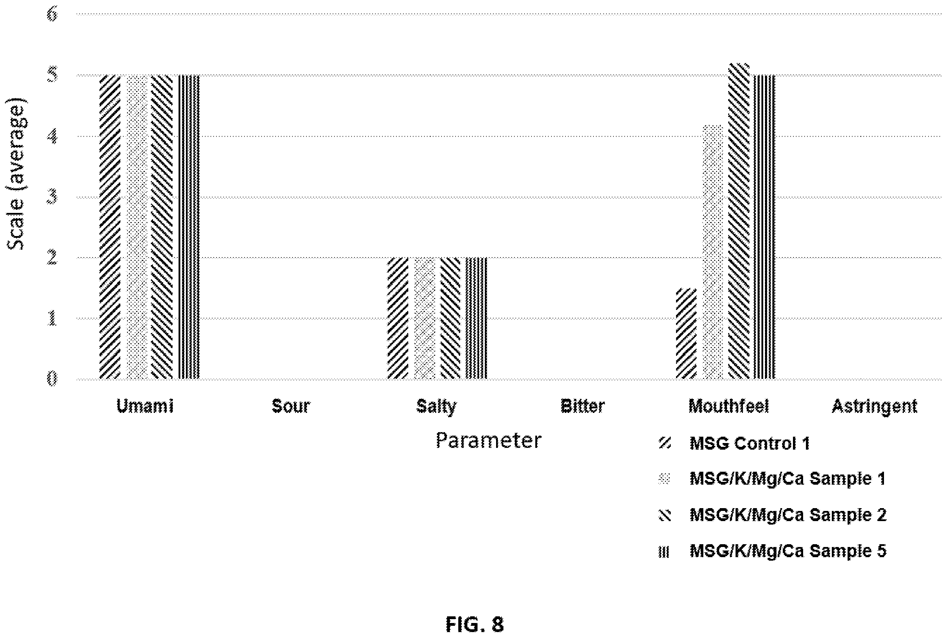

The data obtained shows that representative disclosed taste modulator compositions improve the low mouthfeel value of the control sample, i.e, the disclosed taste modulator composition tested in the above sensory trials demonstrated that it was capable of markedly increasing the mouthfeel. The average of the data for the three trials is shown graphically in FIG. 8. These data show that the disclosed taste modulation compositions can improve mouthfeel in a common commercial umami taste stimulus. The disclosed taste modulation compositions are believed to be useful for improving taste qualities, e.g., mouthfeel, of a variety of savory foods.

Standard Deviations, Standard Errors and Confidence Intervals with the results provided in the following table (Table 4). And since the Confidence Intervals do not overlap for the MF ratings of the MSG Control and the KCl/MgCl₂/CaCl₂ taste modulator fortified MSG samples, it can be concluded that the taste modulator, at a 95% level of confidence, increases MSG MF. In addition, since the Confidence Intervals do not overlap for the 10 mM KCI/1.5 mM MgCl₂/1.5 mM CaCl₂ taste modulator MSG sample and the 10 mM KCI/3.0 mM MgCl₂/3.0 mM CaCl₂ taste modulator MSG sample, it can be concluded, with a 95% level of confidence, that there is a relationship between MF and the concentrations of MgCl₂ and CaCl₂ in the taste modulator composition. It is of interest that MF did not further increase in proceeding from the 10 mM KCI/3.0 mM MgCl₂/3.0 mM CaCl₂ taste modulator MSG sample to the 10 mM KCI/5.0 mM MgCl₂/5.0 mM CaCl₂ taste modulator MSG sample which may suggest that a maximal or optimal taste modulator composition is about 3-5 mM for MgCl₂ and CaCl₂ in these studies. Data for the individual trials and calculated standard deviations are given below in Table 3.

**Table 3.**

| Trial | MSG Control 1 | MSG/K/Mg/Ca Sample 1 | MSG/K/Mg/Ca Sample 2 | MSG/K/Mg/Ca Sample 3 |
|---|---|---|---|---|
| 1 | 2 | 4 | 6 | 5 |
| 2 | 2 | 5 | 4 | 5 |
| 3 | 1 | 5 | 6 | 4 |
| 4 | 1 | 3 | 5 | 6 |
| 5 | 1 | 3 | 6 | 5 |
| 6 | 1 | 4 | 5 | 6 |
| 7 | 2 | 5 | 5 | 3 |
| 8 | 2 | 4 | 5 | 6 |
| Mean | 1.50 | 4.13 | 5.25 | 5.00 |
| SD | 0.53 | 0.83 | 0.71 | 1.07 |
| SE | 0.19 | 0.30 | 0.25 | 0.38 |
| Confidence Interval Lower Bound | 1.1 | 3.5 | 4.8 | 4.2 |
| Confidence Interval Upper Bound | 1.9 | 4.7 | 5.8 | 5.8 |

### Example 5. Effect of a Representative Disclosed Taste Modulation Formulation on Mouthfeel with Umami Taste.

This study assessed the effects of a disclosed taste modulation formulation on umami taste and other sensory perceptions, e.g., mouthfeel, as described above for the test method, i.e., Umami Intensity (Ul), Sourness Intensity (Sol), Saltiness Intensity (Sal), Bitterness Intensity (BI), Mouthfeel Intensity (MF) and Astringency Intensity (Al).

The sensory protocol was as described above for Example 4.

**Experiment 1.** The effect of a disclosed taste modulation formulation on umami taste and other sensory perceptions, e.g., mouthfeel, was assessed for a Savory Food Seasoning preparation as described below.

Materials: Savory Food Seasoning preparation was Trader Joe's Mushroom & Company Multipurpose Umami Seasoning Blend ("TJU"); Ingredients include Kosher Salt, Dried Onions; Ground Mustard Seed, Porcini Mushroom Powder, White Button Mushroom Powder, Crushed Red Pepper, Black Pepper and Dried Thyme. Serving Size indicated to be ¼ tsp = 1g w/ 0g Fat, 140mg Sodium, 0g Carbohydrate and 0g Protein (Trader Joe's, Monrovia, CA). All other materials were as described above for Example 4.

Sample 1: TJU @ 600mg/100 mL Water; pH = 5.76. Indicated in Sample ID below as "TJU Control 1."

Sample 2: TJU @ 600mg/100 mL Water, KCI @ 10 mM (74mg/100 mL), MgCl₂.6H₂O @ 3 mM (61mg/100 mL) and CaCl₂ @ 3 mM (33mg/100 mL) in Water; pH = 5.45. Indicated in Sample ID below as "TJU/K/Mg/Ca Sample 1."

Three independent trials were carried out and the average results are summarized below in Table 4.

**Table 4.**

| **Samples** | **UI** | **Sol** | **Sal** | **BI** | **MF** | **Al** |
|---|---|---|---|---|---|---|
| TJU Control 1 | 3.7 | 0.0 | 2.0 | 0.0 | 4.0 | 0.0 |
| TJU/K/Mg/Ca Sample 1 | 3.7 | 0.0 | 2.0 | 0.0 | 6.0 | 0.0 |

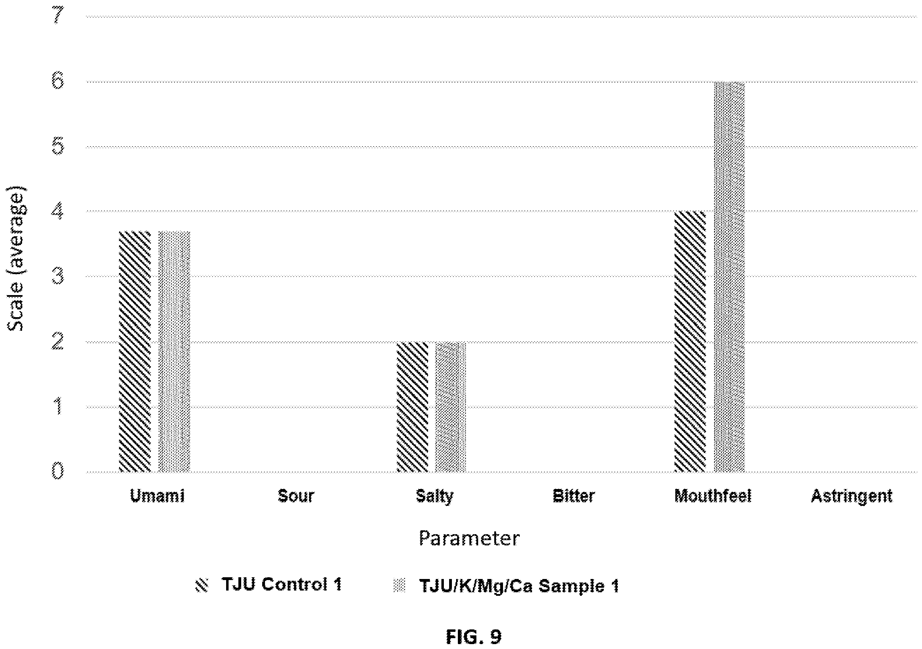

The data obtained shows that representative disclosed taste modulator compositions improve the low mouthfeel value of the control sample, i.e, the disclosed taste modulator composition tested in the above sensory trials demonstrated that it was capable of markedly increasing the mouthfeel. The average of the data for the three trials is shown graphically in FIG. 9. These data show that the disclosed taste modulation compositions can improve mouthfeel in a common commercial umami taste stimulus. The disclosed taste modulation compositions are believed to be useful for improving taste qualities, e.g., mouthfeel, of a variety of savory foods.

**Experiment 2.** The effect of a disclosed taste modulation formulation on umami taste and other sensory perceptions, e.g., mouthfeel, was assessed for a Savory Food Seasoning preparation as described below.

Materials: Savory Food Seasoning preparation was Takaii Umami Powder Seasoning made from Shiitake Mushrooms ("TUP"); Ingredients include Shiitake Mushroom Powder, Salt, Mushroom Extract and Calcium Carbonate. Serving Size indicated to be ½ tsp or 2g w/ 0g Fat, 260mg Sodium, 0g Carbohydrate and 0g Protein; Label also states Vegan, Gluten Free and No MSG (Fifth Foods Inc., Mercer Island, WA). All other materials were as described above for Example 4.

Sample 1: TUP @ 600mg/100 mL Water; pH = 6.55. Indicated in Sample ID below as "TJU Control 1."

Sample 2: TUP @ 600mg/100 mL Water, KCI @ 10 mM (74mg/100 mL), MgCl₂.6H₂O @ 3 mM (61mg/100 mL) and CaCl₂ @ 3 mM (33mg/100 mL) in Water; pH = 6.53. Indicated in Sample ID below as "TJU/K/Mg/Ca Sample 1."

Three independent trials were carried out and the average results are summarized below in Table 5.

**Table 5.**

| **Samples** | **UI** | **Sol** | **Sal** | **BI** | **MF** | **Al** |
|---|---|---|---|---|---|---|
| TUP Control 1 | 5.3 | 0.0 | 2.7 | 0.0 | 4.0 | 0.0 |
| TUP/K/Mg/Ca Sample 1 | 5.7 | 0.0 | 3.0 | 0.0 | 5.7 | 0.0 |

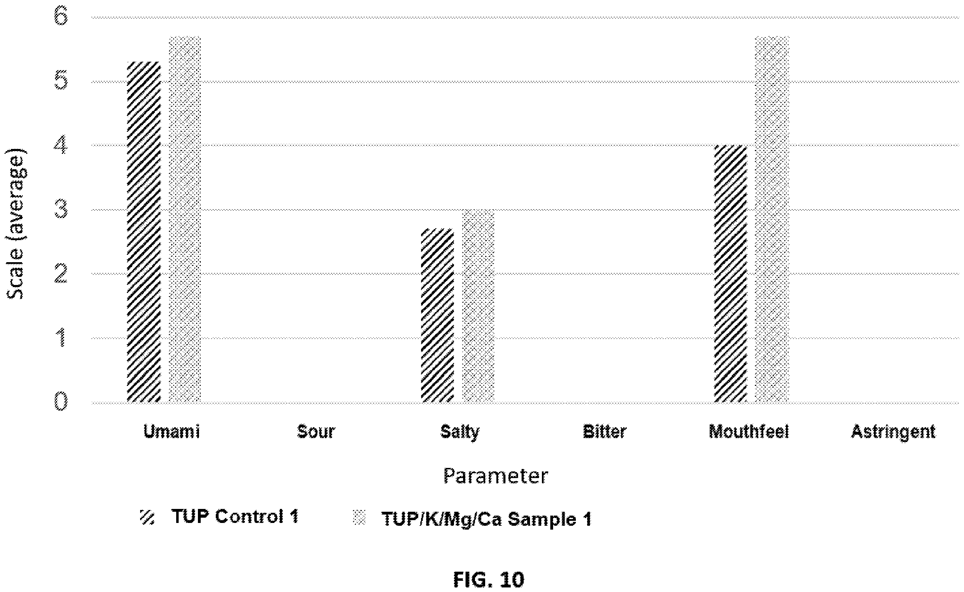

The data obtained shows that representative disclosed taste modulator compositions improve the low mouthfeel value of the control sample, i.e, the disclosed taste modulator composition tested in the above sensory trials demonstrated that it was capable of markedly increasing the mouthfeel. The average of the data for the three trials is shown graphically in FIG. 10. These data show that the disclosed taste modulation compositions can improve mouthfeel in a common commercial umami taste stimulus. The disclosed taste modulation compositions are believed to be useful for improving taste qualities, e.g., mouthfeel, of a variety of savory foods.

### Example 6. Effect of a Representative Disclosed Taste Modulation Formulation on Mouthfeel with Hydrolyzed Vegetable Protein.

This study assessed the effects of a disclosed taste modulation formulation on sensory perceptions, e.g., mouthfeel, as described above for the test method with a hydrolyzed vegetable protein preparation, i.e., Umami Intensity (Ul), Sourness Intensity (Sol), Saltiness Intensity (Sal), Bitterness Intensity (BI), Mouthfeel Intensity (MF) and Astringency Intensity (Al).

The sensory protocol was as described above for Example 2.

Materials: The hydrolyzed vegetable protein preparation was Zammex Hydropea Hydrolyzed Pea Protein (ZHP); Ingredients include Pure Organic Pea Protein. Serving Size indicated to be 2 scoops or 34g w/ 1.5g Fat, 110mg Sodium, 1.3g Carbohydrate and 27.2g Protein. Each serving indicated to contain 1163mg Alanine, 2404mg Arginine, 3128mg Aspartic Acid, 4753mg Glutamic Acid, 1064mg Glycine, 683mg Histidine, 224mg Tryptophan, 476mg Cystine, 1343mg Isoleucine, 2349mg Leucine, 2050mg Lysine, 296mg Methionine, 1526mg Phenylalanine, 1118mg Proline, 1394mg Serine, 1000mg Threonine, 1030mg Tyrosine and 1400mg Valine; (Zammex Nutrition LLC, Piscataway, NJ).. All other materials were as described above for Example 4.

Sample 1: ZHP @ 2000mg/100 mL Water; pH = 7.13. Indicated in Sample ID below as "ZHP Control 1."

Sample 2: ZHP @ 2000mg/100 mL Water; KCI @ 10 mM (74mg/100 mL), MgCl₂.6H₂O @ 3 mM (61mg/100 mL) and CaCl₂ @ 3 mM (33mg/100 mL) in Water; pH = 5.45. Indicated in Sample ID below as "ZHP/K/Mg/Ca Sample 1."

Three independent trials were carried out and the average results are summarized below in Table 6.

**Table 6.**

| **Samples** | **UI** | **Sol** | **Sal** | **BI** | **MF** | **Al** |
|---|---|---|---|---|---|---|
| TJU Control 1 | 0.0 | 0.0 | 0.0 | 0.0 | 0.3 | 0.0 |
| TJU/K/Mg/Ca Sample 1 | 0.0 | 0.0 | 0.0 | 0.0 | 3.3 | 0.0 |

The data obtained shows that representative disclosed taste modulator compositions improve the low mouthfeel value of the control sample, i.e, the disclosed taste modulator composition tested in the above sensory trials demonstrated that it was capable of markedly increasing the mouthfeel. The average of the data for the three trials is shown graphically in FIG. 10. These data show that the disclosed taste modulation compositions can improve mouthfeel in a common hydrolyzed vegetable protein preparation. The disclosed taste modulation compositions are believed to be useful for improving taste qualities, e.g., mouthfeel, of food additives, e.g., hydrolyzed vegetable protein preparation.

### Example 1. Effect of a Representative Disclosed Taste Modulation Formulation on Bitterness with Stevia Sweetener Preparations.

It is known some stevia sweetner preparations are associated with a bitter off-taste sensory sensation, and the level of bitterness can vary with processing method and overall purity of the preparation. This study assessed the effects of a disclosed taste modulation formulation on sensory perceptions, e.g., Sourness Intensity (Sol), Saltiness Intensity (Sal), Bitterness Intensity (BI), Mouthfeel Intensity (MF) and Astringency Intensity (Al), using various commercial stevia sweetener preparation.

### Experiment 1.

Materials: The stevia sweetener preparations are as described herein. All other materials were as described above for Example 4. The 3 commercial tabletop sweeteners purchased were as follows:
- Splenda Naturals Stevia Zero Calorie Sweetener: The package label indicated this product to be 2.0g/packet of erythritol and stevia leaf extract and for 1 packet to be equivalent to 2 teaspoons of sugar. Further the package label indicated the stevia extract to be rebaudioside D and to taste like sugar and have no aftertaste. The product is distributed by TC Heartland LLC (Carmel, IN).
- Simple Truth Organic Zero Calorie Sweetener Stevia Extract Blend: The package label indicated this product to be 1.0g/packet organic erythritol and organic stevia extract. Further the package label indicated that one packet is equivalent to 2 teaspoons of sugar. The product is distributed by The Kroger Co. (Cincinnati, Ohio).
- Stevia in the Raw Zero Calorie Sweetener: The package label indicated this product to be 1.0g/packet dextrose and stevia leaf extract. Further the package label indicated each packet to have the sweetness of 2 teaspoons of sugar. The product is distributed by Cumberland Packing Corporation (Brooklyn, NY).

The sensory protocol was generally as described below, with Sweetness Intensity and Bitterness Intensity assessed using a 0-15 scales.

They were first evaluated at 1 packet / 4 oz (120 mL) and second at 2 packets / 4 oz (120 mL) distilled water. The results of this evaluation are shown in Table 7 below.

**Table 7.**

| **Sweetener** | **One Packet** / **4Oz** | | **Two Packets / 4Oz** | |
|---|---|---|---|---|
| | **Sweetness** | **Bitterness** | **Sweetness** | **Bitterness** |
| Splenda Naturals Stevia Zero Calorie Sweetener (SNS) | 6 | 0 | 8 | 0 |
| Simple Truth Organic Zero Calorie Sweetener Stevia Extract Blend (STO) | 6 | 2 | 8 | 5 |
| Stevia in the Raw Zero Calorie Sweetener (SRS) | 4 | 0 | 8 | 3 |

The data obtained shows that certain commercial stevia preparations are associated with a concentration-dependent bitterness sensory component.

From the foregoing analysis it was determined that the STO sweetener was a suitable stevia sweetener preparation to test for bitterness inhibition using a disclosed taste modulation composition. The following two samples were then prepared:
(a) 2 packets of STO tabletop sweetener in 100 mL distilled water; and
(b) 2 packets of STO tabletop sweetener in 100mL distilled water with KCI @ 10 mM, MgCl₂•6H₂O @ 3 mM and CaCl₂ @ 3 mM.

The two samples were then evaluated in duplicate with the following sensory protocol:
(1) taste the STO / 10 mM KCI / 3 mM MgCl₂ / 3 mM CaCl₂ sample swirling gently in the mouth for 15 sec and expectorate;
(2) rinse with 15 mL water and expectorate @ 30 sec;
(3) rate intensities of Sweetness, Saltiness, Bitterness, Mouthfeel, Astringency on a 0-15 scales and Sweetness Appearance Time [R = Rapid (0.0), D = Delay (2.5), SD = Significant Delay (5.0)];
(4) observe the Sweetness Rebound after the water rinse and rate Sweetness Linger @ 2min 30 sec on a 0-5 scale;
(5) rinse with 15 mL water, observe Sweetness Desensitization and rate [N = None (0.0), S = Slight (2.5), M = Medium (5.0)]; and
(6) repeat Steps 1-5 w/ the STO Sample after a 15 min break.

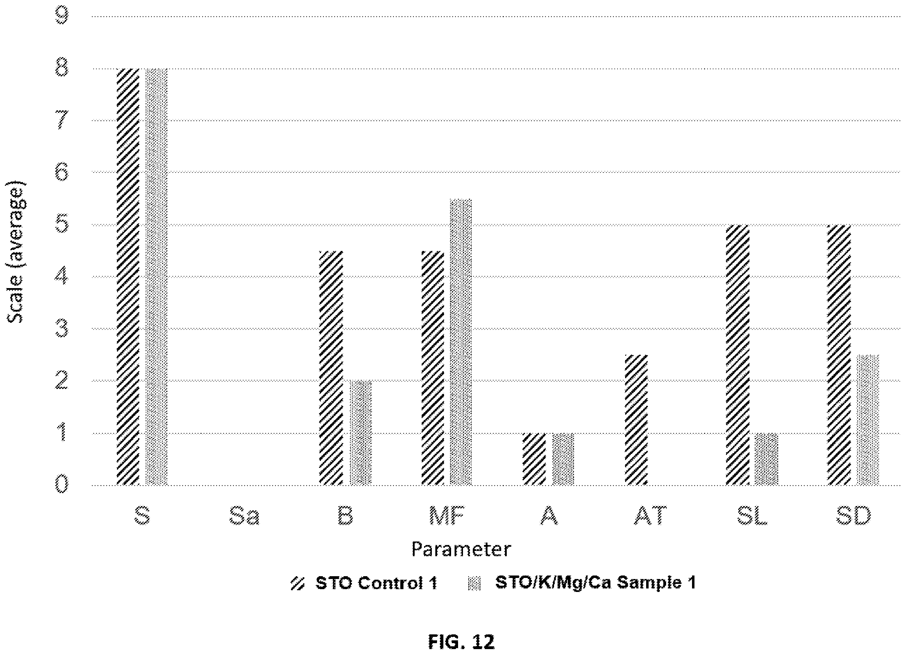

The results obtained in the foregoing study are shown below in Table 8 and FIG. 12.

**Table 8.**

| **Sample** | **S** | **Sa** | **B** | **MF** | **A** | **AT** | **SL** | **SD** |
|---|---|---|---|---|---|---|---|---|
| STO w/ KCl/MgCl₂/CaCl₂ | 8 | 0 | 2 | 5.5 | 1 | 0 | 1 | 2.5 |
| STO | 8 | 0 | 4.5 | 4.5 | 1 | 2.5 | 5 | 5 |

The data show that a representative taste modulator composition, i.e., 10 mM KCI / 3 mM MgCl₂ / 3 mM CaCl₂, markedly reduces the bitter off taste of the STO tabletop sweetener. At the same time, this taste modulator composition also increases the Mouthfeel of the STO tabletop sweetener, accelerates its sweetness Appearance Time, reduces its Sweetness Linger and also reduces the Sweetness Desensitization observed for this commercial product. It is noteworthy that the STO stevia sweetener preparation exhibits significant Mouthfeel even in the absence of the taste modulator. Without wishing to be bound by a particular theory, it is believed that significant baseline Mouthfeel observed with the STO stevia sweetener preparation is a consequence of the high level of erythritol in the product.

### Experiment 2.

Materials: a commercial stevia sweetener preparation having a weak bitter off-taste was tested. The commercial stevia sweetener preparation, referred to herein as "STEV", comprises not less than 95 wt% steviol glycosides, of which, not less than 50 wt% is Rebaudioside A, and the balance comprises a mixture of compounds comprising a steviol backbone conjugated to any number or combination of the principal sugar moieties (glucose, rhamnose, xylose, fructose, arabinose, galactose and deoxyglucose) in any of the orientations occurring in the leaves of Stevia rebaudiana Bertoni" (JECFA 2017 definition). All other materials were as described above for Example 4.

In this experiment, the effectiveness of a representative disclosed taste modulator composition comprising KCl/MgCl₂•6H₂O/CaCl₂ was evaluated for inhibition of bitterness observed in STEV, both in distilled water and in citric acid buffer (CAB), prepared by addition of 10% KOH to 1.50 g citric acid monohydrate in 1L distilled water until a pH of 3.2 was reached. The following samples were prepared:
(1) 500mg/L STEV in water;
(2) 500mg/L STEV and 5 mM KCI / 3 mM MgCl₂•6H₂O / 3 mM CaCl₂ in water;
(3) 500mg/L STEV in CAB; and
(4) 500mg/L STEV and 5 mM KCI / 3 mM MgCl₂•6H₂O / 3 mM CaCl₂ in CAB.

The foregoing four samples were then evaluated with the sensory protocol as described immediately above in Experiment 1 of Example 7.

The results of this analysis are as shown in Table 9 below.

**Table 9**

| **Sample** | **S** | **So** | **Sa** | **B** | **MF** | **A** | **AT** | **SL** | **SD** |
|---|---|---|---|---|---|---|---|---|---|
| 500mg/L STEV in Water | 8 | 0 | 0 | 2 | 0 | 1 | 2.5 | 5 | 5 |
| 500mg/L STEV / 5 mM KCl / 3 mM MgCl₂ / 3 mM CaCl₂ in Water | 8 | 0 | 0 | 1 | 5 | 1 | 0 | 3 | 5 |
| 500mg/L STEV in CAB | 7 | 2 | 0 | 1 | 0 | 2 | 0 | 3 | 2.5 |
| 500mg/L STEV / 5 mM KCl / 3 mM MgCl₂ / 3 mM CaCl₂ in CAB | 8 | 2 | 0 | 0 | 4 | 2 | 0 | 1 | 0 |

The data show a marked improvement in mouthfeel for this stevia sweetener preparation in both water and citric acid buffer, as well as clear improvement in bitterness off-taste.

It should be emphasized that the above-described aspects, including the tables herein below, of the present disclosure are merely possible examples of implementations set forth for a clear understanding of the principles of the disclosure.

## Claims

1. A composition comprising:
an umami agent; and
a taste modulator composition consisting essentially of
a first taste modulator component consisting essentially of a first salt having a first cation Mg²⁺ and a first anion;
a second taste modulator component consisting essentially of a second salt having a second cation Ca²⁺ and a second anion; and optionally
a third taste modulator component consisting essentially of a third salt having a third cation selected from K⁺ and Na⁺ and a third anion;
wherein the first taste modulator component is at a concentration of from 0.1 mM to 10 mM;
wherein the second taste modulator component is at a concentration of from 0.1 mM to 10 mM;
wherein the third taste modulator component, when present, is at a concentration of from 0.1 mM to 25 mM;
wherein the umami agent is present in an amount of from about 0.01 wt% to about 5 wt%;
wherein the first anion is selected from citrate, chloride, phosphate, carbonate, sulfate,
and combinations thereof; and
wherein the second anion is selected from citrate, chloride, phosphate, carbonate, sulfate, and combinations thereof

2. The composition of claim 1, wherein the first taste modulator component is at a concentration of from 1 mM to 5 mM; or
wherein the second taste modulator component is at a concentration of from 1 mM to 5 mM; or
wherein the third taste modulator component is at a concentration of from 1 mM to 15 mM.

3. The composition of claim 1, wherein the first anion is selected from citrate, sulfate, chloride, and combinations thereof, or
wherein the second anion is selected from citrate, sulfate, chloride, and combinations thereof, or
wherein the third anion is selected from citrate, chloride, phospohate, carbonate, sufate, or combinations thereof.

4. The composition of claim 1, wherein the concentration of the first taste modulator component is from 0.1 mM to 5 mM; wherein the concentration of the second taste modulator component is from 0.1 mM to 5 mM; and where the concentration of the third taste modulator component is from 0.1 mM to 25 mM.

5. The composition of claim 1, wherein the umami agent comprises L-glutamate, L-glutamic acid, a salt of L-glutamic acid, L-glutamine, a salt of L-glutamine, L-aspartic acid, a salt of L-aspartic acid, a 5'-ribonucleotide, a 5'-ribonucleotide salt thereof, autolyzed protein, hydrolyzed protein, or combinations thereof

6. The composition of claim 5, wherein the umami agent is selected from guanosine 5'-monophosphate, inosine 5'-monophosphate, disodium guanylate, disodium inosinate, disodium adenylate; dipotassium guanylate, dipotassium inosinate, dipotassium adenylate, calcium guanylate, calcium inosinate, calcium adenylate, and combinations thereof.

7. The composition of claim 1, wherein the umami agent is an extract, a puree, or a puree prepared from a yeast, a vegetable, a cereal, a meat, a fish, a dairy product, or a egg yolk.

8. The composition of claim 7, wherein the umami agent is selected from autolyzed yeast protein, hydrolyzed yeast protein, hydrolyzed vegetable protein, and combinations thereof.

9. The composition of claim 7, wherein the umami agent is fermented.

10. The composition of claim 1, wherein the pH of the savory composition is from pH 2.5 to pH 7.

11. A product comprising the composition of claim 1.

12. The product of claim 11, wherein the savory composition is a food product.

13. The product of claim 12, wherein the food product is a condiment, a cereal product, a rice product, a pasta product, a tapioca product, a sago product, a baker's product, a biscuit product, a pastry product, a bread product, a yeast product, a mustard product, a vinegar product, a processed food product, a cooked vegetable product, a meat, a meat product, a meat substitute product, an egg product, a dairy product, a cheese product, a dairy substitute product, a soy product, an edible oil, or a fat product.

14. A method for improving mouthfeel, the method comprising:
adding a composition of claim 1 to a food product;
wherein mouthfeel is enhanced when compared to a baseline product;
wherein the baseline product consists essentially of identical components as the product without the taste modulator component; and wherein the mouthfeel is determined using a sensory panel study.

15. The method of claim 14, wherein the food product is a condiment, a cereal product, a rice product, a pasta product, a tapioca product, a sago product, a baker's product, a biscuit product, a pastry product, a bread product, a yeast product, a mustard product, a vinegar product, a processed food product, a cooked vegetable product, a meat, a meat product, a meat substitute product, an egg product, a dairy product, a cheese product, a dairy substitute product, a soy product, an edible oil, or a fat product, a snack product such as potato chips, crisps, nuts, tortilla-tostada, pretzels, cheese snacks, corn snacks, potato-snacks, ready-to-eat popcorn, microwaveable popcorn, pork rinds, nuts, crackers, cracker snacks; an aspic product; a cured meat product such as a ham or bacon; a luncheon or breakfast meat product, such as hotdogs, cold cuts, and sausages; a tomato product; a margarine product; a peanut butter product; a soup product such as clear soups, canned soups, cream soups, instant soups, and vegetable or meat broth products; a canned vegetable product; or a pasta sauce product.

## Patentansprüche

1. Eine Zusammensetzung, umfassend:
ein Umami-Mittel und
eine Geschmacksmodulator-Zusammensetzung, bestehend im Wesentlichen aus
einer ersten Geschmacksmodulator-Komponente, bestehend im Wesentlichen aus einem ersten Salz mit einem ersten Kation Mg²⁺ und einem ersten Anion;
einer zweiten Geschmacksmodulator-Komponente, bestehend im Wesentlichen aus einem zweiten Salz mit einem zweiten Kation Ca²⁺ und einem zweiten Anion; und gegebenenfalls
einer dritten Geschmacksmodulator-Komponente, bestehend im Wesentlichen aus einem dritten Salz mit einem dritten Kation, ausgewählt aus K⁺ und Na⁺, und einem dritten Anion;
wobei die erste Geschmacksmodulator-Komponente in einer Konzentration von 0,1 mM bis 10 mM vorliegt;
wobei die zweite Geschmacksmodulator-Komponente in einer Konzentration von 0,1 mM bis 10 mM vorliegt;
wobei die dritte Geschmacksmodulator-Komponente, wenn sie vorliegt, in einer Konzentration von 0,1 mM bis 25 mM vorliegt;
wobei das Umami-Mittel in einer Menge von etwa 0,01 Gew.-% bis etwa 5 Gew.-% vorliegt;
wobei das erste Anion ausgewählt ist aus Citrat, Chlorid, Phosphat, Carbonat, Sulfat und Kombinationen davon; und
wobei das zweite Anion ausgewählt ist aus Citrat, Chlorid, Phosphat, Carbonat, Sulfat und Kombinationen davon.

2. Die Zusammensetzung nach Anspruch 1, wobei die erste Geschmacksmodulator-Komponente in einer Konzentration von 1 mM bis 5 mM vorliegt; oder
wobei die zweite Geschmacksmodulator-Komponente in einer Konzentration von 1 mM bis 5 mM vorliegt; oder
wobei die dritte Geschmacksmodulator-Komponente in einer Konzentration von 1 mM bis 15 mM vorliegt.

3. Die Zusammensetzung nach Anspruch 1, wobei das erste Anion ausgewählt ist aus Citrat, Sulfat, Chlorid und Kombinationen davon, oder
wobei das zweite Anion ausgewählt ist aus Citrat, Sulfat, Chlorid und Kombinationen davon, oder
wobei das dritte Anion ausgewählt ist aus Citrat, Chlorid, Phosphat, Carbonat, Sulfat oder Kombinationen davon.

4. Die Zusammensetzung nach Anspruch 1, wobei die Konzentration der ersten Geschmacksmodulator-Komponente 0,1 mM bis 5 mM beträgt; wobei die Konzentration der zweiten Geschmacksmodulator-Komponente 0,1 mM bis 5 mM beträgt; und wobei die Konzentration der dritten Geschmacksmodulator-Komponente 0,1 mM bis 25 mM beträgt.

5. Die Zusammensetzung nach Anspruch 1, wobei das Umami-Mittel L-Glutamat, L-Glutaminsäure, ein Salz der L-Glutaminsäure, L-Glutamin, ein Salz von L-Glutamin, L-Asparaginsäure, ein Salz der L-Asparaginsäure, ein 5'-Ribonukleotid, ein 5'-Ribonukleotidsalz davon, autolysiertes Protein, hydrolysiertes Protein oder Kombinationen davon umfasst.

6. Die Zusammensetzung nach Anspruch 5, wobei das Umami-Mittel ausgewählt ist aus Guanosin-5'-monophosphat, Inosin-5'-monophosphat, Dinatriumguanylat, Dinatriuminosinat, Dinatriumadenylat; Dikaliumguanylat, Dikaliuminosinat, Dikaliumadenylat, Calciumguanylat, Calciuminosinat, Calciumadenylat und Kombinationen davon.

7. Die Zusammensetzung nach Anspruch 1, wobei das Umami-Mittel ein Extrakt, ein Püree, oder ein aus einer Hefe, einem Gemüse, einem Getreide, einem Fleisch, einem Fisch, einem Milchprodukt oder einem Eidotter hergestelltes Püree ist.

8. Die Zusammensetzung nach Anspruch 7, wobei das Umami-Mittel ausgewählt ist aus autolysiertem Hefeprotein, hydrolysiertem Hefeprotein, hydrolysiertem Pflanzenprotein und Kombinationen davon.

9. Die Zusammensetzung nach Anspruch 7, wobei das Umami-Mittel fermentiert ist.

10. Die Zusammensetzung nach Anspruch 1, wobei der pH-Wert der schmackhaften Zusammensetzung von pH 2,5 bis pH 7 beträgt.

11. Ein Produkt, das die Zusammensetzung nach Anspruch 1 umfasst.

12. Das Produkt nach Anspruch 11, wobei die schmackhafte Zusammensetzung ein Lebensmittelprodukt ist.

13. Das Produkt nach Anspruch 12, wobei das Lebensmittelprodukt ein Würzmittel, ein Getreideerzeugnis, ein Reiserzeugnis, eine Teigware, ein Tapioka-Erzeugnis, ein Sago-Erzeugnis, eine Backware, ein Biskuiterzeugnis, eine Konditoreiware, ein Broterzeugnis, ein Hefeprodukt, ein Senfprodukt, ein Essigerzeugnis, ein industriell verarbeitetes Lebensmittelprodukt, ein gekochtes pflanzliches Erzeugnis, ein Fleisch, ein Fleischerzeugnis, ein Fleischersatzprodukt, ein Eiprodukt, ein Milchprodukt, ein Käseprodukt, ein Milchersatzprodukt, ein Sojaprodukt, ein Speiseöl oder ein Fetterzeugnis ist.

14. Ein Verfahren zur Verbesserung des Mundgefühls, wobei das Verfahren umfasst:
Hinzugeben einer Zusammensetzung nach Anspruch 1 zu einem Lebensmittelprodukt;
wobei das Mundgefühl verstärkt wird, verglichen mit einem Ausgangsprodukt;
wobei das Ausgangsprodukt im Wesentlichen aus Komponenten besteht, die identisch mit denen des Produkts sind, ohne die Geschmacksmodulator-Komponente; und wobei das Mundgefühl unter Verwendung einer sensorischen Studie im Panel ermittelt wird.

15. Das Verfahren nach Anspruch 14, wobei das Lebensmittelprodukt ein Würzmittel, ein Getreideerzeugnis, ein Reiserzeugnis, eine Teigware, ein Tapioka-Erzeugnis, ein Sago-Erzeugnis, eine Backware, ein Biskuiterzeugnis, eine Konditoreiware, ein Broterzeugnis, ein Hefeprodukt, ein Senfprodukt, ein Essigerzeugnis, ein industriell verarbeitetes Lebensmittelprodukt, ein gekochtes pflanzliches Erzeugnis, ein Fleisch, ein Fleischerzeugnis, ein Fleischersatzprodukt, ein Eiprodukt, ein Milchprodukt, ein Käseprodukt, ein Milchersatzprodukt, ein Sojaprodukt, ein Speiseöl oder ein Fetterzeugnis, ein Snackprodukt wie z.B. Kartoffelchips, Chips, Nüsse, Tortilla-Tostada, Bretzeln, Käsesnacks, Maissnacks, Kartoffelsnacks, Fertigpopcorn, Mikrowellenpopcorn, Schweineschwarten, Nüsse, Cracker, Cracker-Snacks; ein Aspikprodukt; ein geräuchertes/gepökeltes Fleischerzeugnis wie z.B. ein Schinken oder Speck; ein Imbiss- oder Frühstücksfleischerzeugnis wie z.B. Hotdogs, Wurstwaren und Würste; ein Tomatenprodukt; ein Margarineprodukt; ein Erdnussbutterprodukt; ein Suppenprodukt wie z.B. klare Suppen, Dosensuppen, Cremesuppen, Fertigsuppen und Gemüse- oder Fleischbouillonprodukte; ein Dosengemüseprodukt; oder ein Nudelsaucenprodukt ist.

## Revendications

1. Composition comprenant :
un agent umami ; et
une composition de modulateurs de goût essentiellement constituée par
un premier composant modulateur de goût essentiellement constitué par un premier sel ayant un premier cation Mg²⁺ et un premier anion ;
un deuxième composant modulateur de goût essentiellement constitué par un deuxième sel ayant un deuxième cation Ca²⁺ et un deuxième anion ; et éventuellement
un troisième composant modulateur de goût essentiellement constitué par un troisième sel ayant un troisième cation choisi parmi K⁺ et Na⁺ et un troisième anion ;
dans laquelle le premier composant modulateur de goût est à une concentration de 0,1 mM à 10 mM ;
dans laquelle le deuxième composant modulateur de goût est à une concentration de 0,1 mM à 10 mM ;
dans laquelle le troisième composant modulateur de goût, lorsqu'il est présent, est à une concentration de 0,1 mM à 25 mM ;
dans laquelle l'agent umami est présent dans une quantité d'environ 0,01 % en poids à environ 5 % en poids ;
dans laquelle le premier anion est choisi parmi le citrate, le chlorure, le phosphate, le carbonate, le sulfate, et des combinaisons de ceux-ci ; et
dans laquelle le deuxième anion est choisi parmi le citrate, le chlorure, le phosphate, le carbonate, le sulfate, et des combinaisons de ceux-ci.

2. Composition selon la revendication 1, dans laquelle le premier composant modulateur de goût est à une concentration de 1 mM à 5 mM ; ou
dans laquelle le deuxième composant modulateur de goût est à une concentration de 1 mM à 5 mM ; ou
dans laquelle le troisième composant modulateur de goût est à une concentration de 1 mM à 15 mM.

3. Composition selon la revendication 1, dans laquelle le premier anion est choisi parmi le citrate, le sulfate, le chlorure, et des combinaisons de ceux-ci, ou
dans laquelle le deuxième anion est choisi parmi le citrate, le sulfate, le chlorure, et des combinaisons de ceux-ci, ou
dans laquelle le troisième anion est choisi parmi le citrate, le chlorure, le phosphate, le carbonate, le sulfate, et des combinaisons de ceux-ci.

4. Composition selon la revendication 1, dans laquelle la concentration du premier composant modulateur de goût est de 0,1 mM à 5 mM ; dans laquelle la concentration du deuxième composant modulateur de goût est de 0,1 mM à 5 mM ; et dans laquelle la concentration du troisième composant modulateur de goût est de 0,1 mM à 25 mM.

5. Composition selon la revendication 1, dans laquelle l'agent umami comprend du L-glutamate, de l'acide L-glutamique, un sel d'acide L-glutamique, de la L-glutamine, un sel de L-glutamine, de l'acide L-aspartique, un sel d'acide L-aspartique, un 5'-ribonucléotide, un sel de 5'-ribonucléotide, une protéine autolysée, une protéine hydrolysée, ou des combinaisons de ceux-ci

6. Composition selon la revendication 5, dans laquelle l'agent umami est choisi parmi le 5'-monophosphate de guanosine, le 5'-monophosphate d'inosine, le guanylate disodique, l'inosinate disodique, l'adénylate disodique ; le guanylate dipotassique, l'inosinate dipotassique, l'adénylate dipotassique, le guanylate de calcium, l'inosinate de calcium, l'adénylate de calcium, et des combinaisons de ceux-ci.

7. Composition selon la revendication 1, dans laquelle l'agent umami est un extrait, une purée, ou une purée préparée à partir d'une levure, d'un végétal, d'une céréale, d'une viande, d'un poisson, d'un produit laitier, ou d'un jaune d'oeuf.

8. Composition selon la revendication 7, dans laquelle l'agent umami est choisi parmi des protéines de levure autolysées, des protéines de levure hydrolysées, des protéines végétales hydrolysées, et des combinaisons de celles-ci.

9. Composition selon la revendication 7, dans laquelle l'agent umami est fermenté.

10. Composition selon la revendication 1, dans laquelle la composition savoureuse est de pH 2,5 à pH 7.

11. Produit comprenant la composition de la revendication 1.

12. Produit selon la revendication 11, dans lequel la composition savoureuse est un produit alimentaire.

13. Produit selon la revendication 12, dans lequel le produit alimentaire est un condiment, un produit de céréale, un produit de riz, un produit de pâtes, un produit de tapioca, un produit de sagou, un produit de boulangerie, un produit de biscuiterie, un produit de pâtisserie, un produit de pain, un produit de levure, un produit de moutarde, un produit de vinaigre, un produit alimentaire transformé, un produit végétal cuit, une viande, un produit de viande, un produit de substitution de viande, un produit d'oeuf, un produit laitier, un produit de fromage, un produit de substitution laitier, un produit de soja, une huile comestible, ou un produit de matière grasse.

14. Procédé d'amélioration de sensation en bouche, le procédé comprenant :
l'ajout d'une composition de la revendication 1 à un produit alimentaire ;
dans lequel la sensation en bouche est améliorée par rapport à un produit de référence ;
dans lequel le produit de référence est essentiellement constitué par des composants identiques au produit sans le composant modulateur de goût ; et dans lequel la sensation en bouche est déterminée à l'aide d'une étude par panel sensoriel.

15. Procédé selon la revendication 14, dans lequel le produit alimentaire est un condiment, un produit de céréale, un produit de riz, un produit de pâtes, un produit de tapioca, un produit de sagou, un produit de boulangerie, un produit de biscuiterie, un produit de pâtisserie, un produit de pain, un produit de levure, un produit de moutarde, un produit de vinaigre, un produit alimentaire transformé, un produit végétal cuit, une viande, un produit de viande, un produit de substitution de viande, un produit d'oeuf, un produit laitier, un produit de fromage, un produit de substitution laitier, un produit de soja, une huile comestible, ou un produit de matière grasse, un produit d'en-cas tel que des frites, des chips, des noix, des tortilla-tostada, des bretzels, des en-cas au fromage, des en-cas au maïs, des en-cas de pomme de terre, du pop-corn prêt à consommer, du pop-corn micro-ondable, de la couenne de porc, des noix, des craquelins, des en-cas aux craquelins ; un produit d'aspic ; un produit de viande séchée tel qu'un jambon ou un bacon ; un produit carné de déjeuner ou de petit-déjeuner, tel que des hot-dogs, de la charcuterie froide, et des saucisses ; un produit de tomate ; un produit de margarine ; un produit de beurre de cacahuète ; un produit de soupe tel que des soupes claires, des soupes en conserve, des soupes à la crème, des soupes instantanées, et des produits de bouillon de légumes ou de viande ; un produit de légumes en conserve ; ou un produit de sauce pour les pâtes.
